# EUROPEAN PATENT APPLICATION

(11) **EP 4 637 179 A2**
(43) Date of publication of application: **22.10.2025**
(21) Application number: 25200588.9
(22) Date of filing: 29.09.2020
(51) Int. Cl.: H04Q 11/00

(54) **OPTICAL COMMUNICATION APPARATUS, OPTICAL COMMUNICATION SYSTEM AND OPTICAL COMMUNICATION METHOD**

(30) Priority: 26.12.2019 WO PCT/JP2019/051305; 14.02.2020 WO PCT/JP2020/005782; 07.09.2020 WO PCT/JP2020/033760
(62) Divisional of application: 20906403.9
(71) Applicant: NTT, Inc., Tokyo 100-8116 (JP)
(72) Inventor: KANAI, Takuya, Musashino-shi, Tokyo, 180-8585 (JP); SUZUKI, Hiroo, Musashino-shi, Tokyo, 180-8585 (JP); KANI, Junichi, Musashino-shi, Tokyo, 180-8585 (JP); KANEKO, Shin, Musashino-shi, Tokyo, 80-8585 (JP); HONDA, Kazuaki, Musashino-shi, Tokyo, 180-8585 (JP); YOSHINO, Manabu, Musashino-shi, Tokyo, 180-8585 (JP); YOSHIDA, Tomoaki, Musashino-shi, Tokyo, 180-8585 (JP)
(74) Representative: Brevalex

(57) **Abstract**

An optical communication apparatus includes an optical switch, a wavelength management control unit, and an optical switch control unit. The optical switch is connected to a plurality of transmission lines and outputs an optical signal input from one of the transmission lines to another of the transmission lines. The wavelength management control unit assigns a wavelength to a subscriber terminal according to a communication destination. The optical switch control unit controls the optical switch such that it outputs an optical signal transmitted from the subscriber terminal, to which a wavelength has been assigned, to a transmission line corresponding to its forwarding destination on a path to the communication destination.

## Description

### Technical Field

The present invention relates to an optical communication apparatus, an optical communication system, and an optical communication method.
The present application claims priority to PCT/JP2019/051305 filed on December 26, 2019, PCT/JP2020/005782 filed on February 14, 2020, and PCT/JP2020/033760 filed on September 7, 2020, the contents of which are incorporated herein by reference.

### Background Art

The number of users who use high-speed Internet via fiber-to-the-home (FTTH) and mobile services has been increasing. High-speed Internet has become an indispensable part of people's lives. On the other hand, in a backbone network that provides FTTH and mobile services, networks are separately constructed for services. This is inefficient in terms of operation. Thus, an access network that accommodates a plurality of services with one device has been proposed (see, for example, NPL 1). Further, to realize an access network capable of accommodating multiple services, a passive optical network (PON) such as a wavelength division multiplexing PON (WDM-PON) that uses a plurality of wavelengths or a time division multiplexing PON (TDM-PON) have been standardized by the International Telecommunication Union Telecommunication Standardization Sector (ITU-T) (see, for example, NPL 2).

On the other hand, in existing optical access systems, communications between terminal devices on the subscriber side and devices on the stations are connected to an upper level core network. The terminal devices on the subscriber side are, for example, optical network units (ONUs). Connections to the core network are made via a terminal device in an apparatus on the station side. The terminal device is, for example, an optical line terminal (OLT). In optical access to connect to the core network by packet switching, a process of adding or deleting user information or destination information, a routing process, and the like are performed on signals, and when user information or destination information is added or deleted, an optical signal may be temporarily converted into an electrical signal. This causes some delay in communication. Also, when the amount of data increases, signals may be stored in buffers and priority control or the like may be performed. This further increases the delay. As the delay increases, the quality of optical service drops significantly. Thus, it is important to reduce delay as much as possible.

To improve the quality of optical services and provide various services via optical access networks, it is necessary to reduce the delay that occurs. The delay can be greatly reduced by using an optical switch or the like that can perform processing such as routing without converting an optical signal into an electrical signal.

### Citation List

### Non Patent Literature

NPL 1: Shunji Kimura, "Elastic Lambda Aggregation Network (EλAN) -Proposal for Future Optical Access Network-," 2013 18th OptoElectronics and Communications Conference held jointly with 2013 International Conference on Photonics in Switching (OECC/PS), WP4-4, 2013
NPL 2: "ITU-T G.989.1," International Telecommunication Union, 2013

### Summary of the Invention

### Technical Problem

However, in routing using an optical switch, it is necessary to set a path of an optical signal according to the destination of a subscriber terminal and further make a setting (of a wavelength or the like) on the transceiver of the subscriber terminal.

In view of the above circumstances, it is an object of the present invention to provide an optical communication apparatus, an optical communication system, and an optical communication method, whereby a setting that allows the use of a path corresponding to a destination can be made on a subscriber terminal and an optical signal transmitted from the subscriber terminal can be relayed according to the destination.

### Means for Solving the Problem

An aspect of the present invention is an optical communication apparatus including an optical switch that is connected to a plurality of transmission lines and that outputs an optical signal input from one of the plurality of transmission lines to another of the plurality of transmission lines, a wavelength management control unit that assigns a wavelength to a subscriber terminal according to a communication destination, and an optical switch control unit that controls the optical switch such that the optical switch outputs an optical signal transmitted from the subscriber terminal to which a wavelength is assigned to a transmission line according to a forwarding destination on a path to the communication destination.

An aspect of the present invention is an optical communication apparatus including an optical switch that is connected to a plurality of transmission lines and that outputs an optical signal input from one of the plurality of transmission lines to another of the plurality of transmission lines, a wavelength management control unit that dynamically assigns a wavelength to a subscriber terminal according to a communication destination, and an optical switch control unit configured to control the optical switch such that the optical switch outputs an optical signal input from a transmission line of the plurality of transmission lines to a transmission line of the plurality of transmission lines according to a communication destination identified by a combination of the subscriber terminal that transmits the optical signal input and a wavelength of the optical signal input.

An aspect of the present invention is an optical communication system including a plurality of subscriber terminals and the optical communication apparatus described above, in which one of the plurality of subscriber terminals includes one or both of an optical transmission unit that transmits an optical signal of a wavelength assigned by the optical communication apparatus and an optical reception unit that receives an optical signal of a wavelength assigned by the optical communication apparatus.

An aspect of the present invention is an optical communication method including outputting, by an optical switch connected to a plurality of transmission lines, an optical signal input from one of the plurality of transmission lines to another of the plurality of transmission lines, assigning, by a wavelength management control unit, a wavelength to a subscriber terminal according to a communication destination, and controlling, by an optical switch control unit, the optical switch such that the optical switch outputs an optical signal transmitted from the subscriber terminal to which a wavelength is assigned to a transmission line according to a forwarding destination on a path to the communication destination.

An aspect of the present invention is an optical communication method including outputting, by an optical switch connected to a plurality of transmission lines, an optical signal input from one of the plurality of transmission lines to another of the plurality of transmission lines, dynamically assigning, by a wavelength management control unit, a wavelength to a subscriber terminal according to a communication destination, and controlling, by an optical switch control unit, the optical switch such that the optical switch outputs an optical signal input from a transmission line of the plurality of transmission lines in the outputting to a transmission line of the plurality of transmission lines according to a communication destination identified by a combination of the subscriber terminal that transmits the optical signal input and a wavelength of the optical signal input.

### Effects of the Invention

According to the present invention, a setting that allows the use of a path corresponding to a destination can be made on a subscriber terminal and an optical signal transmitted from the subscriber terminal can be relayed according to the destination.

### Brief Description of Drawings

Fig. 1 is a diagram illustrating an exemplary configuration of an optical communication system according to an embodiment of the present invention.
Fig. 2 is a diagram illustrating an example of an optical switch according to the embodiment.
Fig. 3 is a diagram illustrating an example of an optical switch according to the embodiment.
Fig. 4 is a diagram illustrating an example of an optical switch according to the embodiment.
Fig. 5 is a diagram illustrating an example of an optical switch according to the embodiment.
Fig. 6 is a diagram illustrating an example of an optical switch according to the embodiment.
Fig. 7 is a diagram illustrating an example of routing before wavelength change in the optical switch according to the embodiment.
Fig. 8 is a diagram illustrating an example of routing after wavelength change in the optical switch according to the embodiment.
Fig. 9 is a diagram illustrating an example of an optical switch according to the embodiment.
Fig. 10 is a diagram illustrating an example of an optical switch according to the embodiment.
Fig. 11 is a diagram illustrating an example of an optical switch according to the embodiment.
Fig. 12 is a diagram illustrating an example of an optical switch according to the embodiment.
Fig. 13 is a diagram illustrating an example of an optical switch according to the embodiment.
Fig. 14 is a diagram illustrating an example of an optical switch according to the embodiment.
Fig. 15 is a diagram illustrating an example of an access topology according to the embodiment.
Fig. 16 is a diagram illustrating an example of an access topology according to the embodiment.
Fig. 17 is a diagram illustrating an example of an access topology according to the embodiment.
Fig. 18 is a diagram illustrating an example of an access topology according to the embodiment.
Fig. 19 is a diagram illustrating an example of an access topology according to the embodiment.
Fig. 20 is a diagram illustrating an example of an access topology according to the embodiment.
Fig. 21 is a diagram illustrating an example of an access topology according to the embodiment.
Fig. 22 is a diagram illustrating an example of an access topology according to the embodiment.
Fig. 23 is a diagram illustrating an example of an access topology according to the embodiment.
Fig. 24 is a diagram illustrating an example in which optical switch scalability is required according to the embodiment.
Fig. 25 is a diagram illustrating an example of optical switch scalability according to the embodiment.
Fig. 26 is a diagram illustrating an example of optical switch scalability according to the embodiment.
Fig. 27 is a diagram illustrating an exemplary configuration of an optical access system according to a first embodiment.
Fig. 28 is a diagram showing an example of a switch connection table according to the first embodiment.
Fig. 29 is a diagram showing an example of a user wavelength table according to the first embodiment.
Fig. 30 is a diagram showing an example of an inter-station wavelength table according to the first embodiment.
Fig. 31 is a diagram illustrating an exemplary configuration of a subscriber terminal according to the first embodiment.
Fig. 32 is a diagram illustrating an exemplary configuration of a subscriber terminal according to the first embodiment.
Fig. 33 is a flowchart showing an initial setting process of an optical access system according to the first embodiment.
Fig. 34 is a diagram illustrating an exemplary configuration of an optical access system according to the first embodiment.
Fig. 35 is a diagram illustrating an exemplary configuration of an optical access system according to the first embodiment.
Fig. 36 is a diagram illustrating an exemplary configuration of an optical access system according to the first embodiment.
Fig. 37 is a diagram illustrating an exemplary configuration of an optical access system according to the first embodiment.
Fig. 38 is a diagram illustrating an exemplary configuration of an optical access system according to a second embodiment.
Fig. 39 is a diagram illustrating an exemplary configuration of an optical access system according to the second embodiment.
Fig. 40 is a diagram illustrating an exemplary configuration of an optical access system according to the second embodiment.
Fig. 41 is a diagram illustrating an exemplary configuration of an optical access system according to a third embodiment.
Fig. 42 is a diagram illustrating an exemplary configuration of an optical access system according to the third embodiment.
Fig. 43 is a diagram illustrating an exemplary configuration of an optical access system according to the third embodiment.
Fig. 44 is a diagram illustrating an exemplary configuration of an optical access system according to a fourth embodiment.
Fig. 45 is a diagram illustrating an exemplary configuration of an optical access system according to the fourth embodiment.
Fig. 46 is a diagram illustrating an exemplary configuration of an optical access system according to the fourth embodiment.
Fig. 47 is a diagram illustrating an exemplary configuration of an optical access system according to the fourth embodiment.
Fig. 48 is a diagram illustrating an exemplary configuration of an optical access system according to a fifth embodiment.
Fig. 49 is a diagram illustrating an exemplary configuration of an optical access system according to a sixth embodiment.
Fig. 50 is a diagram illustrating an exemplary configuration of an optical access system according to the sixth embodiment.
Fig. 51 is a diagram illustrating an exemplary configuration of an optical access system according to a seventh embodiment.
Fig. 52 is a diagram illustrating an exemplary configuration of an optical access system according to an eighth embodiment.
Fig. 53 is a diagram illustrating an exemplary configuration of an optical access system according to the eighth embodiment.
Fig. 54 is a diagram illustrating an exemplary configuration of a shutter device according to the eighth embodiment.
Fig. 55 is a diagram illustrating an exemplary configuration of a shutter device according to the eighth embodiment.
Fig. 56 is a diagram for explaining the operation of an optical access system according to the eighth embodiment.
Fig. 57 is a diagram illustrating an exemplary configuration of an optical access system according to the eighth embodiment.

### Description of Embodiments

Hereinafter, embodiments of the present invention will be described in detail with reference to the drawings. In the drawings, the same parts are denoted by the same reference signs and description thereof is omitted. In the present embodiment, in response to a connection request from each subscriber terminal, a wavelength to be used by the subscriber terminal is assigned in cooperation with a wavelength controller, an optical switch controller, and a management database that manages connection information of all subscribers. Here, a device for controlling subscriber terminals is used to transmit setting information such as the wavelength to be used to each subscriber terminal. The control device and subscriber terminals communicate, for example, using control signals that are slower than main signals, which are optical signals between subscriber terminals, and that can be superimposed on main signals. This makes it possible to perform setting change or monitoring without affecting main signals. Further, in the present embodiment, an optical switch is controlled such that an optical signal transmitted from a subscriber terminal to which a wavelength has been assigned is output to a transmission line corresponding to a forwarding destination on a path to a communication destination. In the present embodiment, for example, in the case where a wavelength is used as destination information, the optical switch is controlled to perform routing using a wavelength as destination information. Thereby, in the present embodiment, a setting that allows the use of a path corresponding to a destination is made on a subscriber terminal and an optical signal transmitted from the subscriber terminal is relayed according to the destination using the path. Delays caused by a process of adding or deleting user information or destination information and a routing process when packets are transferred can also be reduced.

A subscriber terminal, an input port, a combination of a subscriber terminal and a wavelength, a combination of an input port and a wavelength, and a combination of an input port, a subscriber terminal, and a wavelength may also be used as destination information. The following embodiments will be described mainly with reference to the case where a combination of a subscriber terminal and a wavelength is used as destination information.

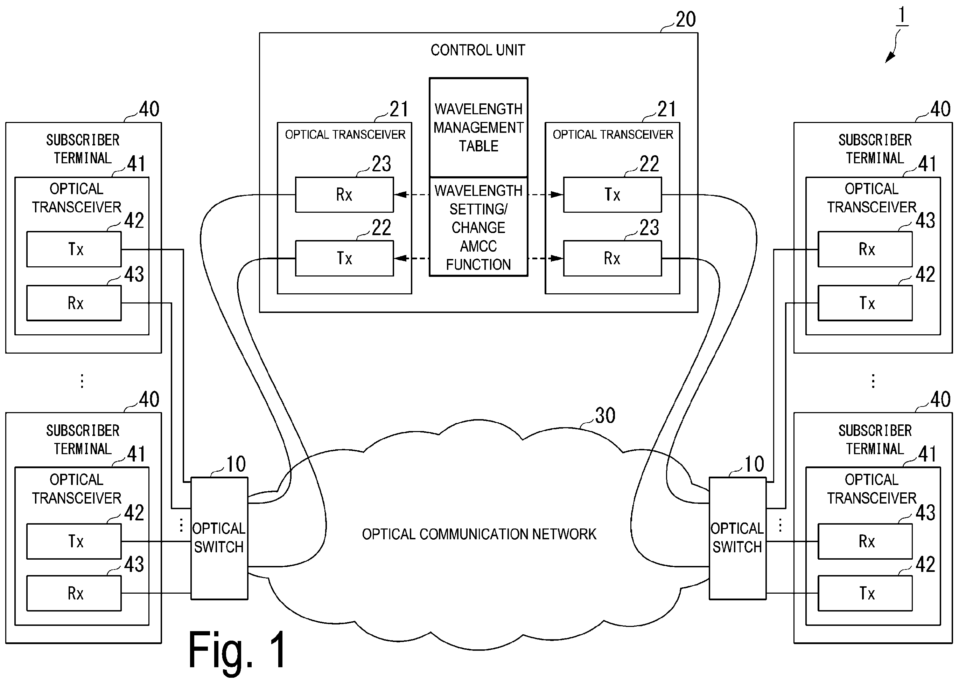

Fig. 1 is a diagram illustrating an exemplary configuration of an optical communication system 1 of the present embodiment. The optical communication system 1 includes a plurality of optical switches (SWs) 10. Although only two optical switches 10 are illustrated in Fig. 1, the number of optical switches 10 is arbitrary. The optical switches 10 are connected to a control unit 20. Each optical switch 10 communicates with another optical switch 10 via an optical communication network 30. For example, a wavelength division multiplexing (WDM) network including various topologies can be used as the optical communication network 30. One or more subscriber terminals 40 are connected to an optical switch 10. Subscriber terminals 40 are connected to an optical switch 10, for example, by an optical access network such as a passive optical network (PON). Each subscriber terminal 40 includes an optical transceiver 41. The optical transceiver 41 is an example of a configuration of an optical transmission unit and an optical reception unit in the subscriber terminal. The optical transceiver 41 includes an optical transmitter (Tx) 42 and an optical receiver (Rx) 43. The optical transceiver 41 is a wavelength-variable optical transceiver. For example, a conventional optical transceiver with an Auxiliary Management and Control Channel (AMCC) function can be used as the optical transceiver 41.

The control unit 20 includes an optical transceiver 21. The optical transceiver 21 is an example of a configuration of an optical transmission unit and an optical reception unit in the control unit 20. The optical transceiver 21 includes an optical transmitter (Tx) 22 and an optical receiver (Rx) 23. The optical transceiver 21 is a wavelength-variable optical transceiver. The control unit 20 stores a wavelength management table. The wavelength management table is data indicating wavelengths assigned to each of subscriber terminals 40. The control unit 20 uses the AMCC function to assign each subscriber terminal 40 a wavelength to be used by the subscriber terminal 40 for communication. In the following, communications between each subscriber terminal 40 and the control unit 20 will be exemplified, but not limited, by the AMCC function.

To assign a wavelength corresponding to the destination to the subscriber terminal 40, first, the optical transceiver 41 of the subscriber terminal 40 and the optical transceiver 21 of the control unit 20 communicate with each other using AMCC. The control unit 20 refers to the wavelength table and selects a wavelength to be assigned to the subscriber terminal 40 according to the destination. In an example, the control unit 20 selects a wavelength from available wavelengths that are not used for other paths in links that multiplex wavelengths on the paths. The control unit 20 may also assign an individual wavelength to each subscriber terminal 40. The control unit 20 sets the selected wavelength in the subscriber terminal 40 by a control signal using AMCC. After that, the control unit 20 switches the optical switch 10 such that it performs routing according to the destination of an optical signal transmitted from the subscriber terminal 40. For example, when a wavelength is used as destination information, the control unit 20 switches the optical switch such that it performs routing to a destination indicated by the wavelength. In this way, the control unit 20 connects opposing subscriber terminals 40.

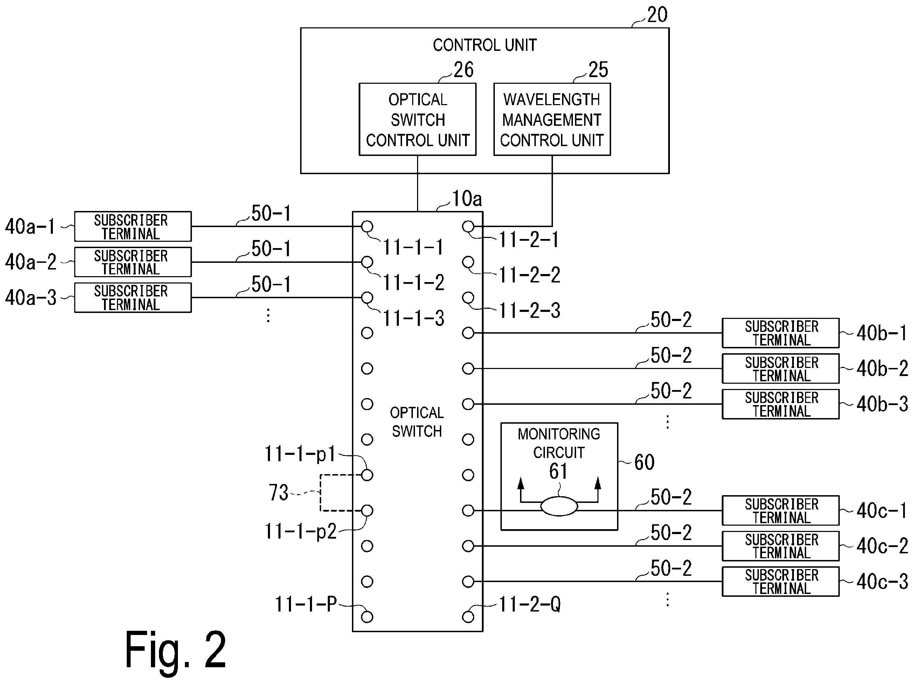

An optical switch 10 is provided, for example, in an optical gateway (GW). Examples of an optical switch 10 provided in an optical gateway will be described with reference to Figs. 2 to 14.

Fig. 2 is a diagram illustrating an exemplary configuration of an optical switch 10a. The optical switch 10a is connected to a plurality of transmission lines 50 and outputs an optical signal input from one of the transmission lines 50 to another transmission line 50. Each transmission line 50 is, for example, an optical fiber. The optical switch 10a has ports 11-1-1 to 11-1-P (where P is an integer of 2 or more) and ports 11-2-1 to 11-2-Q (where Q is an integer of 2 or more). When any one of the ports 11-1-1 to 11-1-P is not specified, or collectively, it is referred to as a port 11-1 and when any one of the ports 11-2-1 to 11-2-Q is not specified, or collectively, it is referred to as a port 11-2. A transmission line 50 connected to a port 11-1 will be referred to as a transmission line 50-1 and a transmission line 50 connected to a port 11-2 will be referred to as a transmission line 50-2.

Each port 11-1 is connected to a subscriber terminal 40 via a transmission line 50-1. Each port 11-2 is connected to a subscriber terminal 40 via a transmission line 50-2. Each subscriber terminal 40 is, for example, an ONU. Each transmission line 50-2 may be connected to an optical communication network 30 which is an upper level network. In this case, the direction toward the subscriber terminal 40 connected via a transmission line 50-1 is downstream and the direction toward the upper level network connected via a transmission line 50-2 is upstream. Each transmission line 50-2 may be provided with another optical communication apparatus such as another optical switch 10.

The ports 11-1-1, 11-1-2, 11-1-3, ... are connected to subscriber terminals 40a-1, 40a-2, 40a-3, ..., which are subscriber terminals 40 of a link end A, via transmission lines 50-1. The subscriber terminals 40a-1, 40a-2, 40a-3, ... will be collectively, or when any of them is not specified, referred to as subscriber terminals 40a. One of the ports 11-2 (the port 11-2-1 in Fig. 2) is connected to a wavelength management control unit 25 which will be described below. Some ports 11-2-i, 11-2-(i + 1), 11-2-(i + 2), ... are connected to subscriber terminals 40b-1, 40b-2, 40b-3, ..., which are subscriber terminals 40 of a link end B, via transmission lines 50-2 (where i is an integer of 2 or more). The subscriber terminals 40b-1, 40b-2, 40b-3, ... will be collectively, or when any of them is not specified, referred to as subscriber terminal 40b. Some ports 11-2-j, 11-2-(j + 1), 11-2-(j + 2), ... other than the ports 11-2 connected to the subscriber terminals 40 of the link end B are connected to subscriber terminals 40c-1, 40c-2, 40c-3, ..., which are subscriber terminals 40 of a link end C, via transmission lines 50-2 (where j is an integer of 2 or more). The subscriber terminals 40c-1, 40c-2, 40c-3, ... will be collectively, or when any of them is not specified, referred to as subscriber terminal 40c. The optical switch 10a outputs an optical signal input from a port 11-1 to a port 11-2 and outputs an optical signal input from a port 11-2 to a port 11-1. Here, it is possible to employ a configuration with another optical communication apparatus such as another optical switch or an optical communication network 30 interposed between the subscriber terminals 40 of the link end A and the subscriber terminals 40 of the link ends B and C.

The optical switch 10a is connected to the control unit 20. The control unit 20 includes the wavelength management control unit 25 and an optical switch control unit 26. The wavelength management control unit 25 performs a wavelength assignment process of receiving a request for wavelength assignment from a subscriber terminal 40 by an optical signal, assigning a wavelength corresponding to a communication destination to the subscriber terminal 40 that has transmitted the request, and notifying the subscriber terminal 40 of the assigned wavelength by an optical signal. For example, the wavelength management control unit 25 may dynamically assign a wavelength corresponding to the communication destination to the subscriber terminal 40 that has transmitted the request. It is preferable that a management control signal superimposition method that does not rely on the communication protocol of optical signals (main signals) between subscriber terminals 40 be used for optical signals transmitted and received between the wavelength management control unit 25 and subscriber terminals 40. For example, protocol-free AMCC is used for optical signals transmitted and received between the wavelength management control unit 25 and subscriber terminals 40.

The optical switch control unit 26 controls the optical switch 10a such that an optical signal is transmitted and received between the subscriber terminal 40 and the wavelength management control unit 25 while the wavelength assignment process is being performed. After the wavelength assignment process, the optical switch control unit 26 controls the optical switch 10a such that it outputs an optical signal input from a transmission line 50 to a transmission line 50-2 corresponding to a communication destination identified by a combination of the subscriber terminal 40 that has transmitted the input optical signal and the wavelength of the input optical signal.

Each transmission line 50-2 is provided with a monitoring circuit 60. Only one monitoring circuit 60 is illustrated in Fig. 2. The monitoring circuit 60 is an example of a monitoring unit. The monitoring circuit 60 includes a power splitter 61. The power splitter 61 splits off an optical signal transmitted through the transmission line 50-2. The monitoring circuit 60 monitors the optical signal split off by the power splitter 61. The monitoring circuit 60 generates monitoring information based on the monitoring result and outputs generated monitoring information. The monitoring information is information indicating the monitoring result or information obtained from the monitoring result. The output destination of the monitoring information is, for example, the control unit 20. While the subscriber terminal 40 is communicating with another subscriber terminal 40, the monitoring circuit 60 may use the power splitter 61 to split off a control signal transmitted by the subscriber terminal 40, or to superimpose and transmit a control signal on a signal between the subscriber terminals 40.

When a subscriber terminal 40 is connected to a transmission line 50-2, the control unit 20 may be connected to a port 11-1. Alternatively, when a subscriber terminal 40 is connected to a transmission line 50-2, the subscriber terminal 40 connected to the transmission line 50-2 may be connected to the control unit 20 via a return transmission line 73. The return transmission line 73 is an optical fiber through which an optical signal output from a port 11-1-p1 is input to another port 11-1-p2 (where p1 and p2 are integers of 1 or more and P or less). In this case, an optical signal transmitted from a subscriber terminal 40b or 40c is input to the optical switch 10a via a transmission line 50-2. The optical switch 10a outputs the optical signal input from the transmission line 50-2 to the port 11-1-p1 and receives the optical signal transmitted through the return transmission line 73 from the port 11-1-p2. The optical switch 10a outputs the optical signal input from the port 11-1-p2 to the control unit 20 from the port 11-2-1. In this way, the subscriber terminal 40b or 40c is connected to the control unit 20.

The wavelength management control unit 25 may perform a wavelength change process of instructing a subscriber terminal 40, on which a wavelength assignment process has been performed, to change the wavelength. For example, the wavelength management control unit 25 identifies a subscriber terminal 40 whose wavelength is to be changed based on monitoring information output from a monitoring circuit 60 and performs a wavelength change process on the identified subscriber terminal 40. The optical switch control unit 26 controls the optical switch 10a such that an optical signal is transmitted and received between the subscriber terminal 40 and the wavelength management control unit 25 during the wavelength change process. When an optical signal of the changed wavelength has been input from the subscriber terminal 40 after the wavelength change process, the optical switch control unit 26 controls the optical switch 10a such that it outputs the input optical signal to a transmission line 50-2 corresponding to the communication destination. For example, the optical switch control unit 26 controls the optical switch 10a such that it receives an optical signal of the changed wavelength input from the subscriber terminal 40 after the wavelength change process and outputs the input optical signal to a transmission line 50-2 corresponding to the communication destination for which a combination of the transmission source subscriber terminal 40 and the wavelength before the change has been used. Alternatively, the optical switch control unit 26 controls the optical switch 10a such that it outputs the optical signal transmitted from the transmission source subscriber terminal 40 using the changed wavelength to a transmission line 50-2 different from that before wavelength change. In this case, communication destination subscriber terminals 40 before and after the wavelength change process are different. The wavelength management control unit 25 may receive a wavelength change request from a subscriber terminal 40 during or after completion of communication and perform a wavelength change process on the requesting subscriber terminal 40. Through the wavelength change process, both the wavelength used for transmission and the wavelength used for reception by the subscriber terminal 40 may be changed or either of them may be changed.

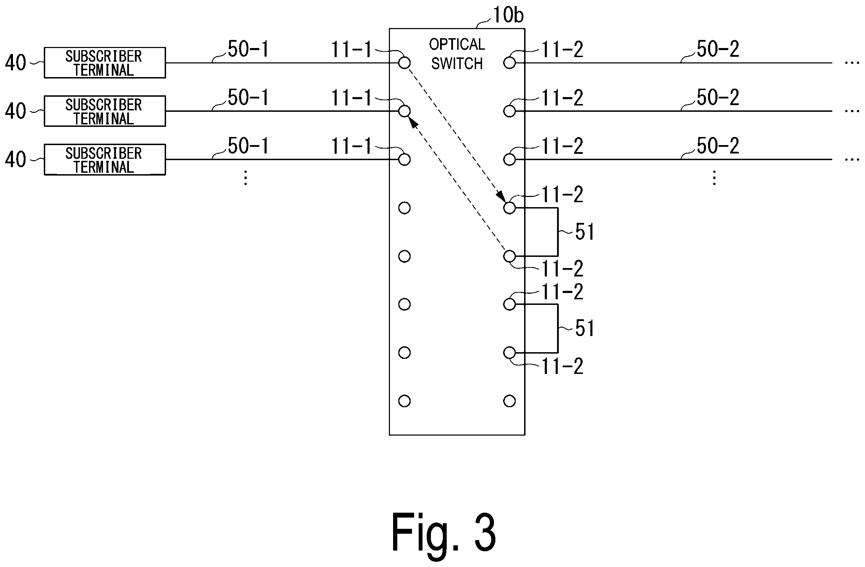

Fig. 3 is a diagram illustrating an exemplary configuration of an optical switch 10b having a return line for return communication. In Fig. 3, the same parts as those of the optical switch 10a illustrated in Fig. 2 are denoted by the same reference signs and description thereof is omitted. In Fig. 3, the illustration of the control unit 20 is also omitted. The optical switch 10b is connected to a return transmission line 51. The return transmission line 51 is an optical fiber through which an optical signal output from a port 11-2 is input to another port 11-2. In this way, the optical switch 10b enables return communication.

When a port which is the output destination of the optical signal is set by a combination of the transmission source subscriber terminal 40 and the wavelength, the destination for the direction from a port 11-1 to a port 11-2 to which the return transmission line 51 is connected and the destination for the direction from a port 11-2 to which the return transmission line 51 is connected to a port 11-1 may differ.

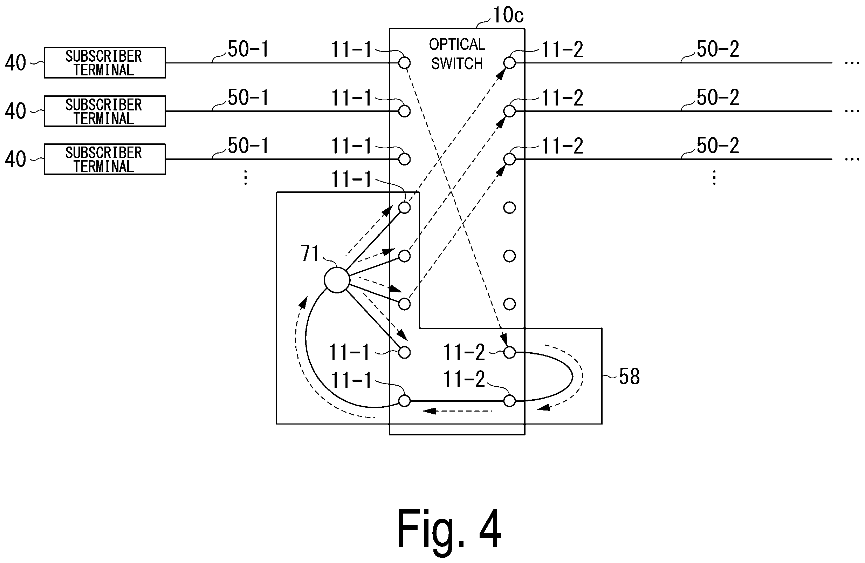

Fig. 4 is a diagram illustrating an exemplary configuration of an optical switch 10c that performs upstream multicast. In Fig. 4, the same parts as those of the optical switch 10a illustrated in Fig. 2 are denoted by the same reference signs and description thereof is omitted. In Fig. 4, the illustration of the control unit 20 is also omitted. The optical switch 10c includes a distribution unit 58 that distributes an optical signal output from a port 11-2 into a plurality of optical signals and inputs the distributed optical signals to different ports 11-1. The distribution unit 58 is an example of a first distribution unit. In Fig. 4, the optical switch 10c receives an optical signal output from a port 11-2 from another port 11-2 via a return transmission line. The optical switch 10c outputs this received optical signal to a port 11-1 to which a 1 × N power splitter 71 is connected. The optical signal output from the port 11-1 is distributed by the power splitter 71 and input to a plurality of other ports 11-1. The optical switch 10c outputs the optical signals received from the plurality of ports 11-1 to different ports 11-2. Two-way communication is also possible. Downstream optical signals are routed in the opposite direction to that of upstream optical signals.

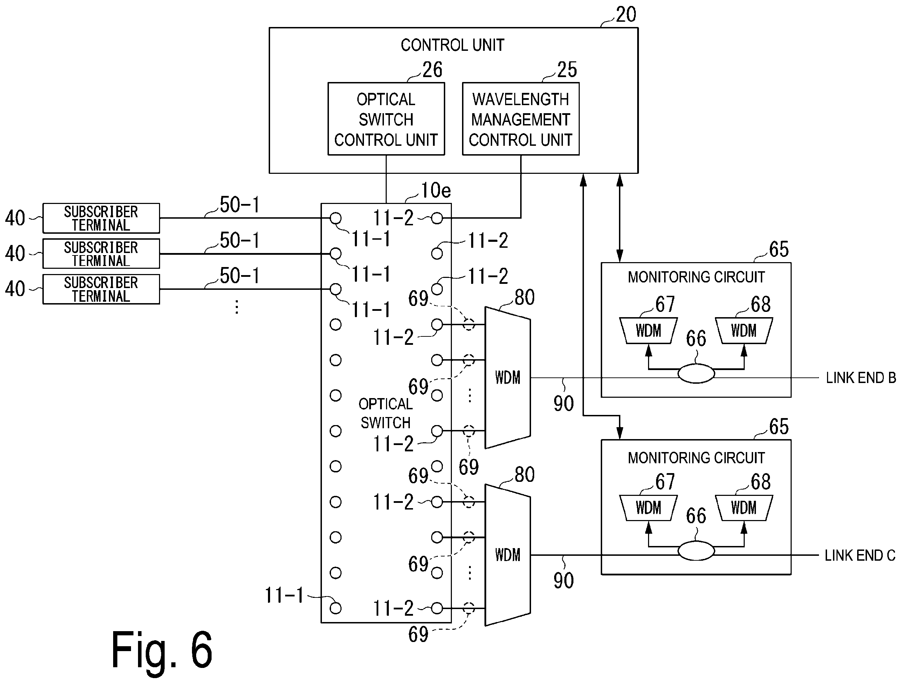

The optical switch 10c may receive optical signals of a plurality of wavelengths from a port 11-1. In this case, the optical switch 10c distributes the optical signals of the plurality of wavelengths received from the port 11-1 through the distribution unit 58 and outputs the distributed optical signals to subscriber terminals 40 connected to ports 11-2 or transmission lines connected to another link end. Each of the subscriber terminals 40 connected to the ports 11-2 selects and receives an optical signal of a predetermined wavelength from the optical signals of the plurality of wavelengths. The transmission lines connected to the other link end may each transmit the same optical signals as those of the plurality of wavelengths or may each transmit an optical signal of a wavelength selected by a WDM device illustrated in Fig. 6 which will be described below.

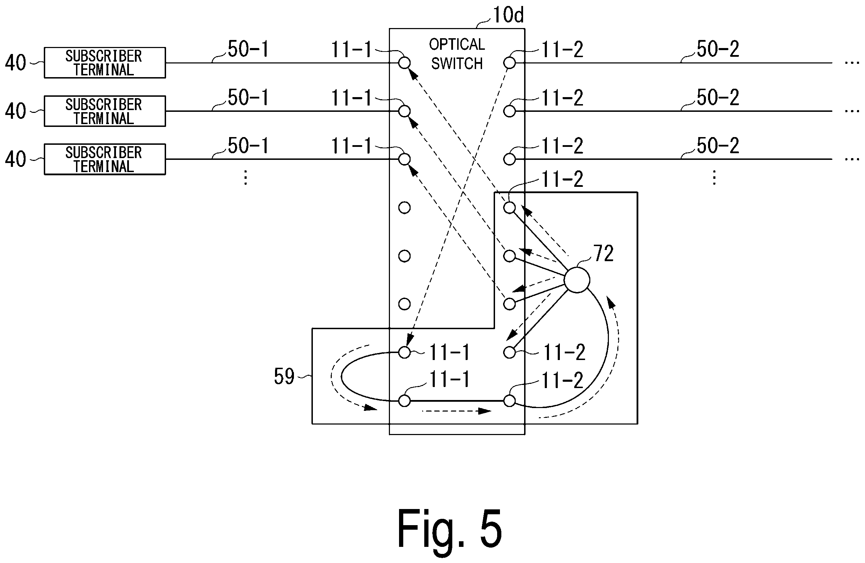

Fig. 5 is a diagram illustrating an exemplary configuration of an optical switch 10d that performs downstream multicast. In Fig. 5, the same parts as those of the optical switch 10a illustrated in Fig. 2 are denoted by the same reference signs and description thereof is omitted. In Fig. 5, the illustration of the control unit 20 is also omitted. The optical switch 10d includes a distribution unit 59 that distributes an optical signal output from a port 11-1 into a plurality of optical signals and inputs the distributed optical signals to different ports 11-2. The distribution unit 59 is an example of a second distribution unit. In Fig. 5, the optical switch 10d receives an optical signal output from a port 11-1 from another port 11-1 via a return transmission line. The optical switch 10d outputs this received optical signal to a port 11-2 to which a 1×N power splitter 72 is connected. The optical signal output from the port 11-2 is distributed by the power splitter 72 and input to a plurality of other ports 11-2. The optical switch 10d outputs the optical signals input from the plurality of ports 11-2 to different ports 11-1.

The optical switch 10d may receive optical signals of a plurality of wavelengths from a port 11-2. In this case, the optical switch 10c distributes the optical signals of the plurality of wavelengths received from the port 11-2 by using the distribution unit 59 and outputs the distributed optical signals to subscriber terminals 40 connected to ports 11-1. Each of the subscriber terminals 40 connected to the ports 11-1 selects and receives an optical signal of a predetermined wavelength from the received optical signals of the plurality of wavelengths.

Fig. 6 is a diagram illustrating an exemplary configuration of an optical switch 10e that performs WDM transmission. In Fig. 6, the same parts as those of the optical switch 10a illustrated in Fig. 2 are denoted by the same reference signs and description thereof is omitted. The optical switch 10e is connected to one or more WDM devices 80. Each WDM device 80 is an example of a multiplexing/demultiplexing device. The WDM device 80 multiplexes optical signals of different wavelengths output from a plurality of ports 11-2 and outputs the multiplexed optical signal to a multiplexed communication transmission line 90. Further, the WDM device 80 wavelength-demultiplexes an optical signal received via the multiplexed communication transmission line 90 and inputs the demultiplexed optical signals to the plurality of ports 11-2. Thus, the WDM device 80 has the function of a multiplexing device that multiplexes optical signals of different wavelengths output from a plurality of ports 11-2 of the optical switch 10e and outputs the multiplexed optical signal to the multiplexed communication transmission line 90. In addition, the WDM device 80 has the function of a demultiplexing device that wavelength-demultiplexes an optical signal received via the multiplexed communication transmission line 90 and inputs the demultiplexed optical signals to a plurality of different ports 11-2 of the optical switch 10e. The optical switch 10e that performs WDM transmission may include the return transmission line 51 illustrated in Fig. 3 connected to a port 11-2 that is not connected to the WDM device 80.

Each multiplexed communication transmission line 90 is provided with a monitoring circuit 65. The monitoring circuit 65 includes a power splitter 66 and WDM devices 67 and 68. The power splitter 66 splits off an optical signal transmitted through the multiplexed communication transmission line 90. The WDM device 67 demultiplexes an upstream optical signal split off by the power splitter 66. The WDM device 68 demultiplexes a downstream optical signal split off by the power splitter 66. The monitoring circuit 65 monitors optical signals demultiplexed by the WDM devices 67 and 68. The monitoring circuit 65 generates monitoring information based on the monitoring result and outputs the generated monitoring information. The monitoring information is information indicating the monitoring result or information obtained from the monitoring result. For example, upon detecting an abnormality in the communication status between subscriber terminals 40 by monitoring the optical signals, the monitoring circuit 65 outputs monitoring information in which information indicating the occurrence of an abnormality in the communication status and information identifying a subscriber terminal 40 in which the abnormality in the communication status has occurred are set. The output destination of the monitoring information is, for example, the control unit 20.

Each monitoring circuit 65 may be provided with power splitters 69 in transmission lines between ports 11-2 and the WDM device 80. Each power splitter 69 splits off an optical signal transmitted through a transmission line between a port 11-2 and the WDM device 80 and outputs the split optical signal to the control unit 20.

The wavelength management control unit 25 may perform a wavelength change process of instructing a subscriber terminal 40, on which a wavelength assignment process has been performed, to change the wavelength. For example, the wavelength management control unit 25 identifies a subscriber terminal 40 whose wavelength is to be changed based on monitoring information output from a monitoring circuit 65 and performs a wavelength change process on the identified subscriber terminal 40. The optical switch control unit 26 controls the optical switch 10e such that an optical signal is transmitted and received between the subscriber terminal 40 and the wavelength management control unit 25 during the wavelength change process. When an optical signal of the changed wavelength has been input from the subscriber terminal 40 after the wavelength change process, the optical switch control unit 26 controls the optical switch 10e such that it outputs the input optical signal to a port 11-2 corresponding to the communication destination. The wavelength management control unit 25 may receive a wavelength change request from a subscriber terminal 40 during or after completion of communication and perform a wavelength change process on the requesting subscriber terminal 40.

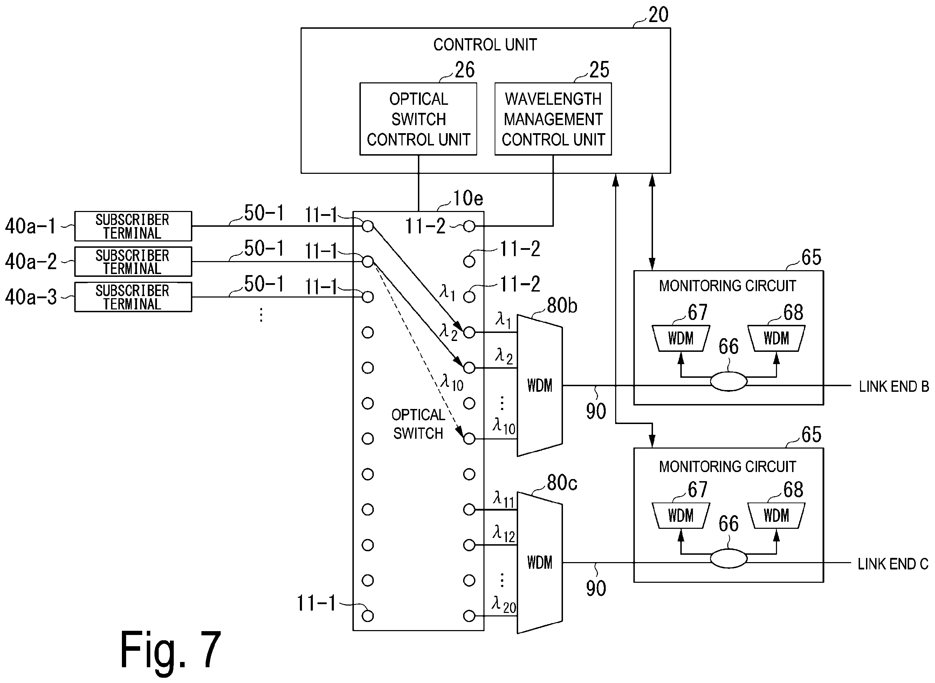

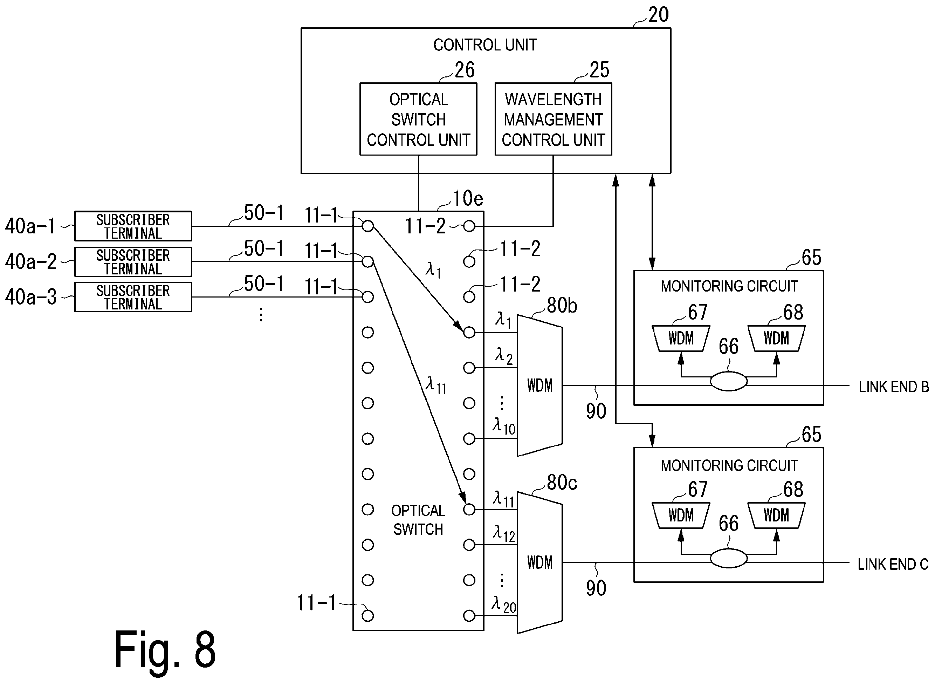

An example of wavelength change in the optical switch 10e will be described with reference to Figs. 7 and 8. Fig. 7 is a diagram illustrating an example of routing before wavelength change in the optical switch 10e. The optical switch 10e is connected to subscriber terminals 40a-1, 40a-2, 40a-3, ... which are subscriber terminals 40 of a link end A. A WDM device 80 connected to a link end B will be referred to as a WDM device 80b and a WDM device 80 connected to a link end C will be referred to as a WDM device 80c. The WDM device 80b transmits and receives optical signals of wavelengths λ₁ to λ₁₀ to and from the optical switch 10e and the WDM device 80c transmits and receives optical signals of wavelengths λ₁₁ to λ₂₀ to and from the optical switch 10e.

In Fig. 7, before wavelength change, the optical switch 10e outputs an optical signal of the wavelength λ₁ input from the subscriber terminal 40a-1 and an optical signal of the wavelength λ₂ input from the subscriber terminal 40a-2 to the WDM device 80b from different ports 11-2. The subscriber terminal 40a-2 transmits a wavelength change request to the wavelength management control unit 25 by a control signal during or after completion of communication. Upon receiving the wavelength change request from the subscriber terminal 40a-2, the wavelength management control unit 25 performs a wavelength change process of instructing the subscriber terminal 40a-2 to change the wavelength to the wavelength λ₁₀. The optical switch control unit 26 controls the optical switch 10e such that it outputs the optical signal of the wavelength λ₁₀ received from the subscriber terminal 40a-2 to the WDM device 80b from a port 11-2 corresponding to the wavelength λ₁₀. The wavelength management control unit 25 may further change the wavelength used for reception by the subscriber terminal 40a-2.

The optical switch control unit 26 may also control the optical switch 10e such that, after the wavelength change process, it outputs an optical signal, which has been transmitted from the transmission source subscriber terminal 40 using the changed wavelength, to a WDM device 80 different from that before wavelength change. Fig. 8 is a diagram illustrating an example of routing after wavelength change in the optical switch 10e when the output destination WDM device 80 is changed. Before wavelength change, the subscriber terminal 40a-1 communicates using the wavelength λ₁ and the subscriber terminal 40a-2 communicates using the wavelength λ₂ or the wavelength λ₁₀ as illustrated in Fig. 7. The subscriber terminal 40a-2 transmits a wavelength change request to the wavelength management control unit 25 by a control signal during or after completion of communication. Upon receiving the wavelength change request from the subscriber terminal 40a-2, the wavelength management control unit 25 performs a wavelength change process of instructing the subscriber terminal 40a-2 to change the wavelength to the wavelength λ₁₁ in order to communicate with a subscriber terminal 40 of the link end C. The optical switch control unit 26 controls the optical switch 10e such that it outputs an optical signal of the wavelength λ₁₁ received from the subscriber terminal 40a-2 to the WDM device 80c from a port 11-2 corresponding to the wavelength λ₁₁. The wavelength management control unit 25 may further change the wavelength used for reception by the subscriber terminal 40a-2.

The wavelength management control unit 25 may operate as follows when the subscriber terminal 40a-2 uses a wavelength as destination information and does not change the wavelength used for reception. The following does not apply when a wavelength is not used as destination information.
(1) The wavelength management control unit 25 releases a transmission wavelength that has been used by the subscriber terminal 40 of the link end B which is the communication destination before wavelength switching. Releasing the transmission wavelength resets the path from the subscriber terminal 40a-2, which uses the wavelength as destination information, to the subscriber terminal 40 of the link end B. After that, the wavelength management control unit 25 reassigns the wavelength, which has become an available wavelength due to the release, for receiving a signal addressed to the subscriber terminal 40a-2 from a subscriber terminal 40 of the link end C which is a new communication destination. This is performed when wavelengths used for subscriber terminals 40 are unique and no wavelengths other than idle wavelengths are assigned.
(2) When the communication destinations before and after wavelength change of the subscriber terminal 40a-2 are subscriber terminals 40 connected via different multiplexed communication transmission lines 90, the same wavelength as that used before wavelength change can be reused. However, for example, when transmission is made via a different transmission line or when input or output is made through a different input or output port of the optical switch while a wavelength is used as destination information, the path is treated as a different path, even with the same wavelength. To enable such reuse, for example, an "input transmission line," an "output transmission line," or a "combination of all transmission lines constituting the path" is added to arguments which are conditions for determining the output destination of the optical signal. The output destination is determined, for example, by a combination of a transmission line or a port to which an optical signal has been input and the wavelength of the optical signal or a combination of a transmission line or a port to which an optical signal has been input, a subscriber terminal 40 that has transmitted the optical signal, and the wavelength of the optical signal.

While a wavelength change process performed when a subscriber terminal 40 has requested a wavelength change has been described above, the same applies to a wavelength change process performed based on monitoring information.

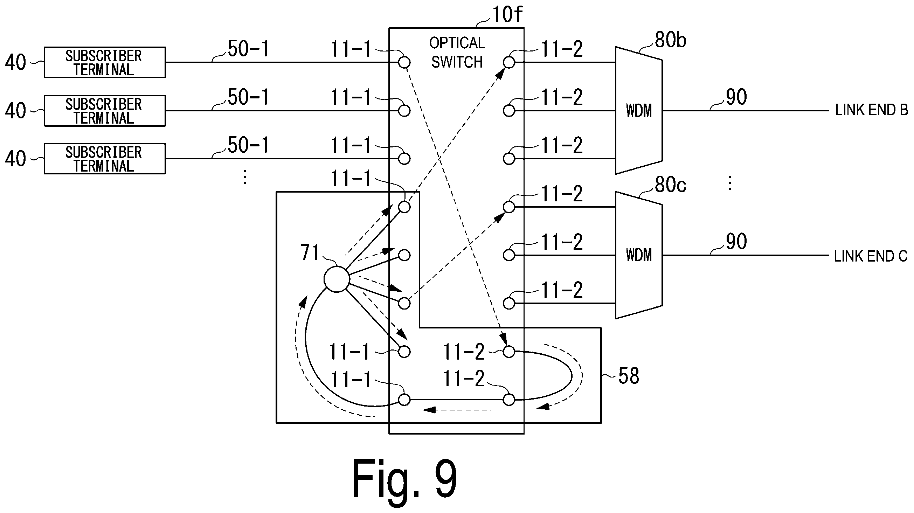

An optical switch that performs WDM transmission and multicast will be described with reference to Figs. 9 to 12. Fig. 9 is a diagram illustrating an exemplary configuration of an optical switch 10f that performs WDM transmission and upstream multicast. In Fig. 9, the optical switch 10f performs upstream multicast using a single wavelength. As illustrated in Fig. 9, the optical switch 10f includes a distribution unit 58 similar to that in Fig. 4. In Fig. 9, multicast to link ends B and C is performed. The optical switch 10f outputs an optical signal input from a port 11-1 connected to a subscriber terminal 40 from a port 11-2 to which a return transmission line is connected and receives the optical signal transmitted through the return transmission line from another port 11-2. The optical switch 10f outputs this received optical signal from a port 11-1 to which a 1 × N power splitter 71 is connected. The optical switch 10f receives optical signals distributed by the 1 × N power splitter 71 from a plurality of ports 11-1 and outputs one of the received optical signals to a port 11-2 connected to the link end B and another optical signal to a port 11-2 connected to the link end C.

Each subscriber terminal 40 may output a WDM signal. For example, a subscriber terminal 40 outputs a WDM signal into which an optical signal of a wavelength λ₁ and an optical signal of a wavelength λ₂ are multiplexed. Further, a plurality of transmission lines between a WDM device 80b and the optical switch 10f transmit and receive optical signals of wavelengths λ₁, λ₂, ... in order from the top. Similarly, a plurality of transmission lines between a WDM device 80c and the optical switch 10f transmit and receive optical signals of wavelengths λ₁, λ₂, ... in order from the top.

The optical switch 10f distributes a WDM signal of wavelengths λ₁ and λ₂ input from a port 11-1 connected to the subscriber terminal 40 through the distribution unit 58. The optical switch 10f outputs a distributed WDM signal to a port 11-2 corresponding to the wavelength λ₁ among ports 11-2 connected to the WDM device 80b. Further, the optical switch 10f outputs another distributed WDM signal to a port 11-2 corresponding to the wavelength λ₂ among ports 11-2 connected to the WDM device 80c. The WDM device 80b filters the WDM signal input from the port corresponding to the wavelength λ₁ to pass an optical signal of the wavelength λ₁ while blocking the wavelength λ₂ and outputs the passed optical signal to a multiplexed communication transmission line 90. The WDM device 80c filters the WDM signal input from the port corresponding to the wavelength λ₂ to pass an optical signal of the wavelength λ₂ while blocking the wavelength λ₁ and outputs the passed optical signal to a multiplexed communication transmission line 90.

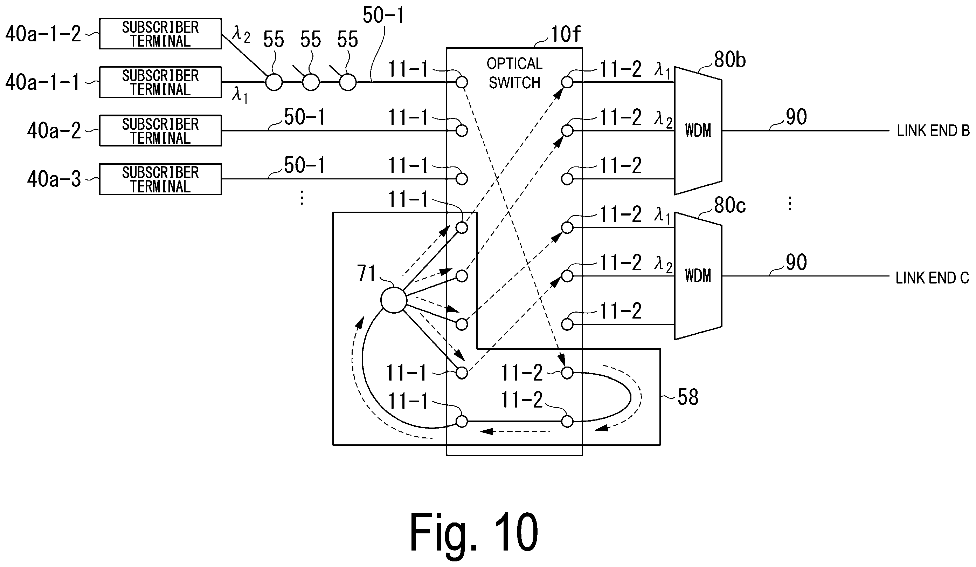

Fig. 10 is a diagram illustrating a case where the optical switch 10f performs upstream multicast to a plurality of link ends using a plurality of wavelengths. One or more 1×M power splitters 55 are provided on a transmission line 50-1, whereby a plurality of subscriber terminals 40 can be connected to the transmission line 50-1 which is connected to one port 11-1. In Fig. 10, subscriber terminals 40a-1-1, 40a-1-2, ... are connected to one transmission line 50-1 as a plurality of subscriber terminals 40a-1. The subscriber terminals 40a-1-1, 40a-1-2, ... use different wavelengths. Here, the subscriber terminal 40a-1-1 transmits an optical signal of a wavelength λ₁ and the subscriber terminal 40a-1-2 transmits an optical signal of a wavelength λ₂. The optical switch 10f receives an optical signal, into which the optical signal of the wavelength λ₁ transmitted by the subscriber terminal 40a-1-1 and the optical signal of the wavelength λ₂ transmitted by the subscriber terminal 40a-1-2 are multiplexed, from a port 11-1. The optical switch 10f outputs this received optical signal from a port 11-2 to which a return transmission line is connected and receives an optical signal transmitted through the return transmission line from another port 11-2. The optical switch 10f outputs this received optical signal from a port 11-1 to which a 1 × N power splitter 71 is connected. The optical switch 10f receives optical signals distributed by the 1 × N power splitter 71 from a plurality of ports 11-1.

The optical switch 10f outputs optical signals distributed by the power splitter 71 to a port 11-2 corresponding to the wavelength λ₁ and a port 11-2 corresponding to the wavelength λ₂ among ports 11-2 connected to the WDM device 80b. Further, the optical switch 10f outputs optical signals distributed by the power splitter 71 to a port 11-2 corresponding to the wavelength λ₁ and a port 11-2 corresponding to the wavelength λ₂ among ports 11-2 connected to the WDM device 80c. The WDM device 80b filters the optical signal input from the port corresponding to the wavelength λ₁ to pass an optical signal of the wavelength λ₁ and outputs the passed optical signal to a multiplexed communication transmission line 90 and filters the optical signal input from the port corresponding to the wavelength λ₂ to pass an optical signal of the wavelength λ₂ and outputs the passed optical signal to the multiplexed communication transmission line 90. Similarly, the WDM device 80c filters the optical signal input from the port corresponding to the wavelength λ₁ to pass an optical signal of the wavelength λ₁ and outputs the passed optical signal to a multiplexed communication transmission line 90 and filters the optical signal input from the port corresponding to the wavelength λ₂ to pass an optical signal of the wavelength λ₂ and outputs the passed optical signal to the multiplexed communication transmission line 90.

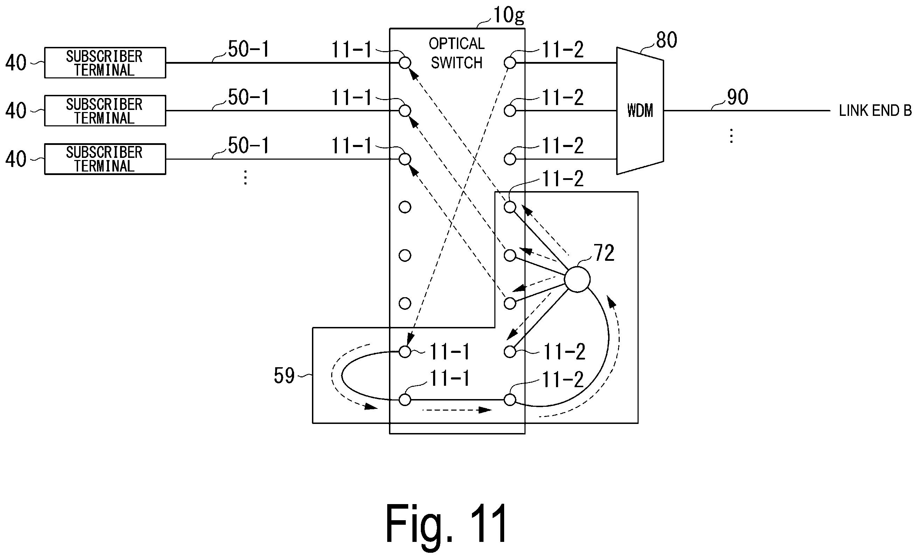

Fig. 11 is a diagram illustrating an exemplary configuration of an optical switch 10g that performs WDM transmission and downstream multicast. The optical switch 10g includes a distribution unit 59 similar to that in Fig. 5. The optical switch 10f illustrated in Figs. 9 and 10 and the optical switch 10g illustrated in Fig. 11 may include monitoring circuits 65 similar to those in Fig. 6. The wavelength management control unit 25 can perform a wavelength change process on a subscriber terminal 40, on which a monitoring circuit 65 has detected an abnormality in the communication status, in the same manner as described above.

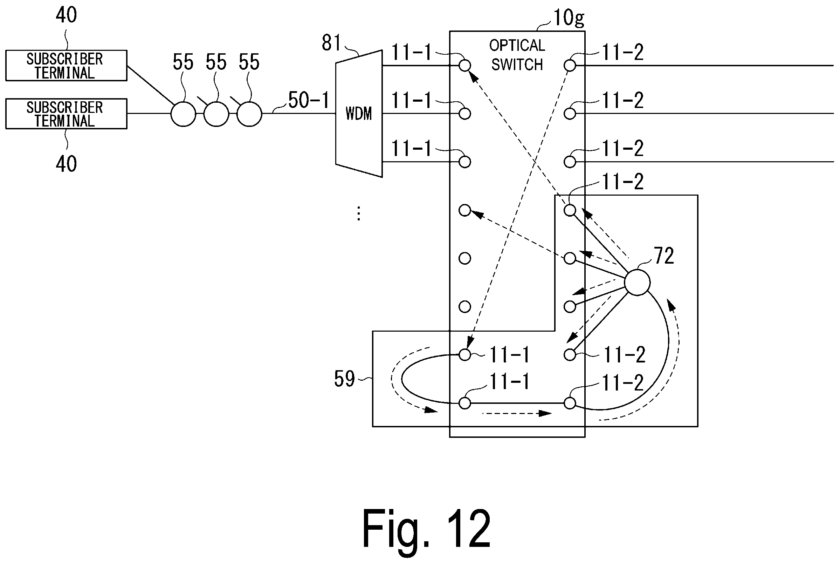

Fig. 12 is a diagram illustrating a case where the optical switch 10g performs WDM transmission and downstream multicast. The connection configuration illustrated in Fig. 12 differs from the connection configuration illustrated in Fig. 11 in that a WDM device 81 connected to a plurality of ports 11-1 of the optical switch 10g is provided instead of the WDM device 80 connected to a plurality of ports 11-2 of the optical switch 10g. One or more subscriber terminals 40 are connected to the WDM device 81 on the side opposite to the ports 11-1. The optical switch 10g receives an optical signal of a plurality of wavelengths from another link end from a port 11-2 and outputs the optical signal to a port 11-1 to which a return transmission line of a distribution unit 59 is connected. The optical signal of the plurality of wavelengths is split into the same signals by a power splitter 72. The optical switch 10d receives the split optical signals of the plurality of wavelengths from a plurality of ports 11-2 and outputs a received optical signal to one of the ports 11-1 connected to the WDM device 81. The WDM device 81 filters and passes an optical signal having a wavelength corresponding to the port 11-1, to which the optical signal is input, from the input optical signal having the plurality of wavelengths and outputs the passed optical signal to a transmission line connected to the subscriber terminals 40.

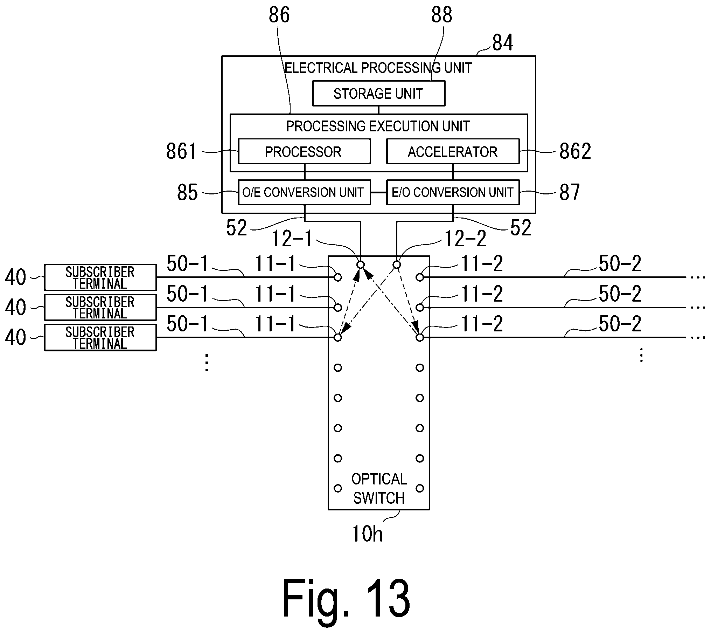

Fig. 13 is a diagram illustrating an exemplary configuration of an optical switch 10h that performs electrical processing on optical signals. In Fig. 13, the same parts as those of the optical switch 10b illustrated in Fig. 3 are denoted by the same reference signs and description thereof is omitted. In Fig. 13, the illustration of the control unit 20 is also omitted. The optical switch 10h differs from the optical switches 10a to 10g described above in that it further includes ports 12-1 and 12-2. The ports 12-1 and 12-2 are connected to an electrical processing unit 84 via transmission lines 52. A port 11-1 and a port 11-2 may also be used as ports connected to the electrical processing unit 84 via transmission lines 52.

Under the control of the optical switch control unit 26, the optical switch 10h outputs an optical signal input from a subscriber terminal 40 from a port 11-2 or the port 12-1 according to a combination of the subscriber terminal 40 which is the transmission source of the optical signal or a port 11-1 from which the optical signal has been input and the wavelength. Under the control of the optical switch control unit 26, the optical switch 10h outputs an optical signal output destination input from a port 11-2 from a port 11-1 or the port 12-1 according to a combination of the port 11-2 from which the optical signal has been input and the wavelength.

The optical switch 10h outputs an optical signal from the port 12-1 to drop the optical signal to the electrical processing unit 84. The electrical processing unit 84 electrically terminates the dropped optical signal and applies various electrical processing such as error correction and line concentration and then converts the processed signal into an optical signal and inputs the optical signal to the port 12-2 of the optical switch 10h. The optical switch 10h outputs the optical signal input from the electrical processing unit 84 from a port 11-1 or a port 11-2 corresponding to a destination identified by the combination of the port 12-2 and the wavelength. In this way, the electrical processing unit 84 performs O-E(electrical processing addition)-O conversion (where O refers to optical and E refers to electrical). The electrical processing unit 84 may simply perform O-E-O conversion without performing electrical processing for adding a function. Upon O-E-O conversion or the like, the electrical processing unit 84 performs 3R reproduction (Re-amplification, Re-timing (timing reproduction), and Re-shaping (waveform shaping)) or uses threshold effects through 0/1 reversal, such that it is possible to reduce deterioration of the optical waveform due to transmission. The wavelength of an optical signal that is to be converted into an electrical signal and the wavelength of an optical signal into which the electrical signal has been converted may be the same or different.

When a port which is the output destination of the optical switch is determined by a combination of a subscriber terminal that has transmitted the optical signal and the wavelength, that is, when the wavelength is used as destination information, the destination for the direction from a port 11-1 to a port 11-2 and the destination for the direction from a port 11-2 to a port 11-1 may differ even with the same wavelength, for passing through the electrical processing unit 84.

The electrical processing unit 84 includes an optical to electrical (O/E) conversion unit 85, a processing execution unit 86, an electrical to optical (E/O) conversion unit 87, and a storage unit 88. The O/E conversion unit 85 converts an optical signal input from the optical switch 10h into an electrical signal. The processing execution unit 86 includes a processor 861 and an accelerator 862. The processor 861 is a general-purpose processor such as a central processing unit (CPU). The accelerator 862 is, for example, a processor such as a graphics processing unit (GPU). Each of the processor 861 and the accelerator 862 reads a program from the storage unit 88 and executes it to perform electrical signal processing on the electrical signal produced through conversion of the O/E conversion unit 85. The processing execution unit 86 may perform electrical signal processing of a plurality of functions. Examples of electrical signal processing include digital signal processing (DSP) for long distance/high-speed access, mobile fronthaul processing, and error correction. The E/O conversion unit 87 converts the electrical signal into an optical signal of a wavelength indicated by the optical switch control unit 26 and outputs the optical signal to the optical switch 10h. The storage unit 88 stores a program for the processor 861 and the accelerator 862 to execute the functions of electrical signal processing.

By implementing the processing execution unit 86 with a device architecture based on a general-purpose processor, it is possible to add and change electrical signal processing while enabling replacement with various functions other than the transmission function. Also, a dedicated large-scale integration (LSI) for long-distance/high-speed access becomes unnecessary because the processing execution unit 86 performs DSP for long-distance/high-speed access. Thus, flexible function deployment according to needs is realized.

The optical switch 10h may be connected to a plurality of electrical processing units 84. In this case, the optical switch 10h has a plurality of pairs of ports 12-1 and 12-2 connected to the plurality of the electrical processing units 84. Each of the electrical processing units 84 may perform different electrical signal processing or some or all of them may perform the same electrical processing.

The processing execution unit 86 and the storage unit 88 may be realized using hardware such as an application specific integrated circuit (ASIC), a programmable logic device (PLD), or a field programmable gate array (FPGA).

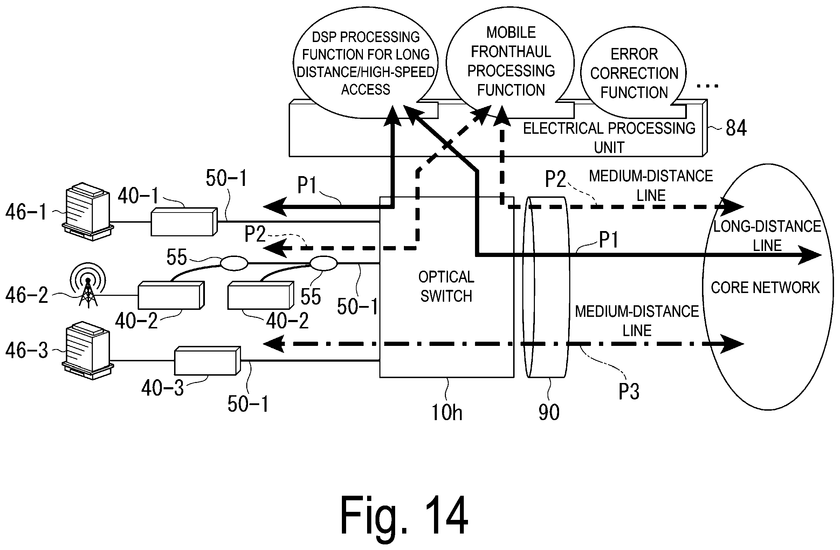

Fig. 14 is a diagram illustrating an example of connection using the optical switch 10h. Three subscriber terminals 40 connected to an optical switch 10h will be referred to as subscriber terminals 40-1, 40-2, and 40-3. The subscriber terminals 40-1, 40-2, and 40-3 are, for example, ONUs. A user 46-1 who uses the subscriber terminal 40-1 is a user who performs long-distance or high-speed communication. One or more communication devices of the user 46-1 are connected to the subscriber terminal 40-1. The subscriber terminal 40-1 communicates with a communication destination device through a long-distance line P1. A mobile base station 46-2 is connected to subscriber terminals 40-2. In Fig. 14, a plurality of subscriber terminals 40-2 are connected to one transmission line 50-1 by a power splitter 55. Each subscriber terminal 40-2 communicates with a communication destination device through a medium-distance line P2. A user 46-3 who uses the subscriber terminal 40-3 is a user who performs medium-distance or medium-speed communication. One or more communication devices of the user 46-3 communicate with a communication destination device through a medium-distance line P3 via the subscriber terminal 40-3. Optical signals of the long-distance line P1, the medium-distance line P2, and the medium-distance line P3 are wavelength-multiplexed and transmitted through a multiplexed communication transmission line 90 connected to a core network (NW). The electrical processing unit 84 has a DSP function for long-distance/high-speed access, a mobile fronthaul processing function, an error correction function, and the like.

The operation of the optical switch 10h will be described with reference to Figs. 13 and 14. The optical switch 10h outputs an upstream optical signal transmitted by the subscriber terminal 40-1 to the electrical processing unit 84. The O/E conversion unit 85 of the electrical processing unit 84 converts the input optical signal into an electrical signal. The processing execution unit 86 performs DSP processing for long-distance/high-speed access on the converted electrical signal. The E/O conversion unit 87 converts the DSP-processed electrical signal into an optical signal and outputs it to the optical switch 10h. The wavelength after conversion may be the same as or different from the wavelength when it is input to the electrical processing unit 84. The optical switch 10h outputs the optical signal input from the electrical processing unit 84 to the multiplexed communication transmission line 90 from a port 11-2.

Also, the optical switch 10h receives a downstream optical signal addressed to the subscriber terminal 40-1 transmitted through the multiplexed communication transmission line 90. The optical switch 10h outputs the received downstream optical signal to the electrical processing unit 84 from the port 12-1 according to a combination of a port 51-2 from which the optical signal has been input and the wavelength. The O/E conversion unit 85 of the electrical processing unit 84 converts the input optical signal into an electrical signal and the processing execution unit 86 performs DSP processing for long-distance/high-speed access on the converted electrical signal. The E/O conversion unit 87 converts the DSP-processed electrical signal into an optical signal and outputs it to the optical switch 10h. The wavelength of the optical signal after conversion may be the same as or different from the wavelength when it is input to the electrical processing unit 84. The optical switch 10h outputs the optical signal input from the electrical processing unit 84 to a port 11-1 connected to the subscriber terminal 40-1.

Optical signals transmitted and received by the subscriber terminals 40-2 are subjected to the same processing as that performed on optical signals transmitted and received by the subscriber terminal 40-1 described above. However, the processing execution unit 86 performs mobile fronthaul processing on optical signals transmitted and received by the subscriber terminals 40-2. The processing execution unit 86 determines signal processing to be performed on the electrical signal based on arbitrary information included in the electrical signal.

On the other hand, the optical switch 10h outputs an upstream optical signal input from the subscriber terminal 40-3 to the multiplexed communication transmission line 90 from a port 11-2. The optical switch 10h receives a downstream optical signal addressed to the subscriber terminal 40-3 transmitted through the multiplexed communication transmission line 90 and outputs the received optical signal to a port 11-1 connected to the subscriber terminal 40-3 according to a combination of the port 11-2 from which the optical signal has been received and the wavelength.

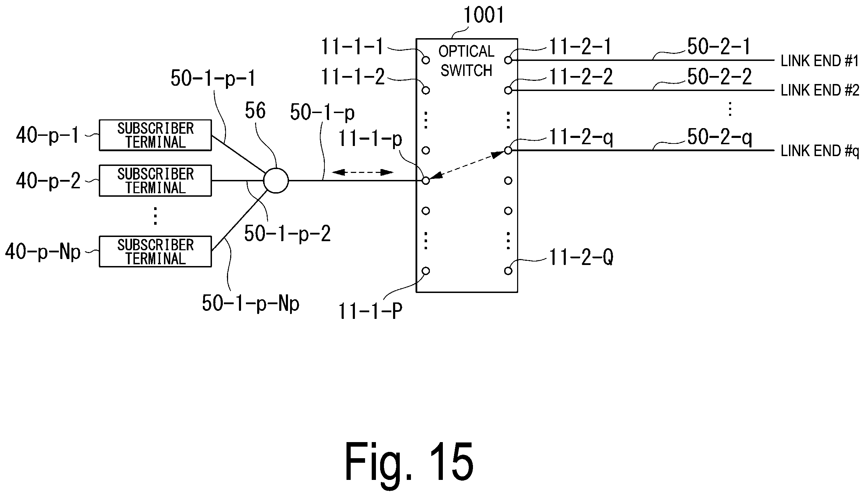

Subsequently, access topologies to an optical switch will be described with reference to Figs. 15 to 23.

Fig. 15 is a diagram illustrating a passive double star (PDS) access topology using time division multiplexing. The optical switches 10a to 10h described above can each be used as an optical switch 1001. The optical switch 1001 has ports 11-1-1 to 11-1-P and ports 11-2-1 to 11-2-Q. Transmission lines 50-1 connected to ports 11-1-p (where p is an integer of 1 or more and P or less) will also be referred to as transmission lines 50-1-p and transmission lines 50-2 connected to ports 11-2-q (where q is an integer of 1 or more and Q or less) will also be referred to as transmission lines 50-2-q. In Fig. 15, a port 11-2-q is connected to a link end #q by a transmission line 50-2-q.

A power splitter 56 is provided on a transmission line 50-1-p. Np subscriber terminals 40-p (where Np is an integer of 2 or more) are connected to the power splitter 56 in a star configuration. The Np subscriber terminals 40-p will be referred to as subscriber terminals 40-p-1 to 40-p-Np and a transmission line 50-1-p between a subscriber terminal 40-p-np (where np is an integer of 1 or more and Np or less) and the power splitter 56 will be referred to as a transmission line 50-1-p-np. The subscriber terminals 40-p-1 to 40-p-Np use the same wavelength by time division multiplexing. The wavelength used for upstream optical signals and the wavelength used for downstream optical signals are different.

The optical switch 1001 receives downstream optical signals of a wavelength λ₁ addressed to the subscriber terminals 40-p-1 to 40-p-Np, which have been time-division-multiplexed, from a port 11-2-q. The optical switch 1001 outputs the received downstream optical signals from a port 11-1-p which is an output destination corresponding to a combination of the port 11-2-q and the wavelength λ₁. The power splitter 56 receives the time-division-multiplexed downstream optical signal from the transmission line 50-1-p and splits and outputs the received optical signal to the transmission lines 50-1-p-1 to 50-1-p-Np. Each of the subscriber terminals 40-p-1 to 40-p-Np receives the time-division-multiplexed optical signal and selects a downstream optical signal addressed to the subscriber terminal from the received optical signal.

The subscriber terminals 40-p-1 to 40-p-Np transmit time-division-multiplexed upstream optical signals of the same wavelength λ₂ by time-division multiple access (TDMA). The power splitter 56 receives upstream optical signals of the wavelength λ₂ from the transmission lines 50-1-p-1 to 50-1-p-Np and time-division-multiplexes the received optical signals and outputs the time-division-multiplexed signal to the transmission line 50-1-p. The optical switch 1001 outputs the time-division-multiplexed upstream optical signal from a port 11-2-q corresponding to a combination of the port 11-1-p and the wavelength λ₂.

The PDS access topology can be applied to any one or more of the transmission lines 50-1-1 to 50-1-P.

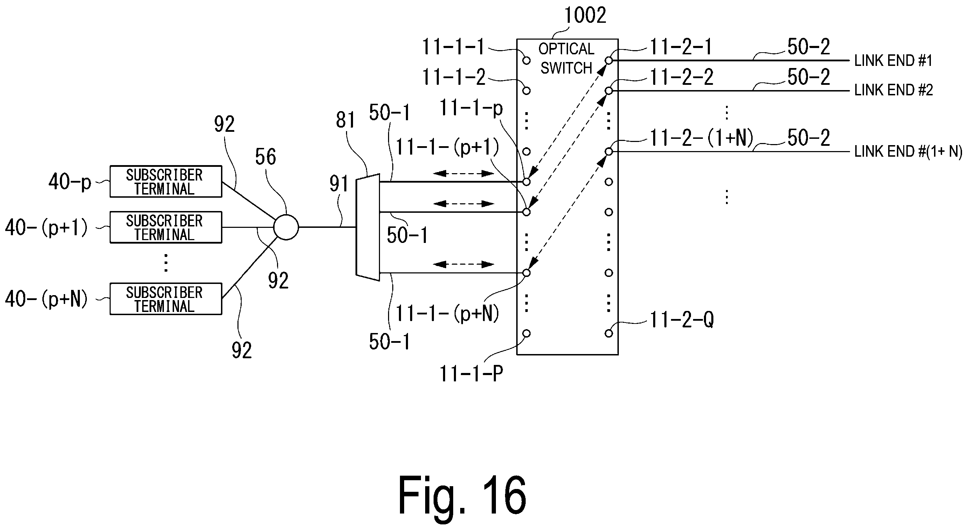

Fig. 16 is a diagram illustrating a PDS access topology using wavelength multiplexing. The optical switches 10a to 10h described above can each be used as an optical switch 1002. The optical switch 1002 is connected to one or more WDM devices 81. Each WDM device 81 multiplexes downstream optical signals of different wavelengths output from a plurality of ports 11-1 and outputs the multiplexed optical signal to a multiplexed communication transmission line 91. The WDM device 81 demultiplexes a wavelength-multiplexed upstream optical signal received via the multiplexed communication transmission line 91 and inputs the demultiplexed optical signals to different ports 11-1. A power splitter 56 is provided on the multiplexed communication transmission line 91. N subscriber terminals 40 (where N is an integer of 2 or more) are connected to the power splitter 56 in a star configuration. The subscriber terminals 40 and the power splitter 56 are connected by transmission lines 92. The plurality of subscriber terminals 40 connected to the power splitter 56 transmit and receive optical signals of different wavelengths.

In Fig. 16, ports 11-1-p to 11-1-(p + N) of the optical switch 1002 are connected to the WDM device 81 via transmission lines 50-1 (where p and N are integers of 1 or more and p + N is an integer of P or less). The subscriber terminals 40-p to 40-(p + N) are connected to the power splitter 56.

The optical switch 1002 receives a downstream optical signal of a wavelength λ_{1(q + n)} addressed to a subscriber terminal 40-(p + n) from a port 11-2-(q + n) (where q is an integer of 1 or more and n is an integer of 0 or more and N or less). Fig. 16 is an example in which q = 1. The optical switch 1002 routes the downstream optical signal of the wavelength λ_{1(1 + n)} received from the port 11-2-(q + n) to a port 11-1-(p + n) which is an output destination corresponding to a combination of the port 11-2-(q + n) and the wavelength λ_{1(1 + n)}. In this way, the optical switch 1002 routes a downstream optical signal of a wavelength λ₁₁ received from the port 11-2-1 to the port 11-1-p and routes a downstream optical signal of a wavelength λ₁₂ received from the port 11-2-2 to the port 11-1-(p+1).

The WDM device 81 multiplexes downstream optical signals of wavelengths λ₁₁ to λ_{1N} output from the ports 11-1-p to 11-1-(p + N) and outputs the multiplexed optical signal to the multiplexed communication transmission line 91. The power splitter 56 receives the wavelength-multiplexed downstream optical signal from the multiplexed communication transmission line 91, splits the received downstream optical signal into the same signals, and outputs them to the transmission lines 92 between the power splitter 56 and the subscriber terminals 40-p to 40-(p + N). Each of the subscriber terminals 40-p to 40-(p + N) receives the wavelength-multiplexed downstream optical signal and selects a downstream optical signal of a wavelength to be used by the subscriber terminal from the received optical signal.

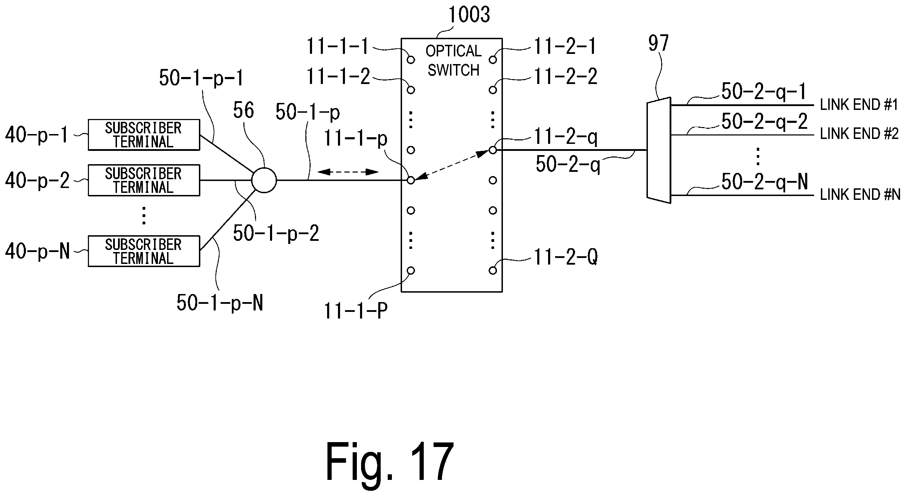

Each subscriber terminal 40-(p + n) transmits an upstream optical signal of a wavelength λ_{2(1 + n)}. The power splitter 56 receives upstream optical signals from the subscriber terminals 40-p to 40-(p + N) via the transmission lines 92, wavelength-multiplexes the received upstream optical signals of wavelengths λ₂₁ to λ_{2(1 + n)}, and outputs the wavelength-multiplexed optical signal to the multiplexed communication transmission line 91. The WDM device 81 receives the wavelength-multiplexed upstream optical signal from the multiplexed communication transmission line 91 and wavelength-demultiplexes the wavelength-multiplexed upstream optical signal. The WDM device 81 inputs the upstream optical signals of wavelengths λ_{2(1 + n)} to the ports 11-1-(p + n). The optical switch 1002 outputs the upstream optical signal of each wavelength λ_{2(1 + n)} from a port 11-2-(q + n) which is an output destination corresponding to a combination of the input port 11-1-(p + n) and the wavelength λ_{2(1 + n)}. In this way, the optical switch 1002 receives the upstream optical signal of the wavelength λ₂₁ transmitted by the subscriber terminal 40-p from the port 11-1-p and outputs it from the port 11-2-1. The optical switch 1002 also receives the upstream optical signal of the wavelength λ₂₂ transmitted by the subscriber terminal 40-(p + 1) from the port 11-1-(p + 1) and outputs it from the port 11-2-2. The WDM device may also be disposed subsequent to the optical switch as illustrated in Fig. 17.

Fig. 17 is a diagram illustrating a PDS access topology using wavelength multiplexing with a WDM device disposed subsequent to an optical switch. The optical switches 10a to 10h described above can each be used as an optical switch 1003. A port 11-2-q of the optical switch 1003 is connected to a WDM device 97 via a transmission line 50-2-q (where q is an integer of 1 or more and Q or less). The WDM device 97 is connected to link ends #n via transmission lines 50-2-q-n (where n is an integer of 1 or more and N or less). A power splitter 56 is provided on a transmission line 50-1-p connected to a port 11-1-p of the optical switch 1003. N subscriber terminals 40-p-1 to 40-p-N are connected to the power splitter 56 in a star configuration.

The WDM device 97 receives a downstream optical signal addressed to a subscriber terminal 40-p-n of a wavelength λ₁ₙ transmitted from a link end #n from a transmission line 50-2-q-n. The WDM device 97 inputs a wavelength-multiplexed signal, into which downstream optical signals of λ₁₁ to λ_{1N} received from the link ends #1 to #N are multiplexed, to the optical switch 1003. The optical switch 1003 outputs the wavelength-multiplexed downstream signal input from the port 11-2-q from the output destination port 11-1-p. The power splitter 56 splits the wavelength-multiplexed signal input from the transmission line 50-1-p and outputs the split signals to the transmission lines 50-1-p-1 to 50-1-p-N. Each of the subscriber terminals 40-p-1 to 40-p-N receives the wavelength-multiplexed signal and selects a downstream optical signal addressed to the subscriber terminal from the received optical signal. In this way, the subscriber terminal 40-p-n receives an optical signal of the wavelength λ₁ₙ from the link end #n.

Each subscriber terminal 40-p-n transmits an upstream optical signal of a wavelength λ₂ₙ. The power splitter 56 receives upstream optical signals of wavelengths λ₂₁ to λ_{2N} from the subscriber terminals 40-p-1 to 40-p-N via the transmission lines 50-1-p-1 to 50-1-p-N. The power splitter 56 outputs a wavelength-multiplexed signal, into which the upstream optical signals of the wavelengths λ₂₁ to λ_{2N} are wavelength-multiplexed, to the transmission line 50-1-p. The optical switch 1003 receives the wavelength-multiplexed signal, into which the upstream optical signals of the wavelengths λ₂₁ to λ_{2N} are wavelength-multiplexed, from the port 11-1-p. The optical switch 1003 outputs the wavelength-multiplexed upstream signal to the transmission line 50-2-q from the output destination port 11-2-q. The WDM device 97 receives the wavelength-multiplexed upstream optical signal from the transmission line 50-2-q and wavelength-demultiplexes the wavelength-multiplexed upstream optical signal. The WDM device 97 outputs the upstream optical signal of the wavelength λ₂ₙ to a transmission line 50-2-n connected to the link end #n. In this way, the optical signal of the wavelength λ₂ₙ transmitted by the subscriber terminal 40-p-n is transmitted to the link end #n.

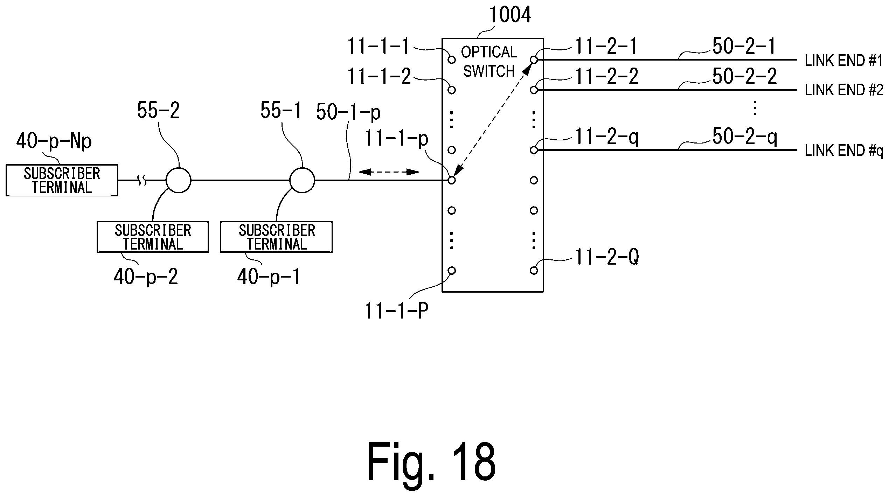

Fig. 18 is a diagram illustrating a bus access topology using time division multiplexing. The optical switches 10a to 10h described above can each be used as an optical switch 1004. The access topology illustrated in Fig. 18 differs from the access topology illustrated in Fig. 15 in that a plurality of subscriber terminals 40-p-1 to 40-p-Np are connected to a transmission line 50-1-p in a bus configuration. One or more power splitters 55 are provided on the transmission line 50-1-p. A power splitter 55 to which a subscriber terminal 40-p-n is connected will be referred to as a power splitter 55-n (where n is an integer of 1 or more and Np - 1 or less).

The subscriber terminals 40-p-1 to 40-p-Np use the same wavelength by time division multiplexing. The wavelength used for upstream optical signals and the wavelength used for downstream optical signals are different. A transmission line 50-2-1 connected to a link end #1 transmits a time-division-multiplexed downstream optical signal of a wavelength λ₁ addressed to each of the subscriber terminals 40-p-1 to 40-p-Np. The optical switch 1004 receives the time-division-multiplexed downstream optical signal of the wavelength λ₁ transmitted through the transmission line 50-2-1 from the port 11-2-1. The optical switch 1004 routes the received downstream optical signal to a port 11-1-p which is an output destination corresponding to a combination of the port 11-2-1 (or the link end #1) and the wavelength λ₁. The optical switch 1004 outputs the time-division-multiplexed downstream optical signal of the wavelength λ₁ to the transmission line 50-1-p from the port 11-1-p. Each power splitter 55-n splits off the time-division-multiplexed downstream optical signal from the transmission line 50-1-p and outputs the split downstream optical signal to the subscriber terminal 40-p-n. Each of the subscriber terminals 40-p-1 to 40-p-Np receives the time-division-multiplexed downstream optical signal and selects a downstream optical signal addressed to the subscriber terminal from the received downstream optical signal.

The subscriber terminals 40-p-1 to 40-p-Np transmit time-division-multiplexed upstream optical signals of the same wavelength λ₂ by time-division multiple access (TDMA). Each power splitter 55-n time-division-multiplexes an upstream optical signal of the wavelength λ₂ input from the subscriber terminal 40-p-n with an upstream optical signal transmitted through the transmission line 50-1-p. The optical switch 1004 receives the time-division-multiplexed upstream optical signal from the port 11-1-p, routes it to the port 11-2-1 which is an output destination corresponding to a combination of the port 11-1-p and the wavelength λ₂, and outputs it to the transmission line 50-2-1 connected to the link end #1.

The bus access topology can be applied to any one or more of the transmission lines 50-1-1 to 50-1-P.

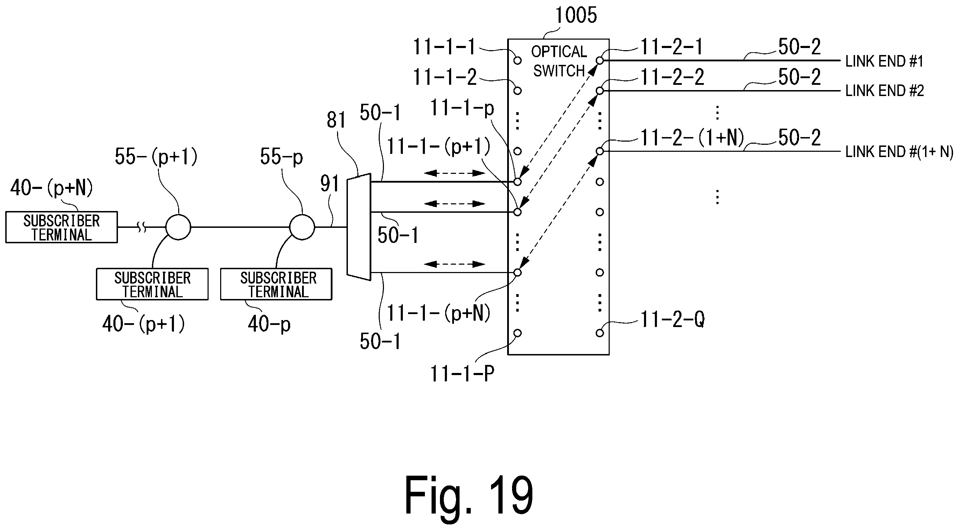

Fig. 19 is a diagram illustrating a bus access topology using wavelength multiplexing. The optical switches 10a to 10h described above can each be used as an optical switch 1005. The access topology illustrated in Fig. 19 differs from the access topology illustrated in Fig. 16 in that a plurality of subscriber terminals 40-p to 40-(p + N) are connected to a multiplexed communication transmission line 91 in a bus configuration. The subscriber terminals 40-p to 40-(p + N) transmit and receive optical signals of different wavelengths. One or more power splitters 55 are provided on the multiplexed communication transmission line 91. A power splitter 55 to which a subscriber terminal 40-(p + n) is connected will be referred to as a power splitter 55-(p + n) (where n is an integer of 0 or more and N - 1 or less and N is an integer of 1 or more).

Similar to the optical switch 1002 illustrated in Fig. 16, the optical switch 1005 receives a downstream optical signal of a wavelength λ_{1(1 + n)} addressed to a subscriber terminal 40-(p + n) from a port 11-2-(q + n) (where q is an integer of 1 or more and n is an integer of 0 or more and N or less). Fig. 19 is an example in which q = 1. The optical switch 1005 routes the downstream optical signal of the wavelength λ_{1(1 + n)} received from the port 11-2-(q + n) to a port 11-1-(p + n) which is an output destination corresponding to a combination of the port 11-2-(q + n) and the wavelength λ_{1(1 + n)}.

The WDM device 81 multiplexes downstream optical signals of wavelengths λ₁₁ to λ_{1N} output from the ports 11-1-p to 11-1-(p + N) and outputs the multiplexed optical signal to the multiplexed communication transmission line 91. The power splitter 55-(p + n) splits off the wavelength-multiplexed downstream optical signal from the multiplexed communication transmission line 91 and outputs the split downstream optical signal to the subscriber terminal 40-(p + n). Each of the subscriber terminals 40-p to 40-(p + N) receives the wavelength-multiplexed downstream optical signal and selects a downstream optical signal addressed to the subscriber terminal from the received downstream optical signal.

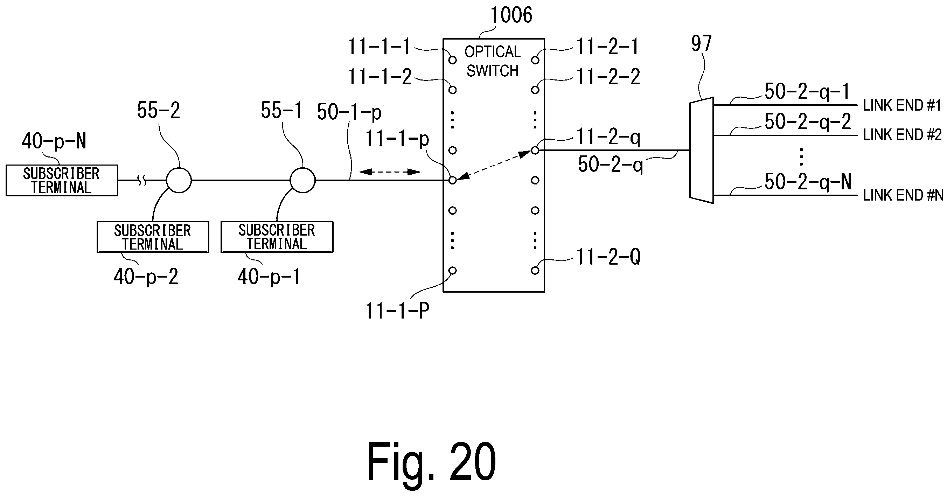

The subscriber terminal 40-(p + n) transmits an upstream optical signal of a wavelength λ_{2(1 + n)}. Each power splitter 55-(p + n) multiplexes an upstream optical signal of the wavelength λ_{2(1 + n)} input from the subscriber terminal 40-(p + n) with an upstream optical signal of wavelengths λ_{2(2 + n)} to λ_{2N} transmitted through the multiplexed communication transmission line 91. The WDM device 81 receives the wavelength-multiplexed upstream optical signal from the multiplexed communication transmission line 91 and demultiplexes it into upstream optical signals of the wavelengths λ₂₁ to λ_{2N}. The WDM device 81 inputs the upstream optical signals of wavelengths λ_{2(1 + n)} to the ports 11-1-(p + n). Similar to the optical switch 1002 illustrated in Fig. 16, the optical switch 1005 outputs the upstream optical signal of each wavelength λ_{2(1 + n)} from a port 11-2-(q + n) which is an output destination corresponding to a combination of the input port 11-1-(p + n) and the wavelength λ_{2(1 + n)}. In this way, the optical switch 1005 receives the upstream optical signal of the wavelength λ₂₁ transmitted by the subscriber terminal 40-p from the port 11-1-p and outputs it from the port 11-2-1. The optical switch 1005 also receives the upstream optical signal of the wavelength λ₂₂ transmitted by the subscriber terminal 40-(p + 1) from the port 11-1-(p + 1) and outputs it from the port 11-2-2. The access topology may also be configured with the WDM device disposed subsequent to the optical switch as illustrated in Fig. 20.

Fig. 20 is a diagram illustrating a bus access topology using wavelength multiplexing with a WDM device disposed subsequent to an optical switch. The optical switches 10a to 10h described above can each be used as an optical switch 1006. In Fig. 20, the same parts as those in Fig. 17 are denoted by the same reference signs. A port 11-2-q of the optical switch 1006 is connected to a WDM device 97 via a transmission line 50-2-q (where q is an integer of 1 or more and Q or less). The WDM device 97 is connected to link ends #n via transmission lines 50-2-q-n (where n is an integer of 1 or more and N or less and N is an integer of 2 or more). One or more power splitters 55 are provided on a transmission line 50-1-p connected to a port 11-1-p of the optical switch 1006 (where p is an integer of 1 or more and P or less). A power splitter 55 to which a subscriber terminal 40-p-n is connected will be referred to as a power splitter 55-n.

The WDM device 97 receives a downstream optical signal addressed to a subscriber terminal 40-p-n of a wavelength λ₁ₙ transmitted from a link end #n from a transmission line 50-2-q-n. The WDM device 97 inputs a wavelength-multiplexed signal, into which downstream optical signals of wavelengths λ₁₁ to λ_{1N} received from the link ends #1 to #N are multiplexed, to the optical switch 1006. The optical switch 1006 outputs the wavelength-multiplexed downstream signal input from the port 11-2-q from the output destination port 11-1-p. The power splitter 55-n splits off the wavelength-multiplexed downstream signal from the transmission line 50-1-p and outputs the split wavelength-multiplexed downstream signal to the subscriber terminal 40-p-n. Each of the subscriber terminals 40-p-1 to 40-p-N selects a downstream optical signal addressed to the subscriber terminal from the received wavelength-multiplexed downstream signal. In this way, the subscriber terminal 40-p-n receives an optical signal of the wavelength λ₁ₙ from the link end #n.

The subscriber terminal 40-p-n transmits an upstream optical signal of a wavelength λ₂ₙ. Each power splitter 55-n wavelength-multiplexes the upstream optical signal of the wavelength λ₂ₙ input from the subscriber terminal 40-p-n with an upstream optical signal transmitted through the transmission line 50-1-p. The optical switch 1006 receives the wavelength-multiplexed signal, into which the upstream optical signals of the wavelengths λ₂₁ to λ_{2N} are wavelength-multiplexed, from the port 11-1-p. The optical switch 1006 outputs the wavelength-multiplexed upstream signal to the transmission line 50-2-q from the output destination port 11-2-q. The WDM device 97 receives the wavelength-multiplexed signal from the transmission line 50-2-q and wavelength-demultiplexes the wavelength-multiplexed upstream optical signal. The WDM device 97 outputs the upstream optical signal of the wavelength λ₂ₙ to a transmission line 50-2-q-n connected to the link end #n. In this way, the optical signal of the wavelength λ₂ₙ transmitted by the subscriber terminal 40-p-n is transmitted to the link end #n.

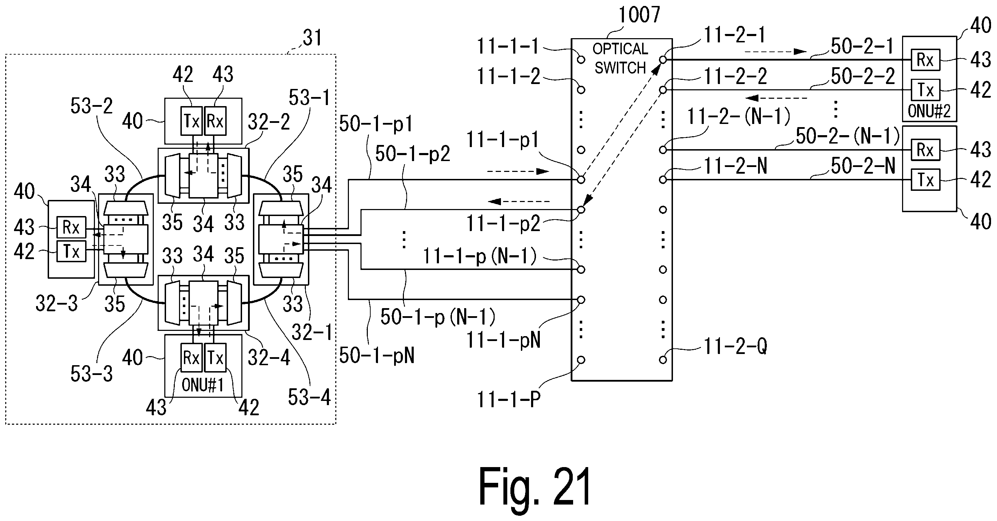

Fig. 21 is a diagram illustrating a loop access topology. The optical switches 10a to 10h described above can each be used as an optical switch 1007. Some ports 11-1-p1 to 11-1-pN of the optical switch 1007 (where p1 < pN, p1 is an integer of 1 or more, and pN is an integer of P or less) are connected to a WDM access ring network 31 that transmits optical signals of multiple wavelengths. Optical signals of several wavelengths used in the WDM access ring network 31 are transmitted to a communication destination subscriber terminal 40 or an upper level NW via the optical switch 1007. In the topology illustrated in Fig. 21, no WDM multiplexers/demultiplexers are used, and opposing subscriber terminals 40 are connected and communicate by two transmission lines.

The WDM access ring network 31 is a network in which R add/drop nodes 32 are connected by transmission lines 53. Fig. 21 is an example in which R = 4. R add/drop nodes 32 will be referred to as add/drop nodes 32-1 to 32-R and a transmission line 53 between an add/drop node 32-r and an add/drop node 32-(r + 1) will be referred to as a transmission line 53-r (where r is an integer of 1 or more and R or less). However, an add/drop node 32-(R + 1) is regarded as the add/drop node 32-1. The add/drop node 32-1 is connected to ports 11-1-pn of the optical switch 1007 via transmission lines 50-1-pn (where pn is an integer of p1 or more and pN or less).

Each add/drop node 32 includes a demultiplexing unit 33, an optical switch 34, and a multiplexing unit 35. The demultiplexing unit 33 of the add/drop node 32-r (where r is an integer of 2 or more and R or less) demultiplexes a wavelength-multiplexed optical signal input from a transmission line 53-(r - 1) and outputs optical signals obtained through the demultiplexing to the optical switch 34. The optical switch 34 is connected to one or more subscriber terminals 40. Fig. 21 illustrates only one subscriber terminal 40 connected to each optical switch 34. The optical switch 34 drops an optical signal of a wavelength corresponding to its node among the optical signals input from the demultiplexing unit 33. An optical receiver 43 of the subscriber terminal 40 receives the optical signal dropped by the optical switch 34. The optical switch 34 receives an optical signal transmitted by an optical transmitter 42 of the subscriber terminal 40 and outputs the received optical signal and optical signals that have not been dropped to the multiplexing unit 35. The multiplexing unit 35 of the add/drop node 32-r multiplexes optical signals input from the optical switch 34 and outputs the multiplexed optical signal to the transmission line 53-r. The optical switch 34 of the add/drop node 32-1 drops optical signals of wavelengths corresponding to the add/drop node 32-1 among the optical signals demultiplexed by the demultiplexing unit 33 and inputs optical signals of wavelengths to transmission lines 50-1-pn₁ (where pn₁ = 1, 3, 5, ..., p(N - 1)). The ports 11-1-pn₁ of the optical switch 1007 receive optical signals dropped by the add/drop node 32-1 from the transmission lines 50-1-pn₁. The optical switch 34 of the add/drop node 32-1 receives optical signals, which the optical switch 1007 outputs from ports 11-1-pn₂ (where pn₂ = 2, 4, 6, ..., pN), from transmission lines 50-1-pn₂ and outputs the received optical signals and optical signals that have not been dropped to the multiplexing unit 35.

Thus, an ONU #1 which is a subscriber terminal 40 connected to the add/drop node 32-4 of the WDM access ring network 31 and an ONU #2 which is a subscriber terminal 40 connected to ports 11-2-1 and 11-2-2 of the optical switch 1007 communicate as follows.

The ONU #1 transmits an optical signal of a wavelength λ₁ to the add/drop node 32-4. The multiplexing unit 35 of the add/drop node 32-4 multiplexes the optical signal of the wavelength λ₁ received by the optical switch 34 and optical signals not dropped by the optical switch 34 and outputs the multiplexed optical signal to the add/drop node 32-1. The optical switch 34 of the add/drop node 32-1 drops the optical signal of the wavelength λ₁ demultiplexed by the demultiplexing unit 33 and outputs optical signals that have not been dropped to the multiplexing unit 35. The port 11-1-p1 of the optical switch 1007 receives the optical signal of the wavelength λ₁ dropped by the add/drop node 32-1 from the transmission line 50-1-p1. The optical switch 1007 outputs the optical signal of the wavelength λ₁ received from the port 11-1-p1 from the port 11-2-1. The optical receiver 43 of the ONU #2 receives the optical signal of the wavelength λ₁ transmitted through the transmission line 50-2-1.

The optical transmitter 42 of the ONU #2 transmits a downstream optical signal of a wavelength λ₂. The port 11-2-2 of the optical switch 1007 receives the optical signal transmitted by the ONU #2 from the transmission line 50-2-2. The optical switch 1007 outputs the downstream optical signal of the wavelength λ₂ received from the port 11-2-2 from the port 11-1-p2. The optical switch 34 of the add/drop node 32-1 receives the optical signal of the wavelength λ₂ output by the optical switch 1007 from the transmission line 50-1-p2 and outputs the received optical signal and optical signals that have not been dropped to the multiplexing unit 35. The optical signal of the wavelength λ₂ is input to the add/drop node 32-4 via the add/drop nodes 32-2 and 32-3. The optical switch 34 of the add/drop node 32-4 drops the optical signal of the wavelength λ₂. The optical receiver 43 of the ONU #1 receives the optical signal of the wavelength λ₂ dropped by the add/drop node 32-4.

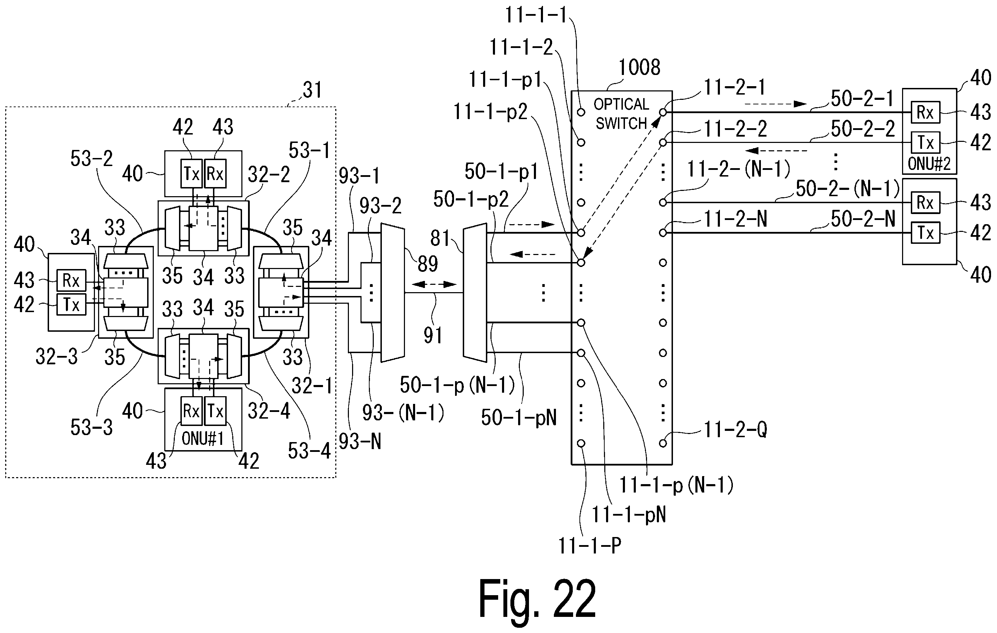

Fig. 22 is a diagram illustrating a loop access topology using WDM multiplexers/demultiplexers. The optical switches 10a to 10h described above can each be used as an optical switch 1008. The access topology illustrated in Fig. 22 differs from the access topology illustrated in Fig. 21 in that the optical switch 1008 and the WDM access ring network 31 are connected via a WDM device 81 and a WDM device 89.

The add/drop node 32-1 of the WDM access ring network 31 and the WDM device 89 are connected by transmission lines 93-1 to 93-N (where N is an integer of 2 or more). The WDM device 89 receives upstream optical signals of wavelengths λₙ₁ from transmission lines 93-n₁ (where n₁ = 1, 3, 5, ..., N - 1) and outputs a multiplexed signal, into which the received upstream optical signals are multiplexed, to a multiplexed communication transmission line 91. The WDM device 89 demultiplexes a wavelength-multiplexed downstream optical signal received via the multiplexed communication transmission line 91 and inputs the demultiplexed downstream optical signals of the wavelengths λₙ₂ to the transmission lines 93-n₂ (where n₂ = 2, 4, 6, ..., N).

The WDM device 81 demultiplexes the wavelength-multiplexed upstream optical signal received via the multiplexed communication transmission line 91 and inputs the demultiplexed upstream optical signals of the wavelengths λₙ₁ to the ports 11-1-n₁. The WDM device 81 receives downstream optical signals of wavelengths λₙ₂ output from the ports 11-1-pn₂, multiplexes the received downstream signals, and outputs the multiplexed signal to the multiplexed communication transmission line 91.

Thus, ONU #1 which is a subscriber terminal 40 connected to the add/drop node 32-4 of the WDM access ring network 31 and ONU #2 which is a subscriber terminal 40 connected to ports 11-2-1 and 11-2-2 of the optical switch 1008 communicate as follows. A case where N = 18 will be described as an example.

The ONU #1 transmits an upstream optical signal of a wavelength λ₁ to the add/drop node 32-4. Other ONUs also transmit upstream optical signals of wavelengths λ₃ and λ₅ to the add/drop node 32-4. The optical switch 34 of the add/drop node 32-4 receives the optical signals of the wavelengths λ₁, λ₃, and λ₅. The multiplexing unit 35 of the add/drop node 32-4 multiplexes the optical signals of the wavelengths λ₁, λ₃, and λ₅ received by the optical switch 34 and optical signals not dropped by the optical switch 34 and outputs the multiplexed optical signal to the add/drop node 32-1. The optical switch 34 of the add/drop node 32-1 drops the optical signals of the wavelengths λ₁, λ₃, λ₅, ..., λ₁₇ demultiplexed by the demultiplexing unit 33 and outputs optical signals that have not been dropped to the multiplexing unit 35. The WDM device 89 outputs a multiplexed signal, into which the upstream optical signals of the wavelengths λ₁, λ₃, λ₅, ..., λ₁₇ received from the transmission lines 93-1, 93-3, 93-5, ..., 93-17 are multiplexed, to the multiplexed communication transmission line 91.

The WDM device 81 receives the wavelength-multiplexed upstream optical signal from the multiplexed communication transmission line 91 and wavelength-demultiplexes the wavelength-multiplexed upstream optical signal. The WDM device 81 transmits the upstream optical signals of the wavelengths λ₁, λ₃, λ₅, ..., λ₁₇ to the ports 11-1-p1, 11-1-p3, 11-1-p5, ..., 11-1-p17 of the optical switch 1008, respectively. The optical switch 1008 outputs the upstream optical signal of the wavelength λ₁ from the output destination port 11-2-1. The optical receiver 43 of the ONU #2 receives the optical signal of the wavelength λ₁ transmitted through the transmission line 50-2-1.

The optical transmitter 42 of the ONU #2 transmits a downstream optical signal of a wavelength λ₂. The port 11-2-2 of the optical switch 1008 receives the optical signal transmitted by the ONU #2 from the transmission line 50-2-2. The optical switch 1008 outputs the downstream optical signal of the wavelength λ₂ received from the port 11-2-2 from the port 11-1-p2. The optical switch 1008 outputs the downstream optical signals of the wavelengths λ₄, λ₆, ..., λ₁₈ received respectively from the ports 11-2-4, 11-2-6, ..., 11-2-18, to the ports 11-1-p4, 11-2-p6, ..., 11-2-p18.

The WDM device 81 outputs a wavelength-multiplexed signal, into which optical signals of the wavelengths λ₂, λ₄, λ₆, ..., λ₁₈ output from the ports 11-1-p2, 11-1-p4, 11-1-p6, ..., 11-1-p18 are multiplexed, to the multiplexed communication transmission line 91. The WDM device 89 demultiplexes the wavelength-multiplexed signal transmitted through the multiplexed communication transmission line 91 and outputs downstream optical signals of the wavelengths λ₂, λ₄, λ₆, ..., And λ₁₈ obtained through the demultiplexing respectively to the transmission lines 93-2, 93-4, 93-6, ..., 93-18. The optical switch 34 of the add/drop node 32-1 receives the optical signals of the wavelengths λ₂, λ₄, λ₆, ..., λ₁₈ output by the WDM device 89 respectively from the transmission lines 93-2, 93-4, 93-6, ..., 93-18 and outputs the received optical signals and optical signals that have not been dropped to the multiplexing unit 35. The multiplexing unit 35 multiplexes the optical signals input from the optical switch 34 and outputs the multiplexed optical signal to the transmission line 53-1.

The demultiplexing unit 33 of the add/drop node 32-2 demultiplexes the optical signal input from the transmission line 53-1 and outputs the demultiplexed signals to the optical switch 34. The optical switch 34 drops optical signals of wavelengths λ₁₄, λ₁₆, and λ₁₈ corresponding to the add/drop node 32-2. The optical signals of the wavelengths λ₁₄, λ₁₆, and λ₁₈ are transmitted to optical receivers 43 of subscriber terminals 40 corresponding to the wavelengths. The optical switch 34 of the add/drop node 32-2 receives optical signals of wavelengths λ₁₃, λ₁₅, and λ₁₇ transmitted by the optical transmitters 42 of the subscriber terminals 40 and outputs the received optical signals and optical signals that have not been dropped to the multiplexing unit 35. The multiplexing unit 35 multiplexes the optical signals input from the optical switch 34 and outputs the multiplexed optical signal to the transmission line 53-2.

The add/drop node 32-3 operates in the same manner as the add/drop node 32-2. However, the optical switch 34 of the add/drop node 32-3 drops optical signals of wavelengths λ₈, λ₁₀, and λ₁₂ corresponding to the add/drop node 32-3 and receives optical signals of wavelengths λ₇, λ₉, and λ₁₁. The demultiplexing unit 33 of the add/drop node 32-4 demultiplexes a wavelength-multiplexed optical signal input from the transmission line 53-3 and outputs the demultiplexed signals to the optical switch 34. The optical switch 34 of the add/drop node 32-4 drops optical signals of wavelengths λ₂, λ₄, and λ₆ corresponding to the add/drop node 32-4. The optical receiver 43 of the ONU #1 receives the optical signal of the wavelength λ₂ dropped by the optical switch 34 of the add/drop node 32-4.

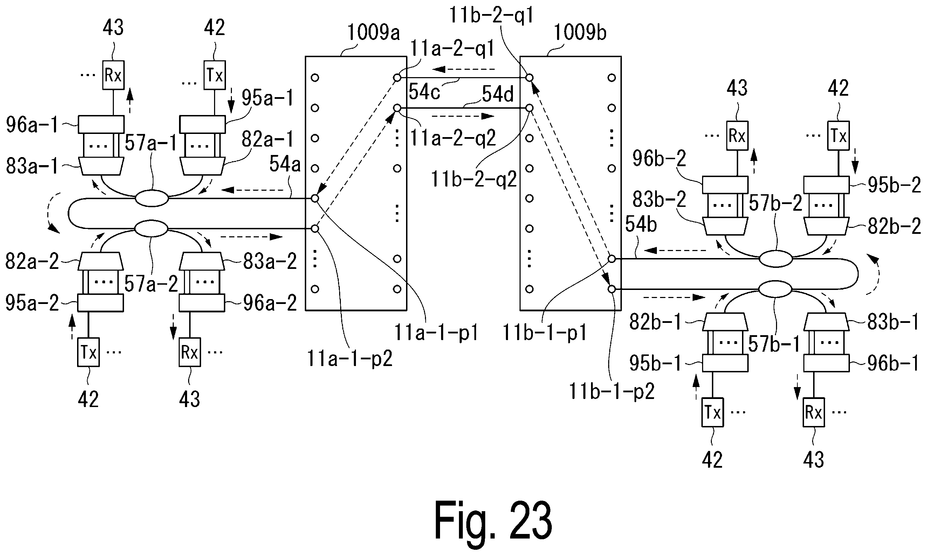

Fig. 23 is a diagram illustrating an access topology forming one loop on two access planes. The optical switches 10a to 10h described above can be used as optical switches 1009a and 1009b. The optical switch 1009a and optical switch 1009b will be collectively referred to as optical switches 1009. Two ports 11-1 of each optical switch 1009 are connected to both ends of one transmission line 54. One or more power splitters 57 are connected to the transmission line 54. Each power splitter 57 is connected to optical transmitters 42 of one or more subscriber terminals 40 via a multiplexer 82 and an optical switch 95 and connected to optical receivers 43 of the one or more subscriber terminals 40 via a demultiplexer 83 and an optical switch 96. Subscriber terminals 40 transmit and receive optical signals of different wavelengths.

A transmission line 54 connected to the optical switch 1009a will be referred to as a transmission line 54a, two ports 11-1 connected to the transmission line 54a will be referred to as ports 11a-1-p1 and 11a-1-p2, a transmission line 54 connected to the optical switch 1009b will be referred to as a transmission line 54b, and two ports 11-1 connected to the transmission line 54b will be referred to as ports 11b-1-p1 and 11b-1-p2. N power splitters 57 connected to the transmission line 54a will be referred to as power splitters 57a-1 to 57a-N (where N is an integer of 1 or more) and M power splitters 57 connected to the transmission line 54b will be referred to as power splitters 57b-1 to 57b-M (where M is an integer of 1 or more). A multiplexer 82 and a demultiplexer 83 connected to a power splitter 57a-n (where n is an integer of 1 or more and N or less) will be referred to as a multiplexer 82a-n and a demultiplexer 83a-n, respectively, and a multiplexer 82 and a demultiplexer 83 connected to a power splitter 57b-m (where m is an integer of 1 or more and M or less) will be referred to as a multiplexer 82b-m and a demultiplexer 83b-m, respectively. An optical switch 95 connected to a multiplexer 82a-n will be referred to as an optical switch 95a-n and an optical switch 96 connected to a demultiplexer 83a-n will be referred to as an optical switch 96a-n. An optical switch 95 connected to a multiplexer 82b-m will be referred to as an optical switch 95b-m and an optical switch 96 connected to a demultiplexer 83b-m will be referred to as an optical switch 96b-m.

The optical switch 1009a and the optical switch 1009b are connected by a transmission line 54c and a transmission line 54d. A port 11-2 of the optical switch 1009a connected to the transmission line 54c will be referred to as a port 11a-2-q1 and a port 11-2 of the optical switch 1009a connected to the transmission line 54d will be referred to as a port 11a-2-q2. A port 11-2 of the optical switch 1009b connected to the transmission line 54c will be referred to as a port 11b-2-q1 and a port 11-2 of the optical switch 1009b connected to the transmission line 54d will be referred to as a port 11b-2-q2.

In the above configuration, an optical switch 95b-m outputs optical signals of different wavelengths transmitted by optical transmitters 42 of subscriber terminals 40 to ports of a multiplexer 82b-m corresponding to the wavelengths. The multiplexer 82b-m receives the optical signals of different wavelengths transmitted by the optical transmitters 42 of the subscriber terminals 40 via the optical switch 95b-m and outputs a wavelength-multiplexed optical signal into which the received optical signals are multiplexed. A power splitter 57b-m multiplexes the wavelength-multiplexed optical signal output by the multiplexer 82b-m with a wavelength-multiplexed optical signal that is transmitted through the transmission line 54b in a direction from the port 11b-1-p2 to the port 11b-1-p1 and outputs the multiplexed optical signal.

The port 11b-1-p1 of the optical switch 1009b receives the wavelength-multiplexed optical signal from the transmission line 54b and the port 11b-2-q1 thereof outputs the received optical signal. The port 11a-2-q1 of the optical switch 1009a receives the wavelength-multiplexed optical signal output from the port 11b-2-q1 of the optical switch 1009b from the transmission line 54c. The optical switch 1009a outputs the wavelength-multiplexed optical signal input from the port 11a-2-q1 to the transmission line 54a from the port 11a-1-p1.

A power splitter 57a-n splits off the wavelength-multiplexed optical signal that is transmitted through the transmission line 54a in a direction from the port 11a-1-p1 to the port 11a-1-p2 and outputs the split wavelength-multiplexed optical signal to a demultiplexer 83a-n. The demultiplexer 83a-n demultiplexes the wavelength-multiplexed optical signal received from the power splitter 57a-n and outputs the demultiplexed optical signals to an optical switch 96a-n from ports corresponding to their wavelengths. The optical switch 96a-n outputs the optical signals of the wavelengths input from the demultiplexer 83a-n to optical receivers 43 of subscriber terminals 40 that are to receive optical signals of the wavelengths.

On the other hand, an optical switch 95a-n outputs optical signals of different wavelengths transmitted by optical transmitters 42 of subscriber terminals 40 to ports of a multiplexer 82a-n corresponding to the wavelengths. The multiplexer 82a-n receives the optical signals of different wavelengths transmitted by the optical transmitters 42 of the subscriber terminals 40 via the optical switch 95a-n and outputs a wavelength-multiplexed optical signal into which the received optical signals are multiplexed. A power splitter 57a-n multiplexes the wavelength-multiplexed optical signal output by the multiplexer 82a-n with a wavelength-multiplexed optical signal that is transmitted through the transmission line 54a in a direction from the port 11a-1-p1 to the port 11a-1-p2.

The port 11a-1-p2 of the optical switch 1009a receives the wavelength-multiplexed optical signal from the transmission line 54a and the port 11a-2-q2 thereof outputs the received optical signal. The port 11b-2-q2 of the optical switch 1009b receives the wavelength-multiplexed optical signal output from the port 11a-2-q2 of the optical switch 1009a from the transmission line 54d. The optical switch 1009b outputs the wavelength-multiplexed optical signal input from the port 1 1b-2-q2 to the transmission line 54b from the port 11b-1-p2.

A power splitter 57b-m splits off the wavelength-multiplexed optical signal that is transmitted through the transmission line 54b in a direction from the port 11b-1-p2 to the port 11b-1-p1 and outputs the split wavelength-multiplexed optical signal to a demultiplexer 83b-m. The demultiplexer 83b-m demultiplexes the wavelength-multiplexed optical signal received from the power splitter 57b-m and outputs the demultiplexed optical signals to the optical switch 96b-m from ports corresponding to their wavelengths. The optical switch 96b-m outputs the optical signals of the wavelengths input from the demultiplexer 83b-m to optical receivers 43 of subscriber terminals 40 that are to receive optical signals of the wavelengths.

Although Fig. 23 illustrates the case where optical signals are transmitted counterclockwise, optical signals may also be transmitted clockwise and two left and right cores may be paired for redundancy.

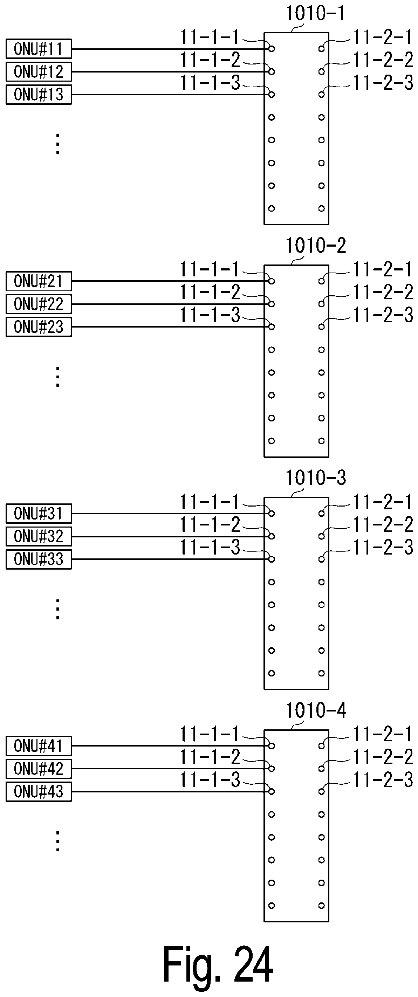

Next, connection configurations when the number of user connections increases will be described. Fig. 24 is a diagram illustrating an example in which optical switch scalability is required. Fig. 24 illustrates N optical switches 1010-1 to 1010-N (where N is an integer of 1 or more). The optical switches 10a to 10h described above can be used as the optical switches 1010-1 to 1010-N. Fig. 24 illustrates an example in which N = 4. In Fig. 24, an ONU #np which is a subscriber terminal 40 is connected to a port 11-1-p of an optical switch 1010-n (where n is an integer of 1 or more and N or less). A port 11-2-q of the optical switch 1010-n is connected to an uplink. Uplinks are transmission lines 50-2 connected to an upper level network.

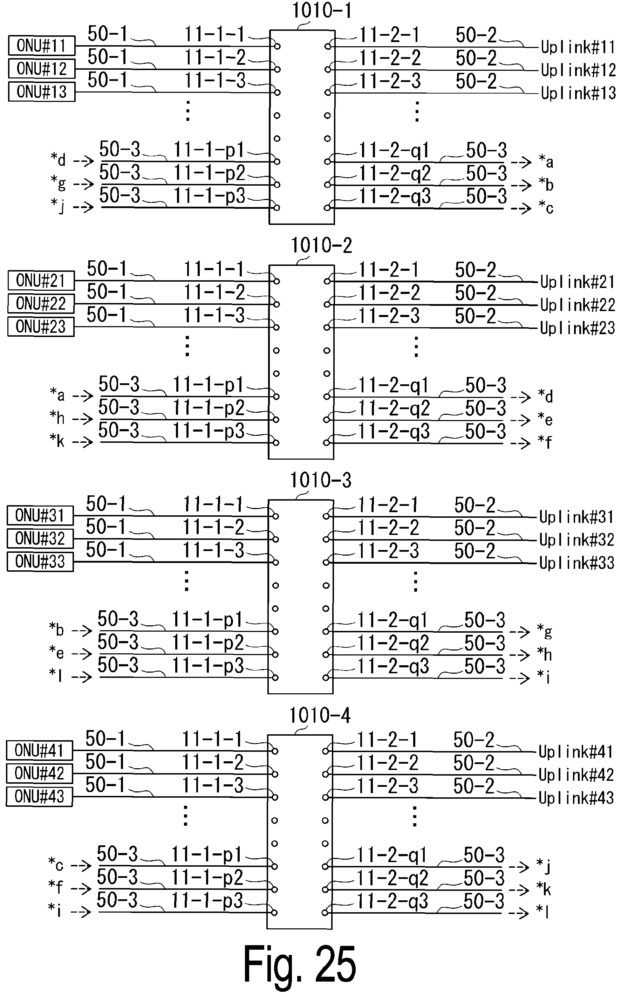

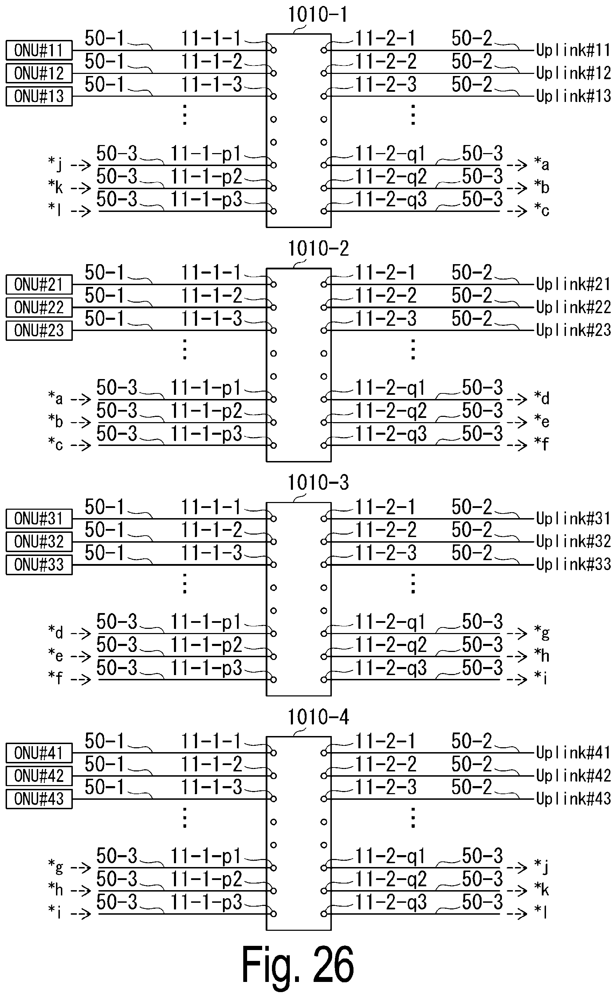

When the number of users becomes great and thus the number of ONUs increases, the scale that the optical switch 1010 can accommodate may be exceeded. Even in such a case, through a connection configuration as illustrated in Fig. 25 or 26, the present embodiment realizes the same functions, for example, a connection with an arbitrary uplink selected and an optical return to an arbitrary subscriber terminal, as when the number of users is small.

Fig. 25 is a diagram illustrating an example of optical switch scalability with a mesh configuration. Some ports 11-1 of an optical switch 1010 are connected to ONUs by transmission lines 50-1 and some ports 11-2 are connected to uplink transmission lines 50-2. Further, some ports 11-1 of the optical switch 1010 and some ports 11-2 of another optical switch 1010 are connected by transmission lines 50-3. In Fig. 25, one optical switch 1010 is connected to all other optical switches 1010.

A plurality of ports 11-1 of an optical switch 1010 will be referred to as ports 11-1-1, 11-1-2, 11-1-3, ..., 11-1-p1, 11-1-p2, and 11-1-p3. A plurality of ports 11-2 of an optical switch 1010 will be referred to as ports 11-2-1, 11-2-2, 11-2-3, ..., 11-2-q1, 11-2-q2, and 11-2-q3.

In Fig. 25, ports 11-1-1, 11-1-2, 11-1-3, ... of an optical switch 1010-n (where n is an integer of 1 or more and N or less) are connected to ONU #n1, ONU #n2, ONU #n3, .... Ports 11-2-1, 11-2-2, 11-2-3, ... of the optical switch 1010-n (where n is an integer of 1 or more and N or less) are connected to transmission lines 50-2 of an uplink #n1, an uplink #n2, an uplink #n3, ... Further, the optical switch 1010-n is connected to ports 11-1 of all other optical switches 1010-j through some ports 11-2 (where j ≠ n and j is an integer of 1 or more and N or less). For example, the port 11-2-q1 of the optical switch 1010-1 is connected to the port 11-1-p1 of the optical switch 1010-2. The port 11-2-q2 of the optical switch 1010-1 is connected to the port 11-1-p1 of the optical switch 1010-3. The port 11-2-q3 of the optical switch 1010-1 is connected to the port 11-1-p1 of the optical switch 1010-4. Further, the port 11-2-q1 of the optical switch 1010-2 is connected to the port 11-1-p1 of the optical switch 1010-1. The port 11-2-q2 of the optical switch 1010-2 is connected to the port 11-1-p2 of the optical switch 1010-3. The port 11-2-q3 of the optical switch 1010-2 is connected to the port 11-1-p2 of the optical switch 1010-4. The optical switch 1010-n may also be connected to ports 11-1 of some of all other optical switches 1010-j (where j ≠ n and j is an integer of 1 or more and N or less) through some ports 11-2.

For example, when the ONU #11 transmits an upstream optical signal of a wavelength λ₁ addressed to an uplink #41, the optical switch 1010-1 outputs the optical signal input from the port 11-1-1 from the port 11-2-q3. The port 11-1-p1 of the optical switch 1010-4 receives the optical signal of the wavelength λ₁ output from the port 11-2-q3 of the optical switch 1010-1 and the port 11-2-1 thereof outputs the received signal.

When the ONU #12 transmits an upstream optical signal of a wavelength λ₂ addressed to the ONU #31, the optical switch 1010-1 outputs the optical signal input from the port 11-1-2 from the port 11-2-q2. The port 11-1-p1 of the optical switch 1010-3 receives the optical signal output from the port 11-2-q2 of the optical switch 1010-1. The optical switch 1010-3 performs the same return communication of the optical signal of the wavelength λ₂ input from the port 11-1-p1 as that which the optical switch 10b illustrated in Fig. 3 performs and outputs the optical signal from the port 11-1-1.

Fig. 25 illustrates only upstream optical signals. When bidirectional, upstream and downstream communication is performed, WDM filters which separate and transmit upstream optical signals and downstream optical signals are provided on the transmission lines 50-1, 50-2, and 50-3. Then, for downstream optical signals, the connection is made in the opposite direction from that described above for the upstream signals.

Fig. 26 is a diagram illustrating another example of optical switch scalability in a cascade configuration. The configuration illustrated in Fig. 26 differs from the configuration illustrated in Fig. 25 in that an optical switch 1010-n (where n is an integer of 1 or more and N or less) is connected to ports 11-1 of another optical switch 1010-(n + 1) through some ports 11-2. Here, it is assumed that the optical switch 1010-(N + 1) is the optical switch 1010-1. Thus, a plurality of the optical switches 1010 are connected in series.

In Fig. 26, ports 11-1-1, 11-1-2, 11-1-3, ... of an optical switch 1010-n (where n is an integer of 1 or more and N or less) are connected to ONU #n1, ONU #n2, ONU #n3, .... Ports 11-2-1, 11-2-2, 11-2-3, ... of the optical switch 1010-n (where n is an integer of 1 or more and N or less) are connected to transmission lines 50-2 of an uplink #n1, an uplink #n2, an uplink #n3, ... Further, a port 11-2-q1 of the optical switch 1010-n is connected to a port 11-1-p1 of the optical switch 1010-(n + 1). A port 11-2-q2 of the optical switch 1010-n is connected to a port 11-1-p2 of the optical switch 1010-(n + 1). A port 11-2-q3 of the optical switch 1010-n is connected to a port 11-1-p3 of the optical switch 1010-(n + 1).

For example, when the ONU #11 transmits an upstream optical signal of a wavelength λ₁ addressed to an uplink #41, the optical switch 1010-1 outputs an optical signal input from the port 11-1-1 from the port 11-2-q1. The port 11-1-p1 of the optical switch 1010-2 receives the optical signal output from the port 11-2-q1 of the optical switch 1010-1 and the optical signal is output from the port 11-2-q1 thereof according to the wavelength λ₁. The port 11-1-p1 of the optical switch 1010-3 receives the optical signal output from the port 11-2-q1 of the optical switch 1010-2 and the optical signal is output from the port 11-2-q 1 thereof according to the wavelength λ₁. The port 11-1-p1 of the optical switch 1010-4 receives the optical signal output from the port 11-2-q1 of the optical switch 1010-3 and the optical signal is output from the port 11-2-1 thereof according to the wavelength λ₁.

When the ONU #12 transmits an upstream optical signal of a wavelength λ₂ addressed to the ONU #31, the optical switch 1010-1 outputs an optical signal input from the port 11-1-2 from the port 11-2-q2. The port 11-1-p2 of the optical switch 1010-2 receives the optical signal output from the port 11-2-q2 of the optical switch 1010-1. The optical switch 1010-2 outputs the optical signal input from the port 11-1-p2 from the port 11-2-q2 according to the wavelength λ₂. The port 11-1-p2 of the optical switch 1010-3 receives the optical signal output from a port 11-2-q2 of the optical switch 1010-2. The optical switch 1010-3 performs the same return communication of the optical signal input from the port 11-1-p2 according to the wavelength λ₂ as that which the optical switch 10b illustrated in Fig. 3 performs and outputs the optical signal from the port 11-1-1.

Fig. 26 illustrates only upstream optical signals. When bidirectional, upstream and downstream communication is performed, WDM filters which separate and transmit upstream optical signals and downstream optical signals are provided on the transmission lines 50-1, 50-2, and 50-3. Then, for downstream optical signals, the connection is made in the opposite direction from that described above for the upstream optical signals.

In each of the following embodiments, examples of an optical access system using the optical switch having the functions described above will be described.

### First Embodiment

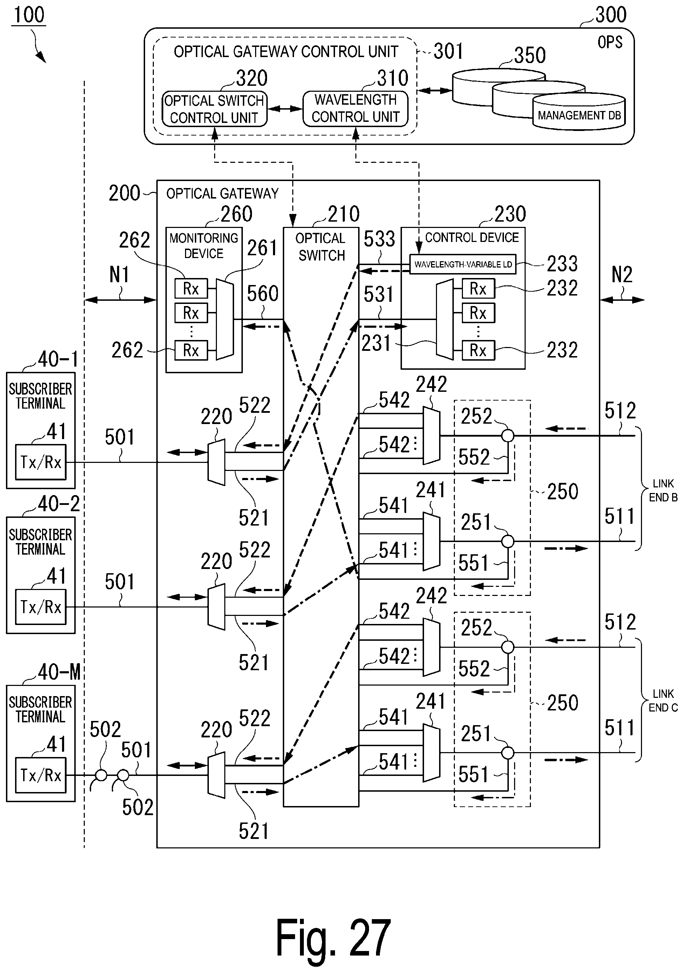

Fig. 27 is a diagram illustrating an exemplary configuration of an optical access system 100. The optical access system 100 includes an optical gateway (GW) 200 and an operation system (OPS) 300. By the optical access system 100, subscriber terminals 40 are communicatively connected to an upper level network such as the optical communication network 30 illustrated in Fig. 1.

Subscriber terminals 40 are devices on the optical subscriber side. Subscriber terminals 40 are connected to the optical gateway 200 via transmission lines 501. Each transmission line 501 is, for example, an optical fiber. The optical gateway 200 is an apparatus in a communication station. The subscriber terminals 40 and the optical gateway 200 are connected, for example, via transmission lines 501 or power splitters 502 as indicated by reference sign N1. A network configuration for connecting the subscriber terminals 40 to the optical gateway 200 may be of various network topologies such as point-to-point (P to P), a PON configuration, and a bus configuration. An example may be a configuration in which transmission lines 501 are provided with power splitters 502 or the like, such that a plurality of subscriber terminals 40 are connected to each transmission line 501. The optical gateway 200 is connected to other stations, a core network, or the like via transmission lines 511 and the transmission lines 512. The transmission lines 511 and the transmission lines 512 are each, for example, an optical fiber. The transmission lines 511 transmit upstream signals and the transmission lines 512 transmit downstream signals. The transmission lines 511 and the transmission lines 512 are each an example of a multiplexed communication transmission line that transmits a wavelength-multiplexed optical signal. A connection from the optical gateway 200 to another station or the core network indicated by reference sign N2 is provided, for example, by a transmission line 511 or 512 which is an optical fiber. Here, connections between link ends are made to form a full mesh. The present embodiment will be described with reference to an example in which the optical gateway 200 is installed in a station of a link end A and connected to an optical communication apparatus set in a station of a link end B and an optical communication apparatus installed in a station of a link end C via an optical communication network 30 or the like. The optical communication apparatuses of the link ends B and C to which the optical gateway 200 is connected may be optical gateways 200.

The subscriber terminals 40 are connected to the optical gateway 200 via transmission lines 501. Each subscriber terminal 40 includes an optical transceiver 41. The optical transceiver 41 is a wavelength-variable optical transceiver. The optical transceiver 41 is, for example, an optical transceiver that converts an optical signal and an electrical signal into each other. Each subscriber terminal 40 can select and set its own wavelength in the optical transceiver 41 according to a transmission/reception destination. The subscriber terminal 40 sets the wavelength to be used in the optical transceiver 41 according to an instruction received from the optical gateway 200. M subscriber terminals 40 connected to the optical gateway 200 (where M is an integer of 1 or more) will be referred to as subscriber terminals 40-1 to 40-M.

The optical gateway 200 includes an optical switch 210, wavelength multiplexers/demultiplexers 220, a control device 230, multiplexers 241 and demultiplexers 242, splitting portions 250, and a monitoring device 260. The splitting portions 250 and the monitoring device 260 are examples of a monitoring unit.

The optical switch 210 has a plurality of input/output ports (hereinafter referred to as "ports") and connects two or more ports. The optical switch 210 can freely switch optical paths between ports. Ports for receiving or outputting upstream signals will be referred to as upstream ports and ports for receiving or outputting downstream signals will be referred to as downstream ports. Each port of the optical switch 210 is connected to a transmission line.

Each wavelength multiplexer/demultiplexer 220 performs upstream and downstream multiplexed separation to separate an upstream signal and a downstream signal according to the wavelength. The wavelength multiplexer/demultiplexer 220 receives an upstream optical signal transmitted by a subscriber terminal 40 from a transmission line 501 and outputs an upstream optical signal to the optical switch 210 via a transmission line 521. The wavelength multiplexer/demultiplexer 220 also receives a downstream optical signal output by the optical switch 210 from a transmission line 522 and outputs the downstream optical signal to the subscriber terminal 40 via the transmission line 501.

The control device 230 is connected to an upstream port and a downstream port to which no subscriber terminals 40 are connected among the ports of the optical switch 210. The upstream port of the optical switch 210 is connected to a transmitting port of the control device 230 by a transmission line 531. The downstream port of the optical switch 210 is connected to a transmitting port of the control device 230 by a transmission line 533. The control device 230 includes a wavelength demultiplexer 231, optical receivers (Rx) 232 for wavelength channels, and a wavelength-variable transmitter 233. The wavelength demultiplexer 231 is, for example, arrayed waveguide gratings (AWG). The wavelength demultiplexer 231 demultiplexes light, which has been input to its receiving port via the transmission line 540, into light beams corresponding to the wavelengths. The wavelength demultiplexer 231 outputs the demultiplexed light beams to the optical receivers 232 that are to receive optical signals of the wavelengths of the light beams. The wavelength-variable transmitter 233 includes a wavelength-variable laser diode (LD) that generates light of a variable wavelength. The wavelength-variable transmitter 233 transmits an optical signal of a variable wavelength by using light generated by the wavelength-variable laser diode. The wavelength-variable transmitter 233 outputs an optical signal using the generated light from the transmitting port to the transmission line 533.

Each multiplexer 241 multiplexes upstream optical signals of different wavelengths that the optical switch 210 has output from a plurality of transmission lines 541 and outputs the multiplexed optical signal to a transmission line 511 connected to another link end. Each demultiplexer 242 receives an optical signal transmitted from another link end from a transmission line 512 and wavelength-demultiplexes the received downstream optical signal. The demultiplexer 242 inputs the demultiplexed downstream optical signals to the optical switch 210 via a plurality of transmission lines 542 connected to upstream ports corresponding to the wavelengths of the optical signals.

A splitting portion 250 is provided on transmission lines 511 and 512. The splitting portion 250 includes power splitters 251 and 252. The power splitter 251 splits off an upstream optical signal transmitted through the transmission line 511 and inputs the split upstream optical signal to the optical switch 210 via a transmission line 551. The power splitter 252 splits off a downstream optical signal transmitted through the transmission line 512 and inputs the split downstream optical signal to the optical switch 210 via a transmission line 552.

The monitoring device 260 includes a wavelength demultiplexer 261 and optical receivers (Rx) 262 for wavelengths. The wavelength demultiplexer 261 is connected to the optical switch 210 via a transmission line 560. The optical switch 210 outputs an optical signal received from a port connected to the transmission line 541 or 542 to a port connected to the transmission line 560. In this way, the wavelength demultiplexer 261 receives an optical signal split off by the splitting portion 250. The wavelength demultiplexer 261 demultiplexes the received optical signal into signals corresponding to the wavelengths. The wavelength demultiplexer 261 outputs the demultiplexed light beams to the optical receivers 262 that are to receive optical signals of the wavelengths of the light beams. The monitoring device 260 monitors communication states involving transmission and reception of the subscriber terminals 40 based on optical signals received by the optical receivers 262.

The OPS 300 includes an optical gateway control unit 301 and a management database (DB) 350. The optical gateway control unit 301 is connected to the optical gateway 200. The optical gateway control unit 301 includes a wavelength control unit 310 and an optical switch control unit 320. The wavelength control unit 310 stores information indicating the wavelength of light used by each user (or each service). The wavelength control unit 310 dynamically assigns each user a wavelength to be used by the user with reference to this information. The wavelength control unit 310 may be installed in a building different from that of the optical gateway 200 and may be connected to the optical switch 210 or the optical switch control unit 320 via a network. By sharing each piece of connection information, the wavelength control unit 310 manages and controls information on which user is connected to which port of the optical switch 210 and which wavelength is being used in real time.

The optical gateway control unit 301 is connected to the management database 350. The optical gateway control unit 301 exchanges information on users and used wavelengths with the management database 350. The management database 350 stores used wavelengths and destination information of users. The destination is represented, for example, by a link end A or B. The management database 350 manages information on all users connected to the optical access system 100.

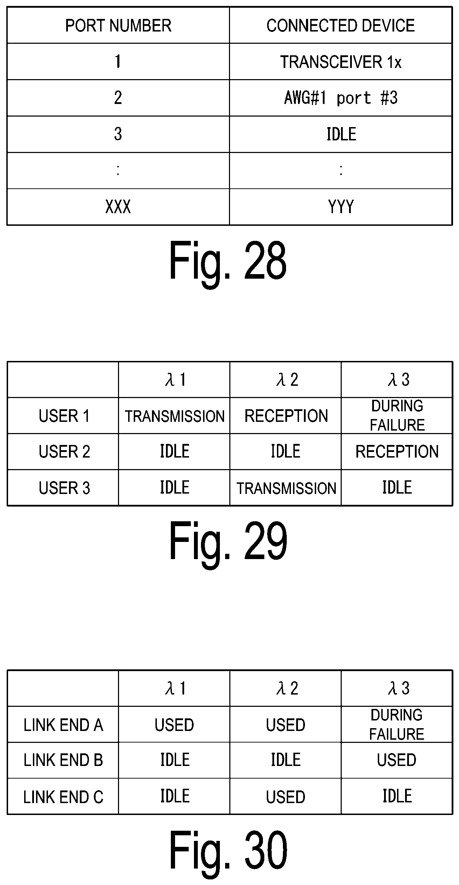

Fig. 28 is a diagram showing an example of a switch connection table. The switch connection table shows the connection destination of each port of the optical switch 210. That is, the port to which an optical signal is input/output can be used as information for identifying a subscriber terminal 40 which is the transmission source or destination of the optical signal, the control device 230, a splitting portion 250, the monitoring device 260, a link end, or the like.

The wavelength table includes a user wavelength table and an inter-station wavelength table.
Fig. 29 is a diagram showing an example of a user wavelength table. The user wavelength table indicates wavelengths used for transmission by users, wavelengths used for reception, idle wavelengths not used for transmission/reception, and wavelengths that cannot be used due to failure. The management database 350 may manage a wavelength table for each transmission line connected to the optical switch 210.

Fig. 30 is a diagram showing an example of an inter-station wavelength table. The inter-station wavelength table indicates wavelengths being used by link ends for communication with other link ends, idle wavelengths not used for communication with other link ends, and wavelengths that cannot be used for communication with other link ends due to failure.

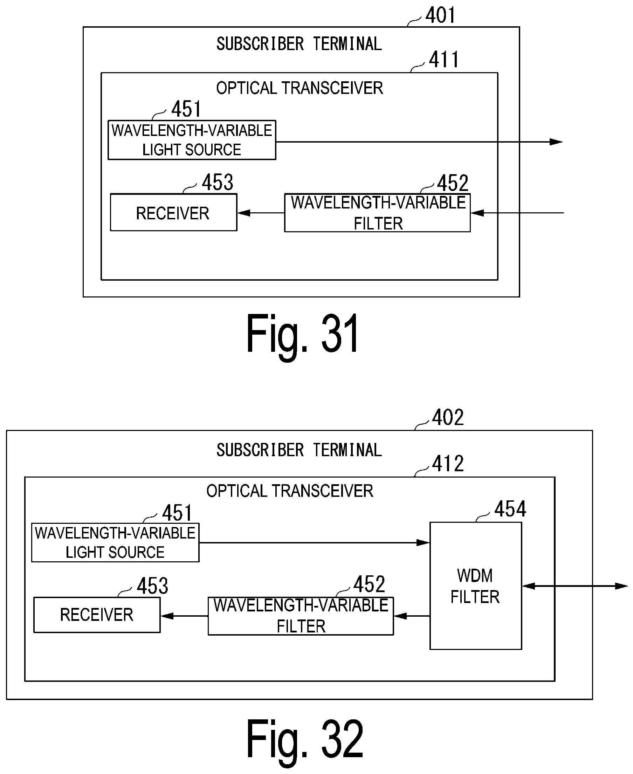

Subsequently, exemplary configurations of a subscriber terminal 40 will be described with reference to Figs. 31 and 32. Fig. 31 is a configuration diagram of a two-core type subscriber terminal 401. A subscriber terminal 401 includes an optical transceiver 411. The optical transceiver 411 includes a wavelength-variable light source 451, a wavelength-variable filter 452, and a receiver 453. The wavelength-variable light source 451 is an example of an optical transmission unit, and the wavelength-variable filter 452 and the receiver 453 are examples of an optical reception unit. The wavelength-variable light source 451 outputs light of a set wavelength. The wavelength set in the wavelength-variable light source 451 is variable. The wavelength-variable filter 452 receives an optical signal from a transmission line 501 and passes light of a set wavelength to the receiver 453. The wavelength set in the wavelength-variable filter 452 is variable. The receiver 453 receives an optical signal passed through the wavelength-variable filter 452. The wavelength-variable light source 451 can output a main signal (or a signal obtained by superimposing a control signal on a main signal), for example, by a direct modulation method. Alternatively, the wavelength-variable light source 451 can further include an external modulator and output a main signal (or a signal obtained by superimposing a control signal on a main signal) using the external modulator. A subscriber terminal 401 on the receiving side may be configured not to use the wavelength-variable filter 452 depending on the configuration of the optical gateway, the multiplexing method, or the like.

Fig. 32 is a configuration diagram of a single-core type subscriber terminal 402. The subscriber terminal 402 includes an optical transceiver 412. The optical transceiver 412 illustrated in Fig. 32 differs from the optical transceiver 411 illustrated in Fig. 31 in that it further includes a WDM filter 454. The WDM filter 454 separates an upstream signal and a downstream signal according to the wavelength. The WDM filter 454 outputs light generated by the wavelength-variable light source 451 to a transmission line 501 and outputs an optical signal input from the transmission line 501 to the wavelength-variable filter 452. The wavelength-variable light source 451 can output a main signal (or a signal obtained by superimposing a control signal on a main signal), for example, by a direct modulation method. Alternatively, similar to the subscriber terminal 401, the subscriber terminal 402 can further include an external modulator and output a main signal (or a signal obtained by superimposing a control signal on a main signal) using the external modulator. A subscriber terminal 402 on the receiving side may be configured not to use the wavelength-variable filter 452 depending on the configuration of the optical gateway, the multiplexing method, or the like.

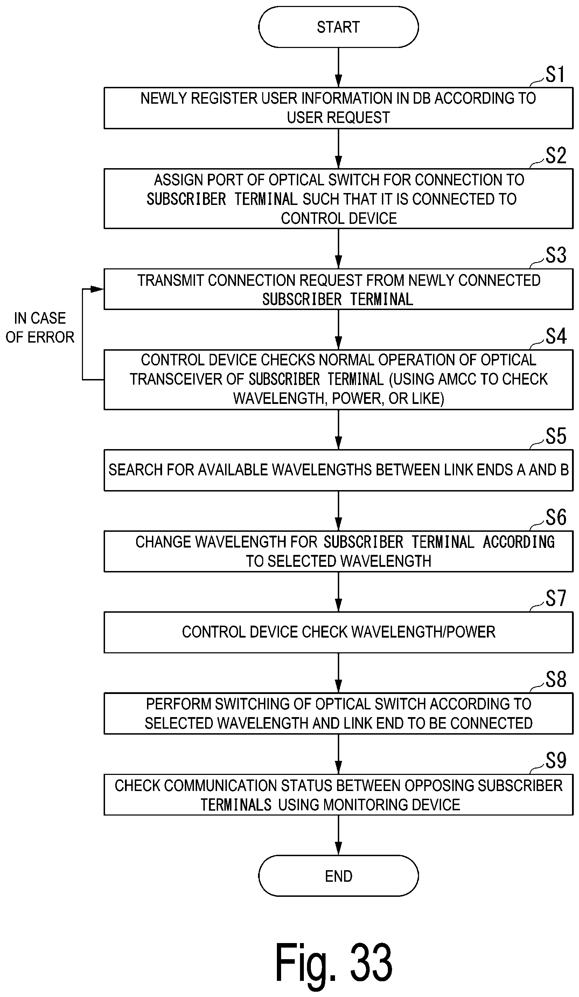

Here, an operation when a subscriber terminal 40 is newly connected will be described. Fig. 33 is a flowchart showing an initial setting process of the optical access system 100 when a new subscriber terminal is connected. An operation of the optical access system 100 when a subscriber terminal 40-1 is newly connected to the optical gateway 200 will be described with reference to Figs. 27 and 33. Here, it is assumed that the control device 230 has confirmed in advance which port of the optical switch 210 is connected to each port of the wavelength demultiplexer 261 (AWG) of the control device 230.

First, a user request is made before a new subscriber terminal 40-1 is connected. For example, by a user request, it is permitted to perform communication between the link ends A and B. Based on the user request, a service provider registers user information, initial destination information, and the like in the management database 350 of the OPS 300 (step S1). The user information is, for example, information that makes it possible to obtain a wavelength that can be used by the optical transceiver 41. The OPS 300 refers to the switch connection table and assigns ports of the optical switch 210 to which the subscriber terminal 40-1 is to be connected from idle ports of the optical switch 210. Here, upstream and downstream ports are assigned. The OPS 300 registers information indicating that the assigned ports are connected to the subscriber terminal 40-1 in the switch connection table (step S2). The optical switch control unit 320 of the OPS 300 controls the optical switch 210 such that optical signals are transmitted and received between the ports assigned to the subscriber terminal 40-1 and ports to which the control device 230 is connected.

When the new subscriber terminal 40-1 is connected, the subscriber terminal 40-1 performs initialization processing and transmits a connection request (a register request) by an optical signal (step S3). The subscriber terminal 40-1 automatically performs the initialization process before or immediately after the connection. A wavelength multiplexer/demultiplexer 220 receives the connection request from a transmission line 501 and outputs the connection request to the optical switch 210 via a transmission line 521. The optical switch 210 transmits the connection request received from a port connected to the subscriber terminal 40-1 to an output port to which the control device 230 is connected. The control device 230 receives the connection request from a receiving port via a transmission line 531. The control device 230 analyzes the received optical signal and checks, for example, whether there is a problem with the initially set wavelength or optical power (step S4).

The control device 230 transmits a restart or initialization instruction to the subscriber terminal 40-1 when there is a problem with the wavelength or optical power. After restarting or initial setting, the process returns to step S3 and the subscriber terminal 40-1 transmits a connection request again.

The control device 230 analyzes an optical signal received from the subscriber terminal 40-1, and if it is confirmed that there is no problem, outputs a connection request to the optical gateway control unit 301. The optical gateway control unit 301 registers information on the subscriber terminal 40-1 in the management database 350. The connection request includes connection source information, connection destination information, the type of a signal to be transmitted, and the like. For example, address information such as a medium access control (MAC) address is used as the connection source information. For example, address information of the destination is used as the connection destination information. For example, a service or a modulation method is used as the type of signal to be transmitted. Based on such information, the wavelength control unit 310 registers the connection source information in the management database 350. In this way, an identification of the user who uses the subscriber terminal 40-1 and information indicating that the wavelength that can be used by the subscriber terminal 40-1 is idle are set in the user wavelength table. Further, the wavelength control unit 310 calculates an optimal path between the subscriber terminal 40-1 and the communication destination, such as between the link ends A and B by checking such information with connection information stored in the management database 350. The wavelength control unit 310 searches for "idle" indicated by the inter-station wavelength table according to the calculated path. The wavelength control unit 310 selects a wavelength to be used by the subscriber terminal 40-1 from the idle wavelengths and transmits information on the selected wavelength to the control device 230 (step S5).

Another subscriber terminal 40 which is a communication destination of the subscriber terminal 40-1 will be referred to as a communication destination subscriber terminal 40. In this case, the wavelength control unit 310 selects a transmission wavelength which is a wavelength to be used by the subscriber terminal 40-1 to transmit an optical signal to the communication destination subscriber terminal 40 and a reception wavelength which is a wavelength to be used by the subscriber terminal 40-1 to receive an optical signal from the communication destination subscriber terminal 40. The wavelength control unit 310 transmits the selected transmission and reception wavelengths to the control device 230 as wavelengths to be used by the subscriber terminal 40-1. When the subscriber terminal 40-1 performs only transmission to the communication destination subscriber terminal 40, the wavelength control unit 310 does not have to select the reception wavelength. Further, when the subscriber terminal 40-1 performs only reception from the communication destination subscriber terminal 40, the wavelength control unit 310 does not have to select the transmission wavelength.

The control device 230 transmits wavelength information as follows. The wavelength-variable transmitter 233 of the control device 230 transmits a wavelength instruction, in which information on a wavelength selected by the wavelength control unit 310 is set, by an optical signal of a wavelength indicating that it is addressed to the subscriber terminal 40-1. The optical switch 210 outputs the optical signal received from a port connected to the wavelength-variable transmitter 233 to a transmission line 522 connected to the subscriber terminal 40-1. The wavelength multiplexer/demultiplexer 220 inputs the optical signal, which has been received from the optical switch 210 via the transmission line 522, to a transmission line 501. The subscriber terminal 40-1 receives the optical signal transmitted through the transmission line 501. The subscriber terminal 40-1 sets an oscillation wavelength of the optical transceiver 41 according to the wavelength instruction indicated by the received optical signal (step S6). That is, the subscriber terminal 40-1 sets the oscillation wavelength of the optical transceiver 41 (that of the wavelength-variable light source 451) such that it transmits optical signals of the transmission wavelength set in the wavelength instruction. When a reception wavelength has been set in the wavelength instruction, the subscriber terminal 40-1 sets the optical transceiver 41 (the wavelength-variable filter 452) such that it receives wavelength signals of the reception wavelength.

The optical transceiver 41 of the subscriber terminal 40-1 transmits a notification signal notifying that the wavelength has been set by the optical signal of the instructed wavelength. The notification signal is transmitted to the control device 230 in the same manner as the request signal. Based on the received notification signal, the control device 230 checks whether the designated wavelength has been correctly set, whether the output power is sufficient, and the like (step S7). Upon determining that there is no problem as a check result, the control device 230 transmits a permission notification indicating permission to start communication to the subscriber terminal 40-1 by an optical signal. The permission notification is transmitted to the subscriber terminal 40-1 in the same manner as the wavelength instruction.

The optical switch control unit 320 transmits connection information on optimal ports of the optical switch 210 to the optical switch 210 according to the forwarding destination of the subscriber terminal 40-1. Based on the connection information, the optical switch 210 sets an upstream port and a downstream port for the subscriber terminal 40-1 according to an instruction from the optical switch control unit 320 (step S8).

The optical access system 100 performs timing controls such that the optical switch 210 performs path switching after the permission to start communication is transmitted from the control device 230 to the subscriber terminal 40-1. For example, it is assumed that the time required for the optical switch 210 to perform path switching is known in advance. In this case, the control device 230 waits until the subscriber terminal 40-1 actually starts communication after receiving the permission to start communication. Here, the waiting time is the time required for the optical switch 210 to actually perform path switching after receiving a path switching instruction. After that, the control device 230 issues an instruction to start communication. After communication starts, the monitoring device 260 of the optical gateway 200 checks the confirmation of the communication status between opposing subscriber terminals (step S9). The monitoring device 260 notifies the OPS 300 of the check result. If the check result indicates an error, the OPS 300 performs a cause isolation procedure.

The connection request transmitted by the subscriber terminal 40-1 and the control signal that the control device 230 transmits to the subscriber terminal 40-1 are optical signals slower than main signals. For example, a protocol-free control signal (control method) represented by AMCC can be used as the control signal.

Further, the OPS 300 instructs the communication destination subscriber terminal 40 to use the transmission wavelength for the subscriber terminal 40-1 as a reception wavelength for the communication destination subscriber terminal 40 and the reception wavelength for the subscriber terminal 40-1 as a transmission wavelength for the communication destination subscriber terminal 40. For example, in an optical gateway control unit 301 that controls an optical gateway 200 in which the communication destination subscriber terminal 40 is accommodated, a wavelength control unit 310 instructs a control device 230 to transmit a wavelength instruction in which the reception wavelength and the transmission wavelength for the communication destination subscriber terminal 40 are set. The communication destination subscriber terminal 40 receives the wavelength instruction from the control device 230 by a control signal and sets the reception and transmission wavelengths in its optical transceiver 41 according to the received wavelength instruction. That is, when a transmission wavelength has been set in the wavelength instruction, the communication destination subscriber terminal 40 sets an oscillation wavelength of the optical transceiver 41 (that of the wavelength-variable light source 451) such that it transmits optical signals of the transmission wavelength. When a reception wavelength has been set in the wavelength instruction, the communication destination subscriber terminal 40 sets the optical transceiver 41 (the wavelength-variable filter 452) such that it receives wavelength signals of the reception wavelength.

In the optical access system 100, without making a user request in step S1, information to be registered in the management database 350 by the user request may be transmitted and received between the new subscriber terminal 40-1 and the optical gateway control unit 301. This allows the subscriber terminal 40-1 to communicate with another subscriber terminal 40 without making a user request. Transmission and reception of information between the subscriber terminal 40-1 and the optical gateway control unit 301 are performed via the control device 230, for example, using AMCC.

The operation when a new subscriber terminal is connected has been described above. Next, a normal communication operation after a new subscriber terminal is connected will be described with reference to the case where the subscriber terminal 40-2 of Fig. 27 communicates as an example.

First, an upstream optical signal will be described. An upstream optical signal output by the subscriber terminal 40-2 is transmitted to the optical gateway 200 via a transmission line 501. The wavelength multiplexer/demultiplexer 220 of the optical gateway 200 separates input optical signals into an upstream optical signal and a downstream optical signal according to their wavelengths. The upstream optical signal demultiplexed by the wavelength multiplexer/demultiplexer 220 is input to the optical switch 210 via a transmission line 521. The optical switch 210 outputs the optical signal by connecting a port to which the upstream optical signal is input from the wavelength multiplexer/demultiplexer 220 to another port according to a path to the destination of the subscriber terminal 40-2. When a wavelength is used as destination information, the optical switch 210 outputs the optical signal by connecting the port to another port corresponding to the destination identified by the wavelength assigned to the subscriber terminal 40-2. The upstream signal output from the optical switch 210 is multiplexed with optical signals of other wavelengths transmitted by other subscriber terminals 40 by the multiplexer 241 and the multiplexed optical signal is transmitted to another station (for example, the link end B) via a single transmission line 511. The multiplexer 241 multiplexes wavelength channels for each station such as each of the link ends B and C. Because the transmission line 511 between the optical gateway 200 and the link end B and the transmission line 511 between the optical gateway 200 and the link end C are separated, the same wavelength can be used for the link ends B and C.

Next, downstream communication will be described. Downstream is communication in a direction from the link end B or C to a subscriber terminal 40. A downstream optical signal is transmitted to the optical gateway 200 via a single transmission line 512. The demultiplexer 242 of the optical gateway 200 wavelength-demultiplexes the downstream optical signal transmitted through the transmission line 512. The demultiplexer 242 inputs the demultiplexed light beams to downstream ports corresponding to the wavelengths of the demultiplexed light beams via transmission lines 542. The optical switch 210 outputs each downstream optical signal by connecting a port to which the downstream optical signal is input from the demultiplexer 242 to another port according to the wavelength. The wavelength multiplexer/demultiplexer 220 separates optical signals, which have been input from the optical switch 210 via the transmission lines 522, into an upstream optical signal and a downstream optical signal according to their wavelengths. The downstream optical signal demultiplexed by the wavelength multiplexer/demultiplexer 220 is input to the subscriber terminal 40-2 via a transmission line 501. Here, it is assumed that wavelength channels transmitted from the optical gateway 200 to stations (such as the link ends B and C) are of the same wavelength band, although different wavelength bands may be used for stations.

The monitoring device 260 of the optical gateway 200 receives light beams split off by the splitting portions 250. Light beams split off by the splitting portions 250 are optical signals transmitted and received by subscriber terminals 40. The monitoring device 260 monitors the received optical signals to monitor signals transmitted and received by subscriber terminals 40. Upon detecting an abnormality such as a wavelength shift, a decrease in power, or a communication abnormality through monitoring, the monitoring device 260 transmits an abnormality detection signal to the optical gateway control unit 301. The optical switch control unit 320 of the optical gateway control unit 301 controls the optical switch 210 such that a corresponding subscriber terminal 40 is reconnected to the control device 230. Then, the optical gateway control unit 301 performs a process of assigning a new wavelength, different from the wavelength used when the abnormality has been detected, in the same manner as when the subscriber terminal 40 is newly connected. Thus, upon receiving an optical signal of the changed wavelength from the subscriber terminal 40, the optical switch 210 connects the received optical signal to the port that has been designated for the subscriber terminal 40 by the wavelength before the change.

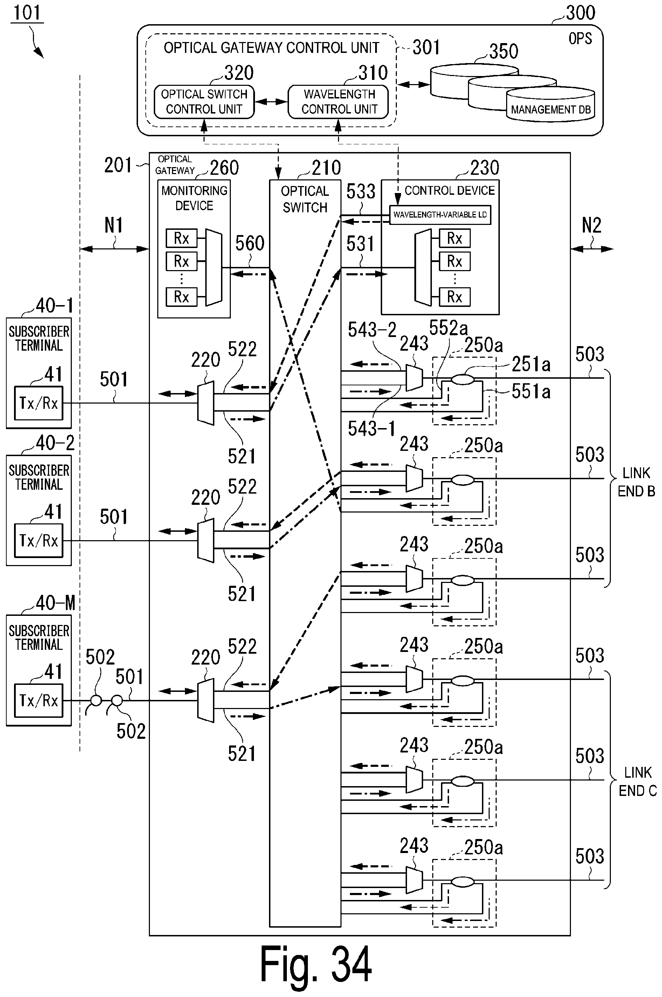

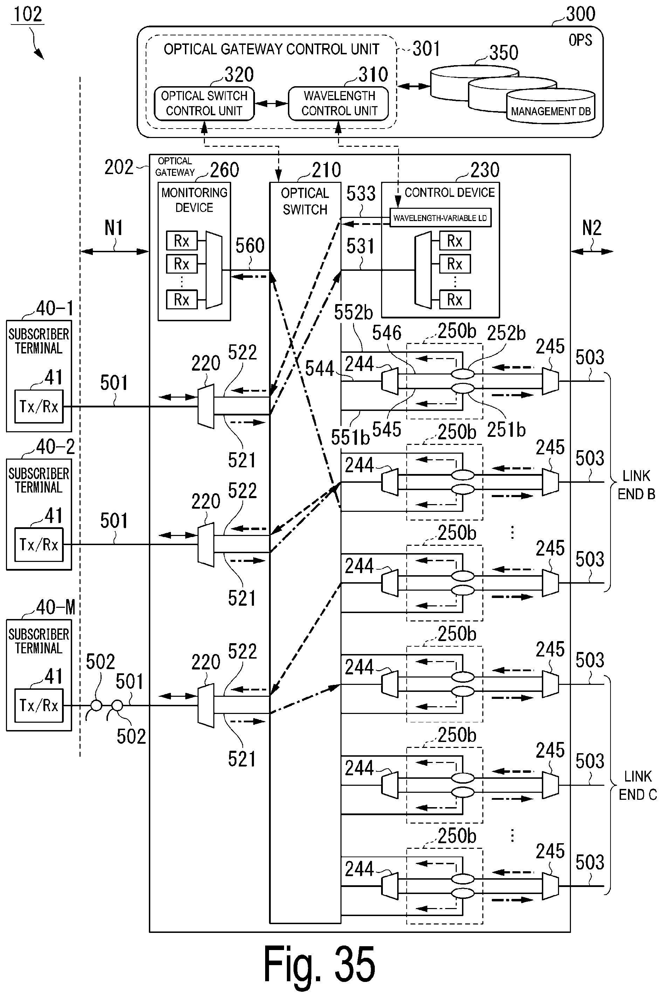

The optical gateway 200 illustrated in Fig. 27 performs wavelength multiplexing. However, the optical gateway does not necessarily have to perform wavelength multiplexing as illustrated in Figs. 34 and 35. Fig. 34 is a diagram illustrating an exemplary configuration of an optical access system 101. The optical access system 101 illustrated in Fig. 34 differs from the optical access system 100 illustrated in Fig. 27 in that it includes an optical gateway 201 instead of the optical gateway 200. The optical gateway 201 differs from the optical gateway 200 in that it includes wavelength multiplexers/demultiplexers 243 and splitting portions 250a instead of the multiplexers 241, the demultiplexers 242, and the splitting portions 250. The optical gateway 201 is connected to a communication apparatus of another station on the link end by a transmission line 503. A single transmission line 503 transmits and receives an upstream signal and a downstream signal to and from a link end.

Each wavelength multiplexer/demultiplexer 243 separates input optical signals into an upstream optical signal and a downstream optical signal according to their wavelengths. The wavelength multiplexer/demultiplexer 243 separates an upstream optical signal input from the optical switch 210 via a transmission line 543-1 and transmits it to another link end or an upper level network via a transmission line 503. Each wavelength multiplexer/demultiplexer 243 also separates a downstream optical signal input from another link end via a transmission line 503 and outputs it to the optical switch 210 via a transmission line 543-2.

A splitting portion 250a is provided on each transmission line 503. The splitting portion 250a includes a power splitter 251a. The power splitter 251a splits off upstream and downstream optical signals transmitted through the transmission line 503. The power splitter 251a inputs the split upstream optical signal to a port of the optical switch 210 via a transmission line 551a and inputs the split downstream optical signal to a port of the optical switch 210 via a transmission line 551b. The optical switch 210 outputs the optical signal input from the port connected to the transmission line 551a and the optical signal input from the port connected to the transmission line 551b from a port connected to the transmission line 560. In this manner, the wavelength demultiplexer 261 of the monitoring device 260 receives optical signals split off by the splitting portion 250a.

Fig. 35 is a diagram illustrating an exemplary configuration of an optical access system 102. The optical access system 102 illustrated in Fig. 35 differs from the optical access system 101 illustrated in Fig. 34 in that it includes an optical gateway 202 instead of the optical gateway 201. The optical gateway 202 differs from the optical gateway 201 in that it includes wavelength multiplexers/demultiplexers 244, wavelength multiplexers/demultiplexers 245, and splitting portions 250b instead of the wavelength multiplexers/demultiplexers 243 and the splitting portions 250a.

Each wavelength multiplexer/demultiplexer 244 separates optical signals into an upstream optical signal and a downstream optical signal according to their wavelengths. The wavelength multiplexer/demultiplexer 244 inputs an upstream optical signal received from the optical switch 210 via a transmission line 544 to a wavelength multiplexer/demultiplexer 245 via a transmission line 545. The wavelength multiplexer/demultiplexer 244 inputs a downstream optical signal received from the wavelength multiplexer/demultiplexer 245 via a transmission line 546 to the optical switch 210 via the transmission line 544.

Each wavelength multiplexer/demultiplexer 245 separates optical signals into an upstream optical signal and a downstream optical signal according to their wavelengths. The wavelength multiplexer/demultiplexer 245 transmits an upstream optical signal, which has been received from a wavelength multiplexer/demultiplexer 245 via a transmission line 545, to another link end or an upper level network via a transmission line 503. The wavelength multiplexer/demultiplexer 245 inputs a downstream optical signal received via the transmission line 503 to the wavelength multiplexer/demultiplexer 244 via a transmission line 546.

Each splitting portion 250b includes a power splitter 251b and a power splitter 252b. The power splitter 251b splits off an upstream optical signal transmitted through a transmission line 545. The power splitter 251b inputs the split upstream optical signal to a port of the optical switch 210 via a transmission line 551b. The power splitter 252b splits off a downstream optical signal transmitted through a transmission line 546. The power splitter 252b inputs the split downstream optical signal to a port of the optical switch 210 via a transmission line 552b. The optical switch 210 outputs the optical signal input from the port connected to the transmission line 551b and the optical signal input from the port connected to the transmission line 552b from a port connected to the transmission line 560. In this manner, the wavelength demultiplexer 261 of the monitoring device 260 receives optical signals split off by the splitting portion 250b.

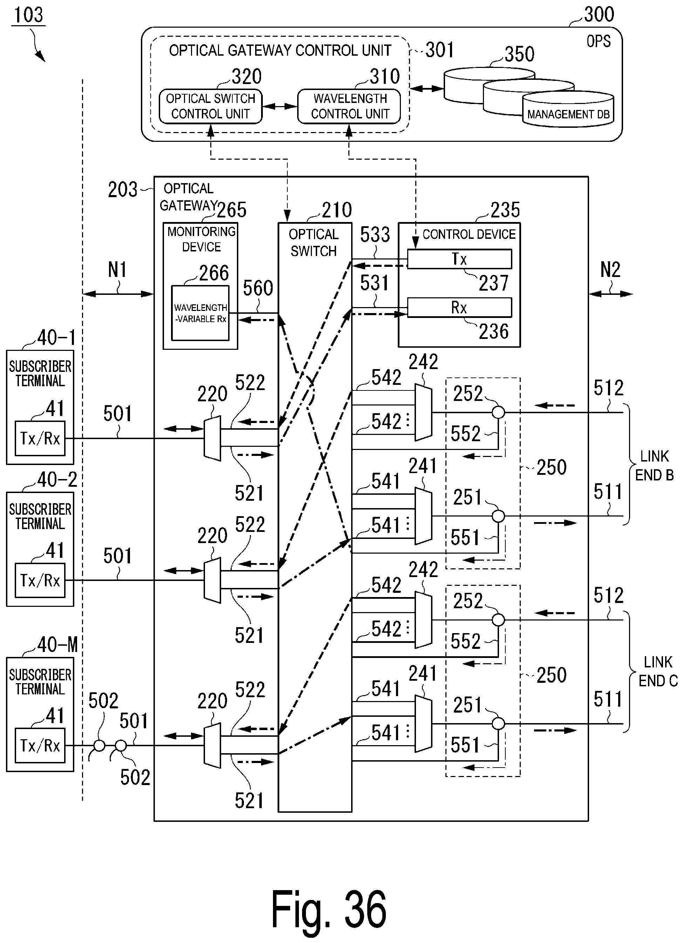

The monitoring device 260 described above has a receiver configuration including the wavelength demultiplexer 261 and the optical receivers 262 for wavelengths. The monitoring device may have a wavelength-variable optical receiver instead of this receiver configuration. Also, the transceiver of the control device may have a transmitter that is not wavelength-variable and may have a receiver configuration including no wavelength demultiplexer. An example of such a configuration will be described with reference to Fig. 36.

Fig. 36 is a diagram illustrating an exemplary configuration of an optical access system 103. The optical access system 103 illustrated in Fig. 36 differs from the optical access system 100 illustrated in Fig. 27 in that it includes an optical gateway 203 instead of the optical gateway 200. The optical gateway 203 differs from the optical gateway 200 in that it includes a control device 235 and a monitoring device 265 instead of the control device 230 and the monitoring device 260. The control device 235 includes an optical receiver 236 and an optical transmitter 237 that is not wavelength-variable. The monitoring device 265 includes a wavelength-variable optical receiver 266.

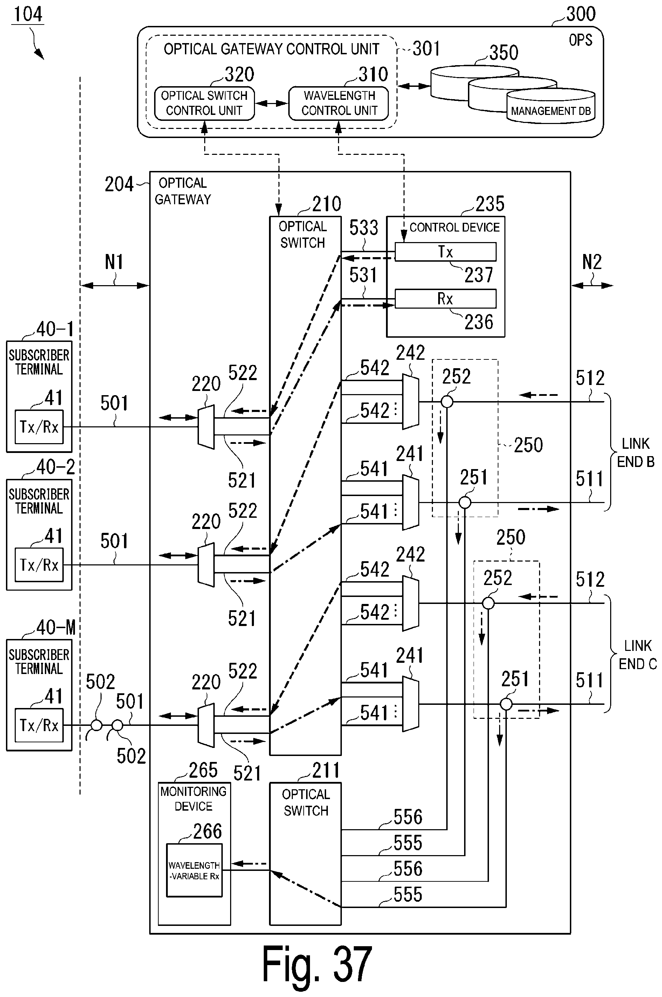

The monitoring device may also be connected via an optical switch different from the optical switch described above. An example of such a configuration will be described with reference to Fig. 37. Fig. 37 is a diagram illustrating an exemplary configuration of an optical access system 104. The optical access system 104 illustrated in Fig. 37 differs from the optical access system 103 illustrated in Fig. 36 in that it includes an optical gateway 204 instead of the optical gateway 203. The optical gateway 204 differs from the optical gateway 203 in that it further includes an optical switch 211 and the monitoring device 265 is connected to the optical switch 211.

An upstream optical signal separated from a transmission line 511 by a power splitter 251 of a splitting portion 250 is input to the optical switch 211 via a transmission line 555 and a downstream optical signal separated from a transmission line 512 by a power splitter 252 is input to the optical switch 211 via a transmission line 555. The optical switch 211 is, for example, a small optical switch. The number of ports of the optical switch 211 is 1 on the monitoring device 260 side and 2M on the side where monitored optical signals are input. 2M is twice the number of M subscriber terminals 40 connected to the optical gateway 204. Also, instead of using a small optical switch, as many monitoring devices as the number of connected link ends may be provided to monitor signals transmitted to and received from all link ends on a per link end basis.

### Second Embodiment

In the present embodiment, communication is performed between a plurality of subscriber terminals connected to the same optical gateway by using a return transmission line. Hereinafter, differences from the first embodiment will be mainly described.

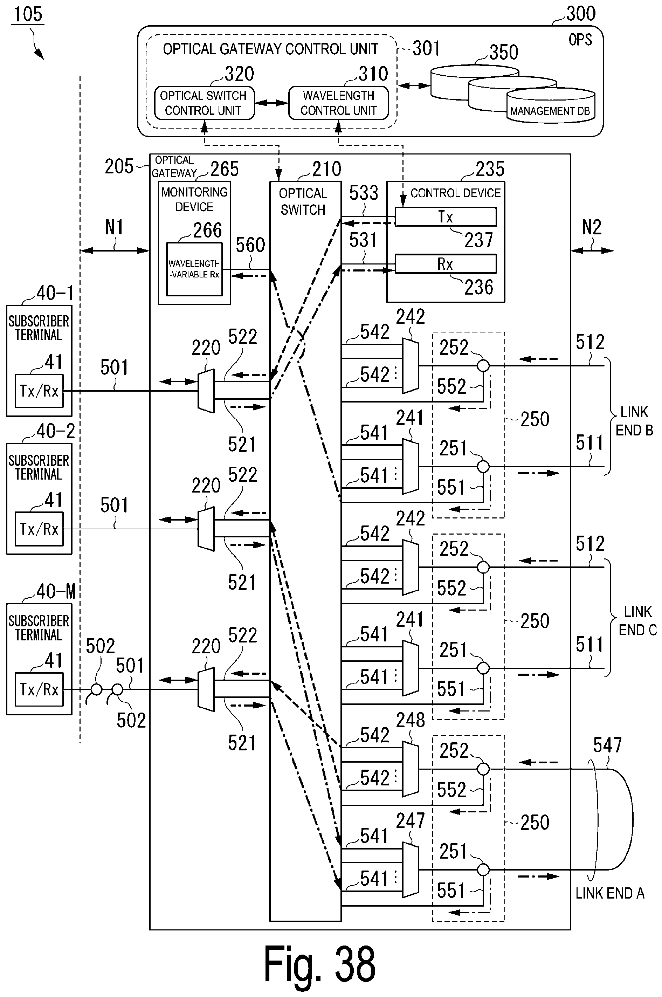

Fig. 38 is a diagram illustrating an exemplary configuration of an optical access system 105. The optical access system 105 illustrated in Fig. 38 differs from the optical access system 103 illustrated in Fig. 36 in that it includes an optical gateway 205 instead of the optical gateway 203. The optical gateway 205 differs from the optical gateway 203 in that it further includes a multiplexer 247 and a demultiplexer 248 corresponding to a link end A where the optical gateway 205 is installed. The multiplexer 247 and the demultiplexer 248 are connected by a transmission line 547. The transmission line 547 is a return transmission line.

Similar to each multiplexer 241, the multiplexer 247 multiplexes upstream optical signals of different wavelengths that the optical switch 210 outputs through a plurality of transmission lines 541 and outputs the multiplexed optical signal to the transmission line 547. Similar to a demultiplexer 242, the demultiplexer 248 wavelength-demultiplexes a downstream optical signal input from the transmission line 547. The demultiplexer 248 inputs the demultiplexed downstream optical signals to the optical switch 210 via a plurality of transmission lines 542 connected to downstream ports corresponding to the wavelengths of the optical signals. The transmission line 547 is also provided with a splitting portion 250.

In the first embodiment, subscriber terminals connected to the link end A are connected to ports for connection to the link ends B and C via the optical switch. In the present embodiment, another pair of a multiplexer and a demultiplexer which is the same as each pair of the multiplexer 241 and the demultiplexer 242 connected to the link ends B and C is added. This added pair is the multiplexer 247 and the demultiplexer 248. Then, an output port of the added multiplexer 247 and an input port of the added demultiplexer 248 are connected by the transmission line 547. This configuration allows a signal output by a subscriber terminal 40 to be input to the optical switch 210 again. Thus, in the optical gateway 205, an optical signal output by a subscriber terminal 40 is returned and input to the optical switch 210 again as a downstream signal. This return signal is connected to another subscriber terminal 40 within the optical switch 210, thereby enabling return communication, that is, communication between subscriber terminals 40 connected to the same optical gateway 205.

For example, a state where a subscriber terminal 40-2 and a subscriber terminal 40-M communicate with each other will be described. Here, it is assumed that K upstream ports of the optical switch 210 corresponding to the link end A are connected to the multiplexer 247 by transmission lines 541 and K downstream ports of the optical switch 210 corresponding to the link end A are connected to the multiplexer 248 by transmission lines 542 (where K is an integer of 2 or more). It is also assumed that a k-th downstream and upstream ports among the K downstream ports and upstream ports corresponding to the link end A corresponds to a wavelength λₖ (where k is an integer of 1 or more and K or less). An upstream optical signal of a wavelength λ₁ output from the subscriber terminal 40-2 is connected to the first upstream port corresponding to the link end A. The optical signal input to the optical switch 210 is returned by the transmission line 547 and is input again to the optical switch 210 as a downstream optical signal from the first downstream port corresponding to the link end A. The optical switch control unit 320 sets a path within the optical switch 210 such that the optical signal is transmitted to the subscriber terminal 40-M according to the wavelength. Similarly, an upstream optical signal of a wavelength λₖ output from the subscriber terminal 40-M is connected to the k-th upstream port corresponding to the link end A. The optical signal input to the optical switch 210 is returned by the transmission line 547 and is input again to the optical switch 210 as a downstream optical signal from the k-th downstream port corresponding to the link end A. The optical switch control unit 320 sets a path within the optical switch 210 such that the optical signal is transmitted to the subscriber terminal 40-2 according to the wavelength. In this way, communication is performed between the subscriber terminal 40-2 and the subscriber terminal 40-M.

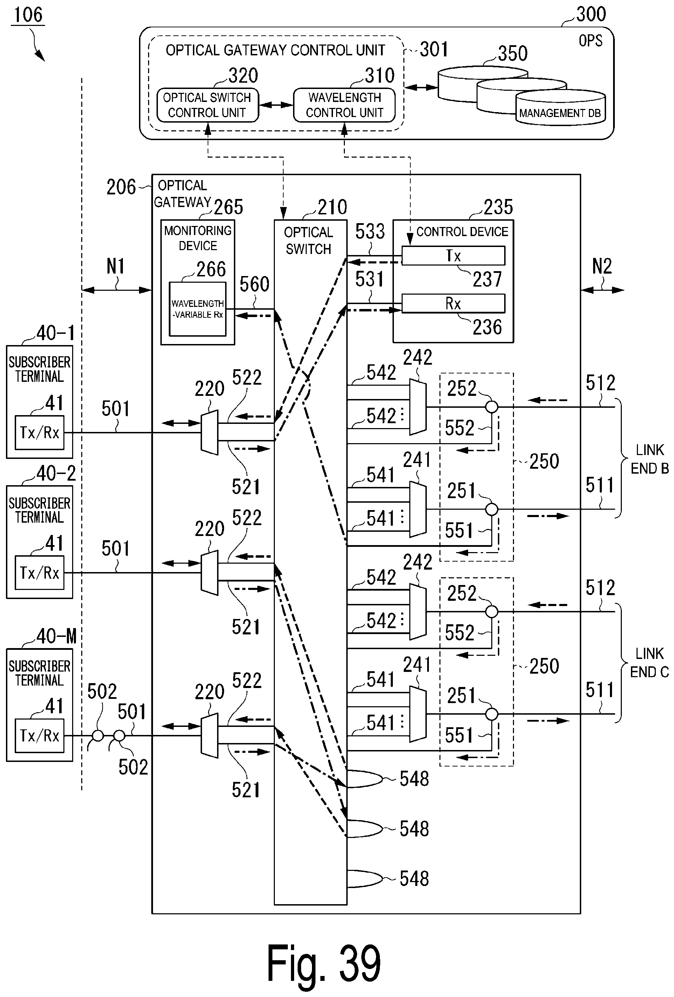

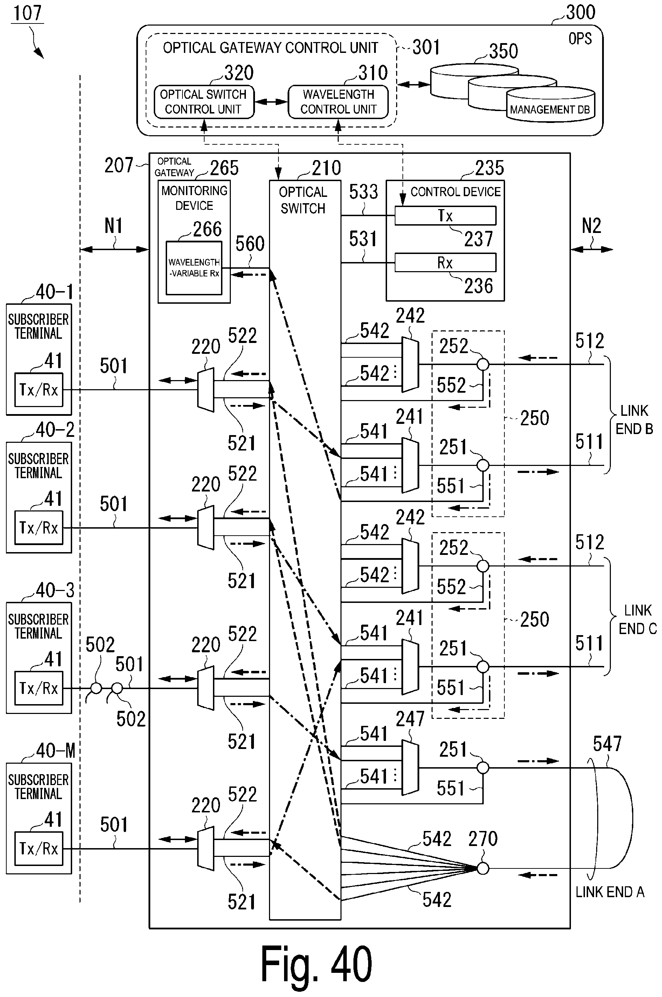

Other configurations of the present embodiment will be described with reference to Figs. 39 and 40. Fig. 39 is a diagram illustrating an exemplary configuration of an optical access system 106. The optical access system 106 illustrated in Fig. 39 differs from the optical access system 105 illustrated in Fig. 38 in that it includes an optical gateway 206 instead of the optical gateway 205. The optical gateway 206 differs from the optical gateway 205 in that it does not include the multiplexer 247 and the demultiplexer 248 and directly connects upstream ports and downstream ports of the optical switch 210 for the link end A by transmission lines 548 without wavelength multiplexing, thereby returning signals.

Fig. 40 is a diagram illustrating an exemplary configuration of an optical access system 107. The optical access system 107 illustrated in Fig. 40 differs from the optical access system 105 illustrated in Fig. 38 in that it includes an optical gateway 207 instead of the optical gateway 205. The optical gateway 207 differs from the optical gateway 205 in that it includes a power splitter 270 instead of the demultiplexer 248. The power splitter 270 splits a downstream optical signal, which has been received from the multiplexer 247 via the transmission line 547, into a plurality of signals and inputs them to the optical switch 210 via a plurality of transmission lines 542.

A power splitter may also be provided subsequent to the demultiplexer 248 of the optical gateway 205 in Fig. 38. The power splitter splits an optical signal demultiplexed by the demultiplexer 248 into a plurality of signals and inputs them to different ports of the optical switch 210. This enables multicast communication for return communication.

While differences from the optical access system 103 have been described above, the differences can also be applied to the optical access systems 100, 101, and 102.

### Third Embodiment

Optical access systems of the present embodiment perform multicast communication. In the present embodiment, differences from the first and second embodiments will be mainly described.

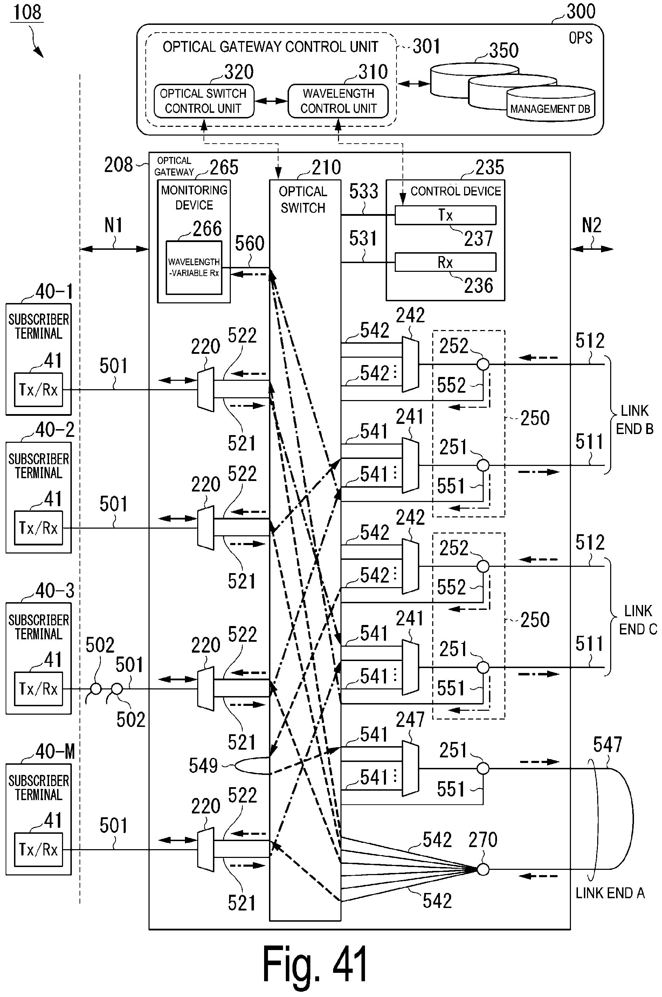

First, multicast for downstream communication will be described with reference to Fig. 41. Fig. 41 is a diagram illustrating an exemplary configuration of an optical access system 108. The optical access system 108 illustrated in Fig. 41 differs from the optical access system 107 illustrated in Fig. 40 in that it includes an optical gateway 208 instead of the optical gateway 207. The optical gateway 208 differs from the optical gateway 207 in that it further includes a transmission line 549 that connects return ports of the optical switch 210.

A case where a downstream optical signal transmitted from the link end C is multicast will be described. The optical switch control unit 320 performs control such that a port for receiving a downstream optical signal from the link end C is connected to a return port to which the transmission line 549 is connected according to the wavelength. Thus, the downstream optical signal from the link end C is transmitted through the transmission line 549 and input to the optical switch 210 again as an upstream signal of the link end A. The optical switch control unit 320 also performs control such that the downstream optical signal input from the return port is connected to an upstream signal port for the link end A, similar to the second embodiment. Thus, the optical signal that has been returned by the transmission line 549 and input to the optical switch 210 is output to a port connected to the multiplexer 247. The multiplexer 247 multiplexes optical signals that are output from the optical switch 210 through a plurality of transmission lines 541 and outputs the multiplexed optical signal to the transmission line 547. The optical signal output to the transmission line 547 is split into a plurality of optical signals by the power splitter 270. The power splitter 270 inputs the plurality of split optical signals to the optical switch 210 as downstream signals of the link end A via a plurality of transmission lines 542. The optical switch 210 outputs the optical signals input from the transmission lines 542 to ports connected to subscriber terminals 40 according to their wavelengths. This enables multicast of a downstream signal.

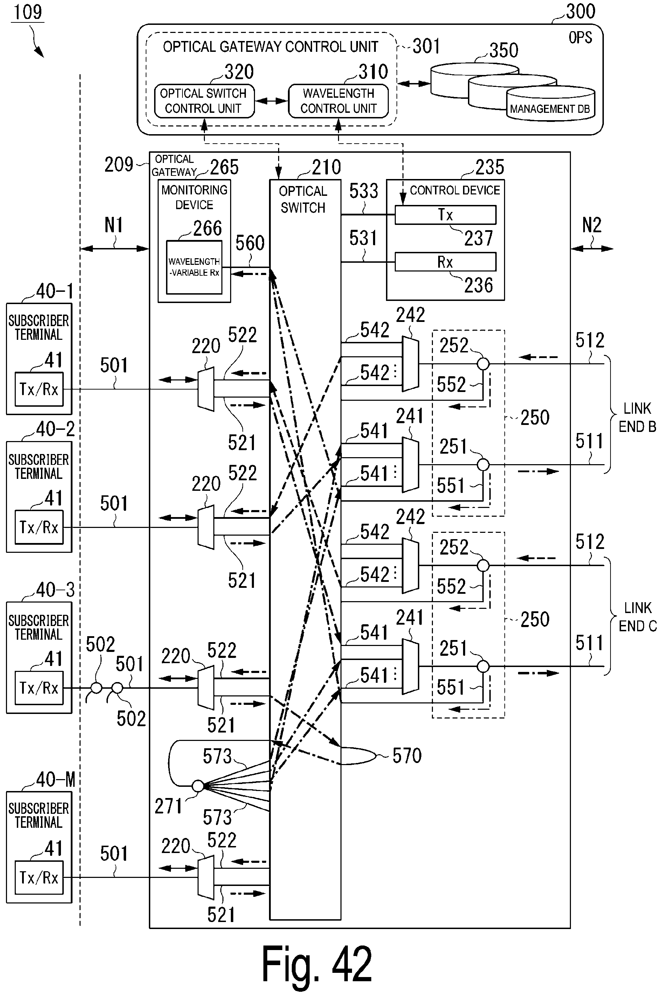

Subsequently, multicast for upstream communication will be described with reference to Fig. 42. Fig. 42 is a diagram illustrating an exemplary configuration of an optical access system 109. The optical access system 109 illustrated in Fig. 42 differs from the optical access system 103 illustrated in Fig. 36 in that it includes an optical gateway 209 instead of the optical gateway 203. The optical gateway 209 differs from the optical gateway 203 in that it further includes a transmission line 570 that connects return ports to the optical switch 210 and a power splitter 271 for multicast. The power splitter 271 is connected to the optical switch 210 via a transmission line 572 and a plurality of transmission lines 573.

A case where an upstream optical signal transmitted from the link end A is multicast will be described. The optical switch control unit 320 performs control such that a port for receiving the upstream optical signal from the link end A is connected to a return port to which the transmission line 570 is connected according to the wavelength. Thus, the upstream optical signal from the link end A is transmitted through the transmission line 570 and input to the optical switch 210 again. The optical switch control unit 320 also performs control such that the optical signal input from a return port is output to a port connected to the power splitter 271. Thus, the optical signal that has been returned by the transmission line 570 and input to the optical switch 210 is output to the transmission line 572. The optical signal output to the transmission line 572 is split into a plurality of optical signals by the power splitter 271. The power splitter 271 inputs the plurality of split optical signals to the optical switch 210 as upstream signals via the plurality of transmission lines 573. The optical switch 210 outputs the optical signals input from the transmission lines 573 to ports connected to the link end B or C according to their wavelengths. This enables multicast of an upstream signal.

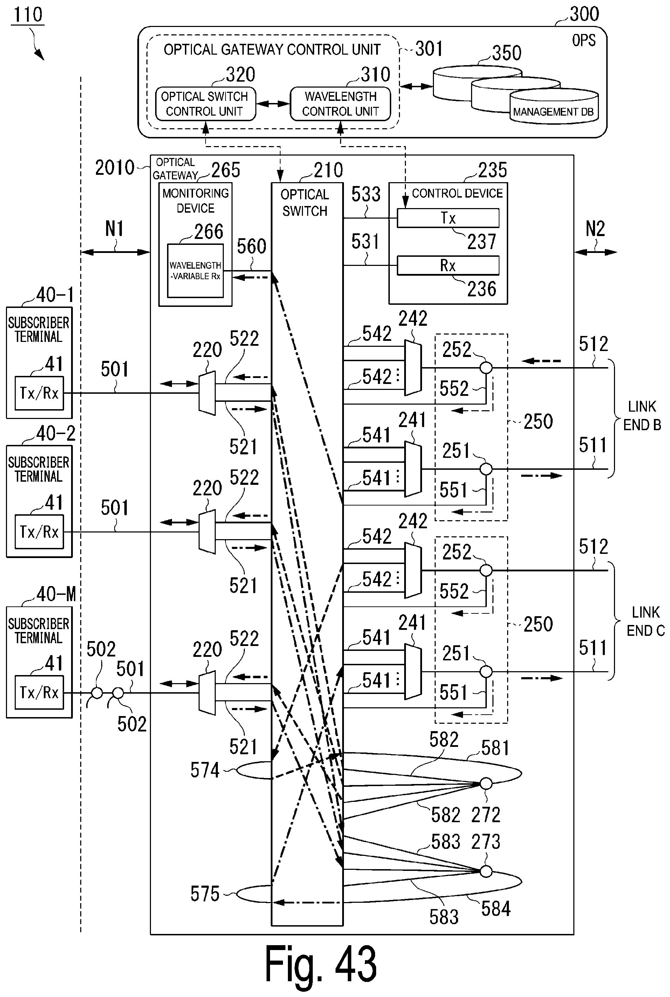

Subsequently, a configuration in which point-to-multipoint communication including upstream communication is performed while performing downstream communication multicast will be described with reference to Fig. 43. Fig. 43 is a diagram illustrating an exemplary configuration of an optical access system 110. The optical access system 110 illustrated in Fig. 43 differs from the optical access system 103 illustrated in Fig. 36 in that it includes an optical gateway 2010 instead of the optical gateway 203. The optical gateway 2010 differs from the optical gateway 203 in that it further includes transmission lines 574 and 575 that connect return ports to the optical switch 210 and power splitters 272 and 273. The power splitter 272 is connected to the optical switch 210 via a transmission line 581 and a plurality of transmission lines 582. The power splitter 273 is connected to the optical switch 210 via a plurality of transmission lines 583 and a transmission line 584.

A case where a downstream optical signal transmitted from the link end C is multicast will be described. The optical switch control unit 320 performs control such that a port for receiving the downstream optical signal from the link end C is connected to a return port to which the transmission line 574 is connected according to the wavelength. Thus, the downstream optical signal from the link end C is transmitted through the transmission line 574 and input to the optical switch 210 again as an upstream signal of the link end A. The optical switch control unit 320 also performs control such that the downstream optical signal input from a return port is output to a port to which the power splitter 272 is connected. Thus, the optical signal that has been returned by the transmission line 574 and input to the optical switch 210 is output to the transmission line 581. The optical signal output to the transmission line 581 is split into a plurality of optical signals by the power splitter 272. The power splitter 272 inputs the plurality of split optical signals to the optical switch 210 as downstream signals via the plurality of transmission lines 582. The optical switch 210 outputs the optical signals input from the transmission lines 582 to ports connected to the subscriber terminal 40 according to their wavelengths. This enables multicast of a downstream signal.

A case where upstream optical signals transmitted from the link end A are transmitted to the link end C will be described. The optical switch control unit 320 performs control such that ports for inputting the upstream optical signals from the link end A are connected to ports to which the power splitter 273 is connected according to their wavelengths. Thus, the upstream optical signals from the link end A are output to the transmission lines 583. The optical signals output to the plurality of transmission lines 583 are multiplexed by the power splitter 273. The power splitter 273 inputs the multiplexed optical signal to the optical switch 210 via the transmission line 584. The optical switch 210 performs control such that the optical signal input from the transmission line 584 is connected to a return port to which the transmission line 575 is connected. Thus, the optical signal is transmitted through the transmission line 575 and input to the optical switch 210 again. The optical switch 210 outputs the optical signal input from the transmission line 575 to a multiplexer 241 connected to the link end C according to the wavelength.

The present embodiment provides two sets of configurations each using a power splitter for multicast as described above, thereby enabling not only downstream multicast communication but also point-to-multipoint communication including upstream communication.

### Fourth Embodiment

In the present embodiment, communication is performed without separating an upstream signal and a downstream signal. Hereinafter, differences from the above embodiments will be mainly described.

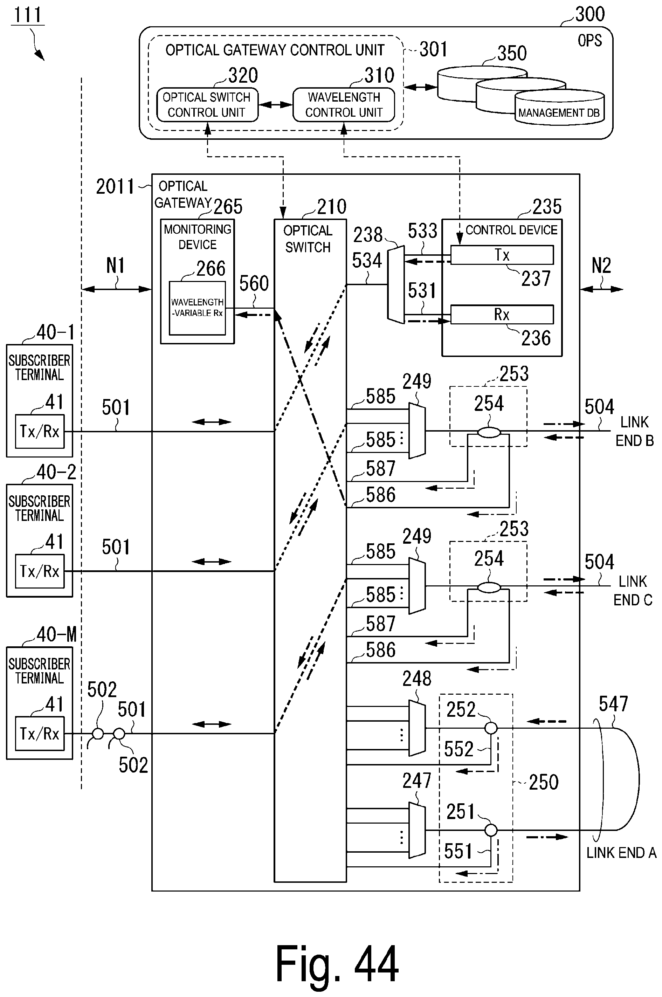

Fig. 44 is a diagram illustrating an exemplary configuration of an optical access system 111. The optical access system 111 illustrated in Fig. 44 differs from the optical access system 105 illustrated in Fig. 38 in that it includes an optical gateway 2011 instead of the optical gateway 205. The optical gateway 2011 differs from the optical gateway 205 in that it does not include the wavelength multiplexers/demultiplexers 220, includes wavelength multiplexers/demultiplexers 249 and splitting portions 253 instead of the multiplexers 241, the demultiplexers 242, and the splitting portions 250, and further includes a wavelength multiplexer/demultiplexer 238.

Each wavelength multiplexer/demultiplexer 249 is connected to the optical switch 210 by a plurality of transmission lines 585. The wavelength multiplexer/demultiplexer 249 multiplexes upstream optical signals of different wavelengths that the optical switch 210 outputs through the plurality of transmission lines 585 and outputs the multiplexed optical signal to a transmission line 504 connected to another link end. The wavelength multiplexer/demultiplexer 249 wavelength-demultiplexes a downstream optical signal that has been input from another link end via the transmission line 504. The wavelength multiplexer demultiplexer 249 inputs the demultiplexed downstream optical signals to the optical switch 210 via the plurality of transmission lines 585 connected to upstream ports corresponding to the wavelengths of the optical signals.

Each splitting portion 253 includes a power splitter 254. The power splitter 254 splits off an upstream optical signal and a downstream optical signal transmitted through the transmission line 504. The power splitter 254 inputs the split upstream optical signal to a port of the optical switch 210 via a transmission line 586 and inputs the split downstream optical signal to a port of the optical switch 210 via a transmission line 587. The optical switch 210 outputs an optical signal input from a port connected to the transmission line 586 or the transmission line 587 to a port connected to a transmission line 560.

The wavelength multiplexer/demultiplexer 238 is connected to the optical switch 210 by a transmission line 534 and is connected to the control device 235 by a transmission line 531 and a transmission line 533. The wavelength multiplexer/demultiplexer 238 separates input optical signals into an upstream optical signal and a downstream optical signal according to their wavelengths. The wavelength multiplexer/demultiplexer 238 outputs an upstream optical signal, which has been input from the optical switch 210 via the transmission line 534, to the control device 235 via the transmission line 531. The wavelength multiplexer/demultiplexer 238 outputs a downstream optical signal, which has been input from the control device 235 via the transmission line 533, to the optical switch 210 via the transmission line 534.

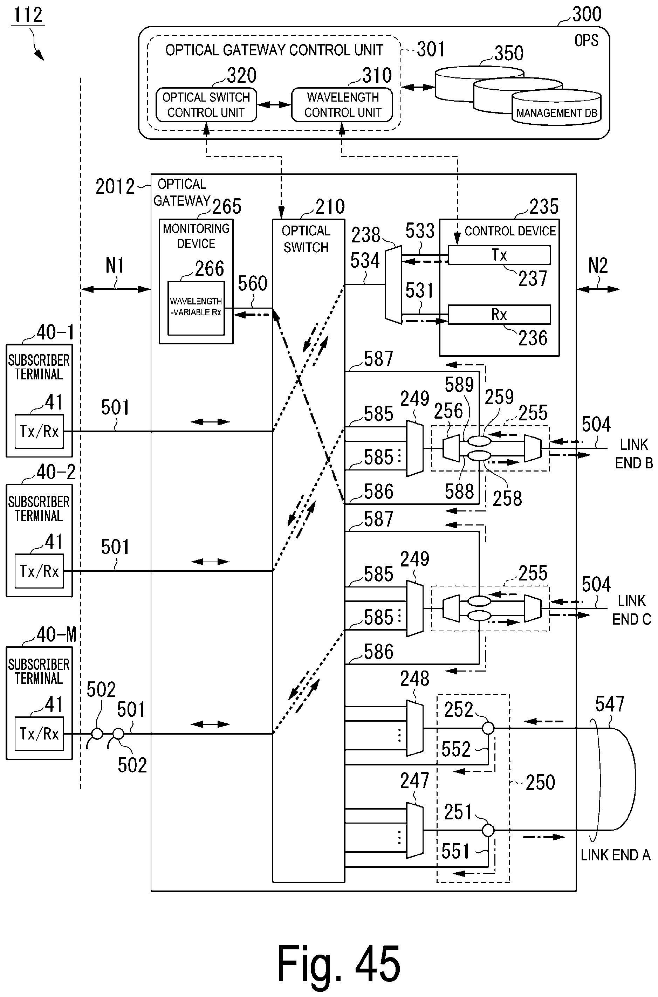

The optical gateway 2011 does not include wavelength multiplexers/demultiplexers between the optical switch 210 and subscriber terminals 40 and does not separate an upstream signal and a downstream signal as described above. This can greatly reduce the number of ports used for the optical switch 210 and greatly reduce the amount of information to be managed. Further, as illustrated in Fig. 45, portions for separating optical signals to be output to the monitoring device 265 may be provided with the same configuration as illustrated in Fig. 35.

Fig. 45 is a diagram illustrating an exemplary configuration of an optical access system 112 of the present embodiment. An optical gateway 2012 of the optical access system 112 illustrated in Fig. 45 includes a splitting portion 255 instead of the splitting portion 253 included in the optical gateway 2011 illustrated in Fig. 44. Each splitting portion 255 includes a wavelength multiplexer/demultiplexer 256, a wavelength multiplexer/demultiplexer 257, a power splitter 258, and a power splitter 259.

The wavelength multiplexer/demultiplexer 256 separates input optical signals into an upstream optical signal and a downstream optical signal according to their wavelengths. The wavelength multiplexer/demultiplexer 256 outputs an upstream optical signal input from the wavelength multiplexer/demultiplexer 249 to the wavelength multiplexer/demultiplexer 257 via a transmission line 588. The wavelength multiplexer/demultiplexer 256 outputs a downstream optical signal that has been input from the wavelength multiplexer/demultiplexer 257 via a transmission line 589 to the wavelength multiplexer/demultiplexer 249.

The wavelength multiplexer/demultiplexer 257 separates optical signals into an upstream optical signal and a downstream optical signal according to their wavelengths. The wavelength multiplexer/demultiplexer 257 outputs an upstream optical signal, which has been input from the wavelength multiplexer/demultiplexer 256 via the transmission line 588, to a transmission line 504. The wavelength multiplexer/demultiplexer 257 inputs a downstream optical signal, which has been received from another link end via the transmission line 504, to the wavelength multiplexer/demultiplexer 256 via the transmission line 589.

The power splitter 258 splits off an upstream optical signal transmitted through the transmission line 588 and inputs the split upstream optical signal to a port of the optical switch 210 via a transmission line 586. The power splitter 259 splits off a downstream optical signal transmitted through the transmission line 589 and inputs the split downstream optical signal to a port of the optical switch 210 via a transmission line 587. The optical switch 210 outputs an optical signal input from a port connected to the transmission line 586 or the transmission line 587 to a port connected to a transmission line 560.

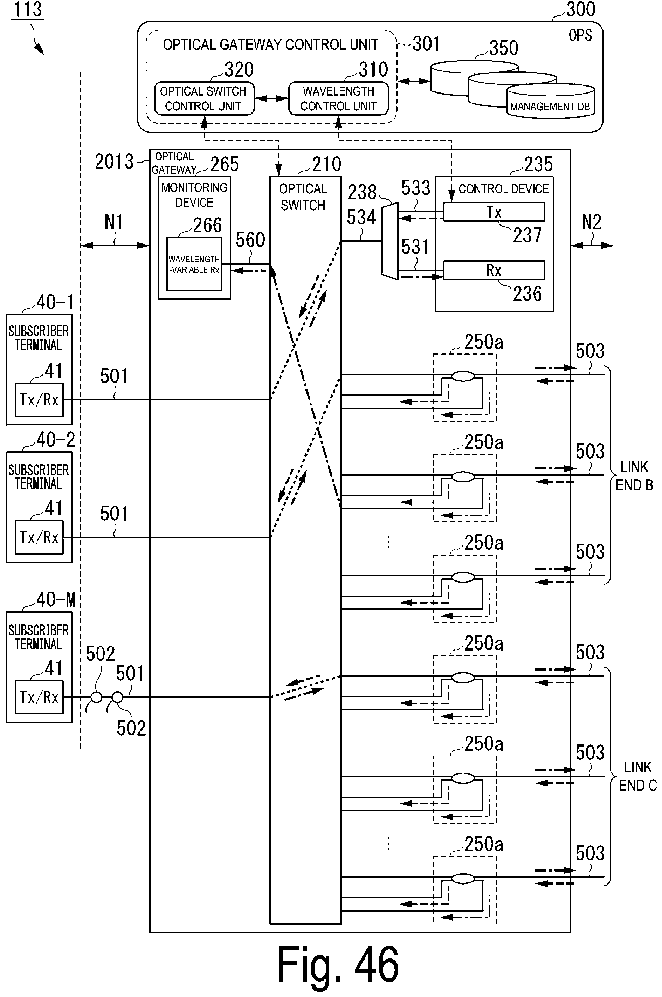

While the optical gateway 2011 illustrated in Fig. 44 performs wavelength multiplexing, the optical gateway 2011 may be configured such that signals to be transmitted to each station (the link end B or C) are transmitted through individual transmission lines without wavelength multiplexing as illustrated in Fig. 46.

Fig. 46 is a diagram illustrating an exemplary configuration of an optical access system 113. The optical access system 113 illustrated in Fig. 46 differs from the optical access system 101 illustrated in Fig. 34 in that it includes an optical gateway 2013 instead of the optical gateway 201. The optical gateway 2013 differs from the optical gateway 201 in that it does not include the wavelength multiplexers/demultiplexers 220 and the wavelength multiplexers/demultiplexers 243 and includes the control device 235, the wavelength multiplexer/demultiplexer 238, and the monitoring device 265 illustrated in Fig. 44 instead of the control device 230 and the monitoring device 260. Ports of the optical switch 210 connected to transmission lines 503 output upstream optical signals and receive downstream optical signals.

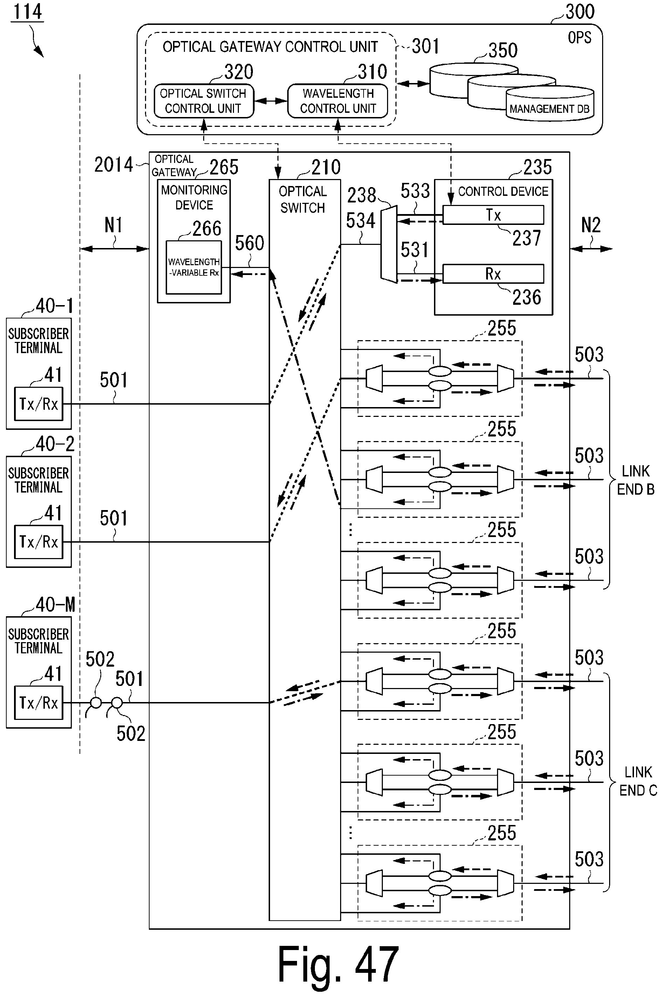

Splitting portions 250a in the optical gateway 2013 may also be configured as illustrated in Fig. 47. Fig. 47 is a diagram illustrating an exemplary configuration of an optical access system 114. An optical gateway 2014 of the optical access system 114 illustrated in Fig. 47 includes the same configuration as the splitting portions 255 illustrated in Fig. 45 instead of the splitting portions 250a included in the optical gateway 2013 illustrated in Fig. 46.

### Fifth Embodiment

The present embodiment enables control of subscriber terminals during communication. Hereinafter, differences from the above embodiments will be mainly described.

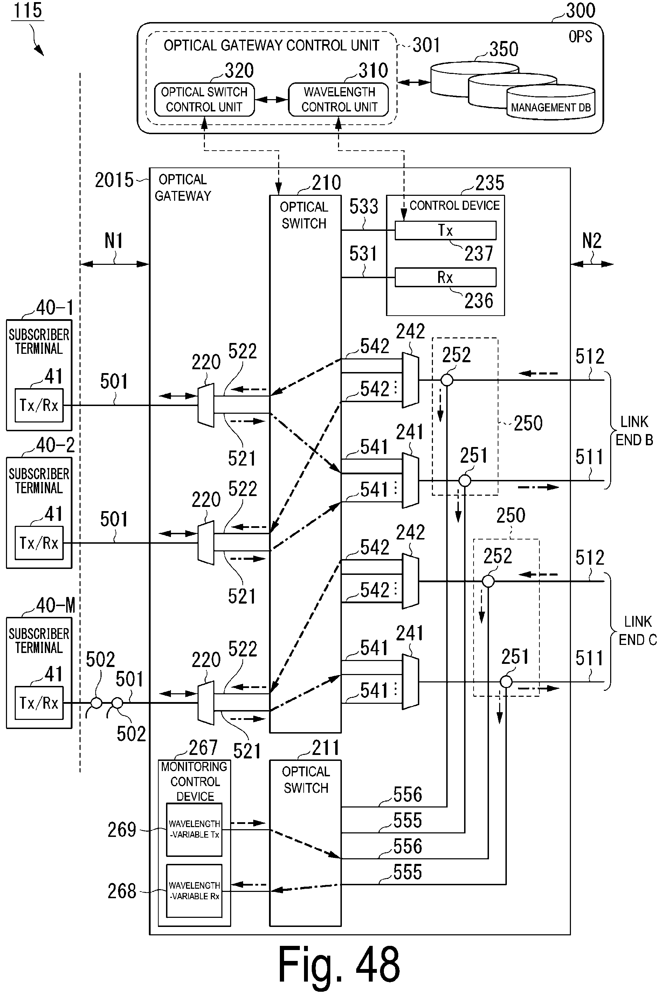

Fig. 48 is a diagram illustrating an exemplary configuration of an optical access system 115. The optical access system 115 illustrated in Fig. 48 differs from the optical access system 104 illustrated in Fig. 37 in that it includes an optical gateway 2015 instead of the optical gateway 204. The optical gateway 2015 differs from the optical gateway 204 in that a monitoring control device 267 instead of the monitoring device 265 is connected to an optical switch 211.

The monitoring control device 267 includes a wavelength-variable receiver 268 and a wavelength-variable transmitter 269. The monitoring control device 267 can receive an optical signal of an arbitrary wavelength by the wavelength-variable receiver 268 and can transmit an optical signal of an arbitrary wavelength by the wavelength-variable transmitter 269. The optical gateway 2015 also includes a control device 235. When a subscriber terminal 40 is connected, the optical gateway 2015 uses the control device 235 to perform connection processing (such as registration and wavelength assignment) for the subscriber terminal 40 and start normal communication as described above in the first embodiment.

Here, a state where a subscriber terminal 40-1 has been connected to a link end B will be considered. The subscriber terminal 40-1 cannot communicate with the control device 235 because the subscriber terminal 40-1 is performing normal communication. Thus, the monitoring control device 267 connected to the optical switch 211 which is a small optical switch, is provided to enable not only monitoring of the communication status of the subscriber terminal 40-1 but also issuance of instructions for various setting of the subscriber terminal 40-1 or the like. That is, an optical signal separated by each power splitter 251 is output to the optical switch 211 via a transmission line 555. The optical switch 211 outputs the received optical signal to the monitoring control device 267. The monitoring control device 267 performs monitoring using the optical signal that the wavelength-variable receiver 268 has received from the optical switch 211 and further receives a control signal superimposed on the received optical signal. The wavelength-variable transmitter 269 of the monitoring control device 267 transmits a control signal for the subscriber terminal 40 by an optical signal. The optical switch 211 outputs the signal received from the wavelength-variable transmitter 269 to a port corresponding to the wavelength. A power splitter 251 multiplexes the control signal that has been received from the optical switch 211 via a transmission line 556 with an optical signal transmitted through a transmission line 512. With this configuration, even when the subscriber terminal 40-1 is performing normal communication, a request for connection destination change or the like can be received from the subscriber terminal 40-1 and a control signal can be transmitted to perform wavelength switching or like of the subscriber terminal 40-1.

Control signals which are slower than main optical signals between subscriber terminals and can be superimposed on main signals are used for communication of control signals between the monitoring control device 267 and each subscriber terminal 40. For example, a technique such as AMCC can be used.

### Sixth Embodiment

In the present embodiment, electrical processing is performed on an optical signal extracted from the optical switch. Hereinafter, differences from the above embodiments will be mainly described.

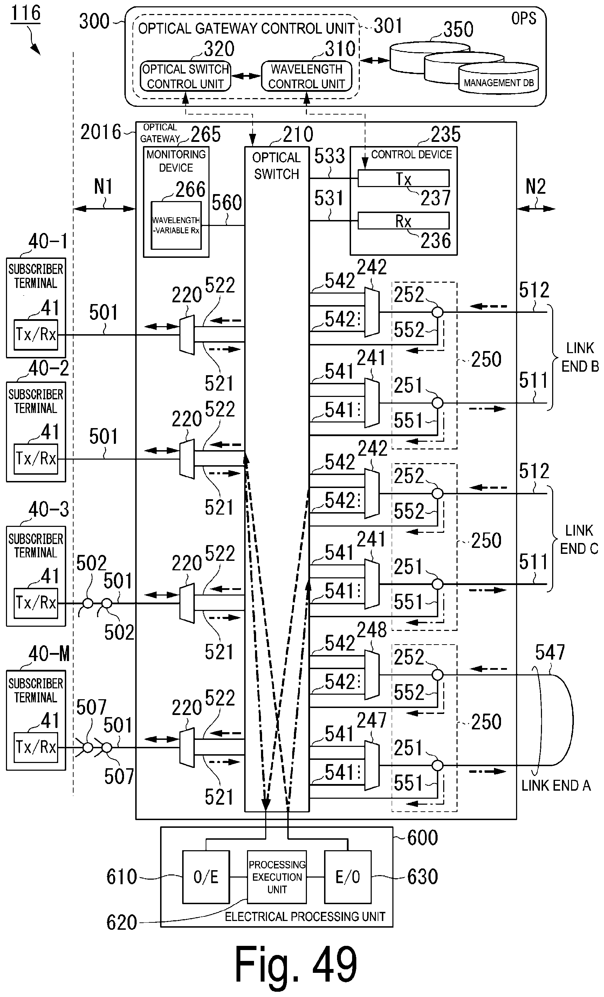

Fig. 49 is a diagram illustrating an exemplary configuration of an optical access system 116. The optical access system 116 illustrated in Fig. 49 differs from the optical access system 105 illustrated in Fig. 38 in that it includes an optical gateway 2016 instead of the optical gateway 202. The optical gateway 2016 differs from the optical gateway 202 in that an electrical processing unit 600 is connected to it.

The electrical processing unit 600 converts an optical signal into an electrical signal and performs electrical processing on the electrical signal and then converts it back to an optical signal and outputs the optical signal. The electrical processing unit 600 includes an O/E conversion unit 610, a processing execution unit 620, and an E/O conversion unit 630. The O/E conversion unit 610 corresponds to the O/E conversion unit 85 of Fig. 13. The O/E conversion unit 610 converts an optical signal input from the optical switch 210 into an electrical signal and outputs it to the processing execution unit 620. The processing execution unit 620 corresponds to the processing execution unit 86 and the storage unit 88 in Fig. 13. The processing execution unit 620 performs electrical processing on the electrical signal obtained through conversion of the O/E conversion unit 610 as a processor, such as a CPU or an accelerator, reads a program from a storage unit (not illustrated) and executes the read program. A signal processing function of electrically processing signals and a function such as OLT are implemented with this electrical processing. The signal processing function is, for example, a code error correction such as FEC. The E/O conversion unit 630 corresponds to the E/O conversion unit 87 of Fig. 13. The E/O conversion unit 87 converts an electrical signal into an optical signal and outputs it to the optical switch 210. The O/E conversion unit 610 and the E/O conversion unit 630 are, for example, wavelength-variable transceivers.

In Fig. 49, a subscriber terminal 40-M is an ONU of a passive optical network (PON). The subscriber terminal 40-M is connected to the optical gateway 2016 via a transmission line 501 such as an optical fiber and a power splitter 507. An error correction function, an OLT function, and the like are implemented in the processing execution unit 620 of the electrical processing unit 600.

The wavelength control unit 310 notifies the processing execution unit 620 of a determination condition for determining which signal is to be subjected to electrical processing and the type of electrical processing to be performed on the signal. The processing execution unit 620 stores information on the determination condition and the type of electrical processing of which the wavelength control unit 310 has notified.

For example, in step S5 of Fig. 33, the wavelength control unit 310 determines whether to perform electrical processing for communication between a subscriber terminal 40 which has transmitted a connection request (hereinafter referred to as a requesting subscriber terminal 40) and a communication destination subscriber terminal 40. The wavelength control unit 310 determines whether to perform electrical processing, and when electrical processing is to be performed, determines which electrical processing is to be performed, according to the distance between the requesting subscriber terminal 40 and the communication destination subscriber terminal 40 which oppose each other, a service provided to the requesting subscriber terminal 40 or the communication destination subscriber terminal 40, and the like. Upon determining that electrical processing (hereinafter referred to as transmission signal electrical processing) is to be performed on a signal addressed to the communication destination subscriber terminal 40 from the requesting subscriber terminal 40, the wavelength control unit 310 assigns a first transmission wavelength and a second transmission wavelength among idlewavelengths. Further, upon determining that electrical processing (hereinafter referred to as reception signal electrical processing) is to be performed on a signal addressed to the requesting subscriber terminal 40 from the communication destination subscriber terminal 40, the wavelength control unit 310 assigns a first reception wavelength and a second reception wavelength among idle wavelengths.

The first transmission wavelength is a wavelength for routing an optical transmission signal, which is an optical signal addressed to the communication destination subscriber terminal 40 from the requesting subscriber terminal 40, to the electrical processing unit 600. The second transmission wavelength is a wavelength for routing the transmission signal, on which the electrical processing unit 600 has performed transmission signal electrical processing, to a port corresponding to the communication destination subscriber terminal 40. The first reception wavelength is a wavelength for routing a reception signal, which is an optical signal addressed to the requesting subscriber terminal 40 from the communication destination subscriber terminal 40, to the electrical processing unit 600. The second reception wavelength is a wavelength for routing the reception signal, on which the electrical processing unit 600 has performed reception signal electrical processing, to a port corresponding to the requesting subscriber terminal 40. The first transmission wavelength and the second transmission wavelength may be the same wavelength and the first reception wavelength and the second reception wavelength may be the same wavelength.

Upon determining that transmission signal electrical processing is to be performed, the wavelength control unit 310 sets information on a first transmission wavelength as a transmission wavelength in a wavelength instruction to be transmitted to the requesting subscriber terminal 40. Upon determining that reception signal electrical processing is to be performed, the wavelength control unit 310 sets, information on a second reception wavelength as a reception wavelength in a wavelength instruction to be transmitted to the requesting subscriber terminal 40.

Upon determining that transmission signal electrical processing is to be performed, the OPS 300 issues an instruction to use the second transmission wavelength as a reception wavelength for the communication destination subscriber terminal 40. Upon determining that reception signal electrical processing is to be performed, the OPS 300 issues an instruction to use the first transmission wavelength as a transmission wavelength for the communication destination subscriber terminal 40. For example, in an optical gateway control unit 301 that controls an optical gateway 200 in which the communication destination subscriber terminal 40 is accommodated, a wavelength control unit 310 instructs a control device 230 to transmit a wavelength instruction in which a reception wavelength and a transmission wavelength for the communication destination subscriber terminal 40 are set.

Further, upon determining that transmission signal electrical processing is to be performed, the wavelength control unit 310 generates first instruction information in which a determination condition for identifying a transmission signal addressed to the communication destination subscriber terminal 40 from the requesting subscriber terminal 40, the type of transmission signal electrical processing to be performed on the transmission signal, a first transmission wavelength, and a second transmission wavelength are associated. Upon determining that reception signal electrical processing is to be performed, the wavelength control unit 310 generates second instruction information in which a determination condition for identifying a reception signal addressed to the requesting subscriber terminal 40 from the communication destination subscriber terminal 40, the type of reception signal electrical processing to be performed on the reception signal, a first reception wavelength, and a second reception wavelength are associated. The wavelength control unit 310 transmits an electrical processing execution instruction, in which the generated first and second instruction information is set, to the electrical processing unit 600.

When transmission signal electrical processing is performed, the optical switch control unit 320 controls the optical switch 210 such that a transmission signal of a first transmission wavelength transmitted by the requesting subscriber terminal 40 is output to the electrical processing unit 600 and the transmission signal of a second transmission wavelength input from the electrical processing unit 600 is output to a transmission line 541 corresponding to the communication destination subscriber terminal 40. When reception signal electrical processing is performed, the optical switch control unit 320 controls the optical switch 210 such that a reception signal of a first transmission wavelength input from a transmission line 542 corresponding to the communication destination subscriber terminal 40 is output to the electrical processing unit 600 and the reception signal of a second transmission wavelength input from the electrical processing unit 600 is output to a transmission line 522 corresponding to the requesting subscriber terminal 40.

For example, it is assumed that transmission signal electrical processing and reception signal electrical processing are performed on optical signals between a subscriber terminal 40-2 and a communication destination subscriber terminal 40 of the link end C. A transmission signal of a first transmission wavelength transmitted by the subscriber terminal 40-2 is output to the electrical processing unit 600 via the optical switch 210. The O/E conversion unit 610 converts the transmission signal input from the optical switch 210 into an electrical signal. The processing execution unit 620 refers to predetermined information included in the transmission signal converted into the electrical signal, and upon determining that a determination condition included in first instruction information is satisfied, performs transmission signal electrical processing corresponding to the determination condition on the transmission signal. For example, the processing execution unit 620 performs error correction such as forward error correction (FEC). The E/O conversion unit 630 converts the transmission signal, which is an electrical signal on which the processing execution unit 620 has performed error correction, into an optical signal of a second transmission wavelength indicated by the first instruction information, and outputs the optical signal to the optical switch 210. The optical switch 210 outputs a transmission signal of the second transmission wavelength to a transmission line 541 corresponding to the link end C. Performing error correction improves transmission characteristics.

The optical switch 210 outputs a reception signal of a first reception wavelength input from a transmission line 542 corresponding to the communication destination subscriber terminal 40 of the link end C to the electrical processing unit 600. The O/E conversion unit 610 converts the reception signal input from the optical switch 210 into an electrical signal. The processing execution unit 620 refers to predetermined information included in the transmission signal converted into an electrical signal, and upon determining that a determination condition included in second instruction information is satisfied, performs reception signal electrical processing corresponding to the determination condition on the reception signal. The E/O conversion unit 630 converts the reception signal, which is an electrical signal on which the processing execution unit 620 has performed reception signal electrical processing, into an optical signal of a second reception wavelength indicated by the second instruction information, and outputs the optical signal to the optical switch 210. The optical switch 210 outputs the transmission signal of the second reception wavelength to a transmission line 522 corresponding to the subscriber terminal 40-2.

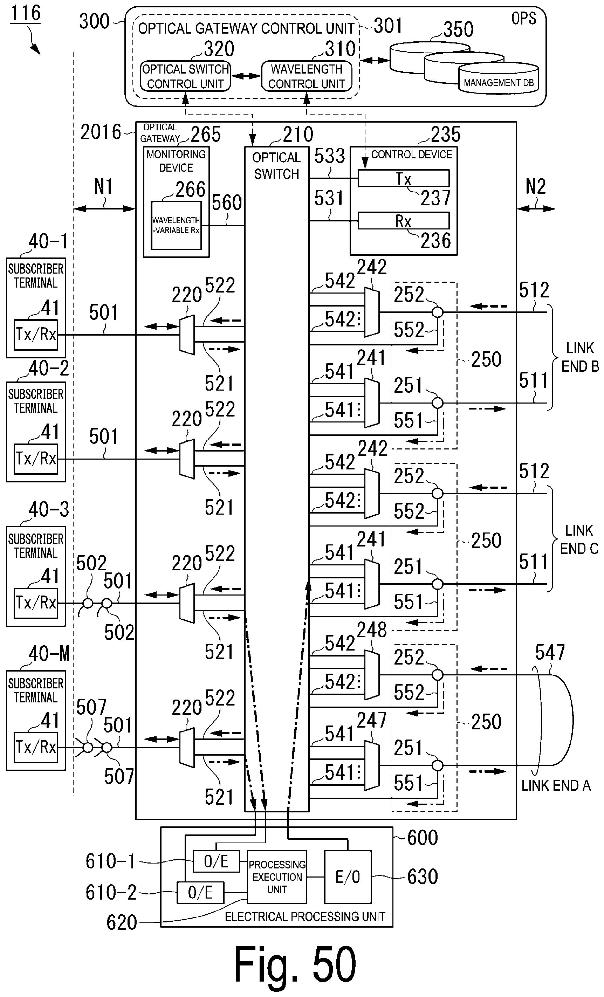

Fig. 50 is a diagram illustrating an exemplary configuration of an optical access system 116 when the electrical processing unit 600 performs signal multiplexing. The electrical processing unit 600 includes O/E conversion units 610-1 and 610-2 as a plurality of O/E conversion units 610.

An upstream optical signal of a subscriber terminal 40-3 and an upstream optical signal of a subscriber terminal 40-M are connected to the electrical processing unit 600 via the optical switch 210. The OLT function is implemented in the electrical processing unit 600. The processing execution unit 620 of the electrical processing unit 600 performs processing of the OLT function at an electrical stage. A plurality of subscriber terminals 40 are connected to the OLT. The processing execution unit 620, in which the OLT function is implemented, collectively manages the subscriber terminals 40.

The O/E conversion unit 610-1 converts an upstream optical signal of the subscriber terminal 40-3 input from the optical switch 210 into an electrical signal and outputs it to the processing execution unit 620. The O/E conversion unit 610-2 converts an upstream optical signal of the subscriber terminal 40-M input from the optical switch 210 into an electrical signal and outputs it to the processing execution unit 620. The processing execution unit 620 combines upstream electrical signals transmitted from the subscriber terminal 40-3 and the subscriber terminal 40-M into one signal and outputs the combined signal to the E/O conversion unit 630. The E/O conversion unit 630 converts the upstream electrical signal output by the processing execution unit 620 into an optical signal according to a wavelength instructed by the control device 230 and outputs the optical signal to the optical switch 210. The optical switch 210 outputs the upstream optical signal input from the electrical processing unit 600 to a transmission line 541 corresponding to the link end C. In this way, the electrical processing unit 600 receives a plurality of optical signals dropped by the optical gateway 2016, converts them into electrical signals, and multiplexes signals whose target link ends are the same by a multiplexing circuit, and then converts the multiplexed signal back to an optical signal and transmits the optical signal to the optical gateway 2016. This can increase the transmission speed. Although Figs. 49 and 50 illustrate examples in which one electrical processing unit is provided, the optical access system may be configured to include a plurality of electrical processing units.

The power splitters 507 between the subscriber terminals 40 and the optical gateway 2016 may each be a wavelength multiplexer/demultiplexer. For example, when the optical access system 116 is a WDM-PON, wavelength demultiplexers are used between the subscriber terminals 40 and the optical gateway 2016.

### Seventh Embodiment

In the present embodiment, optical switches of different link ends are connected in a ring configuration. Hereinafter, differences from the above embodiments will be mainly described.

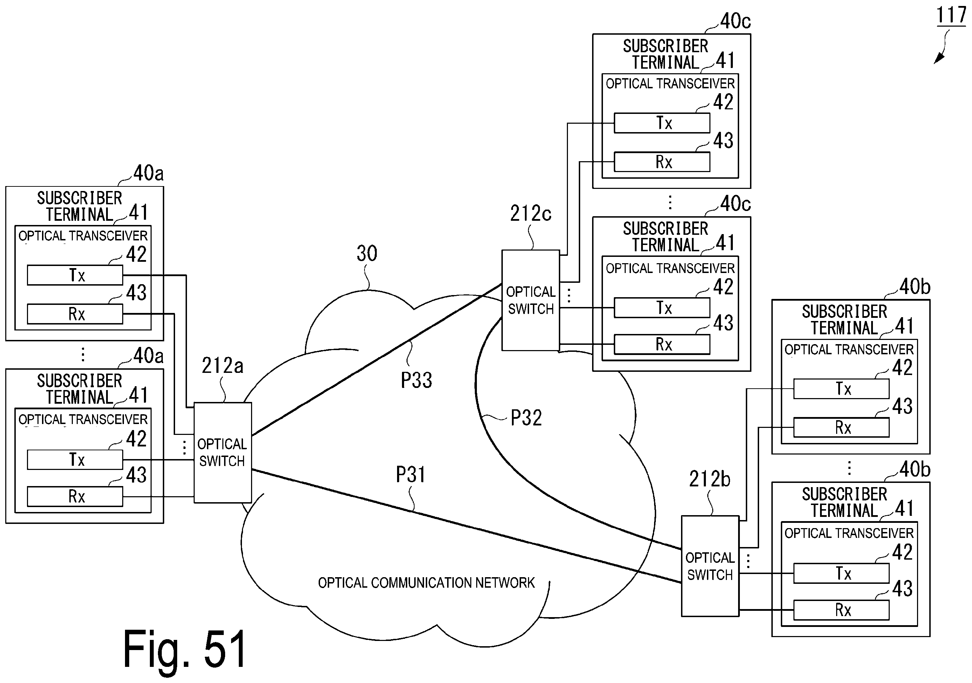

Fig. 51 is a diagram illustrating an exemplary configuration of an optical access system 117. The optical access system 117 has a configuration in which optical switches 212 of three or more different link ends are connected in a ring configuration via an optical communication network 30. In the example illustrated in Fig. 51, the optical access system 117 has a configuration in which an optical switch 212a which is an optical switch 212 of a link end A, an optical switch 212b which is an optical switch 212 of a link end B, and an optical switch 212c which is an optical switch 212 of a link end C are connected in a ring configuration. A path between the optical switch 212a and the optical switch 212b in the optical communication network 30 will be referred to as a path P31, a path between the optical switch 212b and the optical switch 212c in the optical communication network 30 will be referred to as a path P32, and a path between the optical switch 212c and the optical switch 212a in the optical communication network 30 will be referred to as a path P33. One or more subscriber terminals 40a are connected to the optical switch 212a, one or more subscriber terminals 40b are connected to the optical switch 212b, and one or more subscriber terminals 40c are connected to the optical switch 212c.

The optical switches or the optical gateways of the above embodiments are used as the optical switches 212. For example, it is assumed that the link end B in Figs. 6 to 10, 27, 34 to 50 is a counterclockwise link end in the ring illustrated in Fig. 51 and the link end C in Figs. 6 to 10, 27, and34 to 50 is a clockwise link end in the ring illustrated in Fig. 51. In this case, the optical switch 212a of the link end A is connected to the optical switch 212b of the link end B via the path P31 and the optical switch 212b of the link end B is connected to the optical switch 212a of the link end A via the path 32, the optical switch 212-c of the link end C, and the path P33. The optical switch 212a of the link end A is connected to the optical switch 212c of the link end C by the path P33 and the optical switch 212c of the link end C is connected to the optical switch 212a of the link end A via the path P32, the optical switch 212b of the link end B, and the path P31.

Therefore, a connection from the optical switch 212a of the link end A to the optical switch 212b of the link end B via the optical switch 212c of the link end C by a clockwise path can be made using a counterclockwise connection from the optical switch 212a of the link end A to the optical switch 212b of the link end B as a backup, and the same connection in the opposite direction is also possible. Similarly, a connection from the optical switch 212-a of the link end A to the optical switch 212c of the link end C via the optical switch 212b of the link end B by a counterclockwise path can be made using a clockwise connection from the optical switch 212a of the link end A to the optical switch 212c of the link end C as a backup, and the same connection in the opposite direction is also possible.

Further, a counterclockwise path passing through the path P31, the optical switch 212b of the link end B, the path P32, the optical switch 212c of the link end C, and the path P33 or alternatively a counterclockwise path passing through the path P33, the optical switch 212c of the link end C, the path P32, the optical switch 212b of the link end B, and the path P31 can also be used as a backup for a connection between subscriber terminals 40a connected to the optical switch 212a of the link end A.

For example, in Fig. 14, the medium-distance line P2 may be used as a counterclockwise path of the ring and the medium-distance line P3 may be used as a clockwise path of the ring. Any one of the link ends #1 to #q in Figs. 15 and 18 may be used as the counterclockwise link end of the ring and another thereof may be used as the clockwise link end of the ring. Further, when Figs. 25 and 26 are the optical switch 1010 in one optical gateway, any one of the uplinks #11 to #43 may be used as a counterclockwise path of the ring and another thereof may be used as a clockwise path of the ring. Paths not selected as paths of the ring here may be used as paths of the ring similar to those selected as paths of the ring, may be used as oblique lines other than those of the ring, may be connected to subscriber terminals 40, and may be connected to other optical switches 1010 illustrated in Figs. 25 and 26.

### Eighth Embodiment

An optical access system of the present embodiment has a function of stopping connections from subscriber terminals to an optical gateway. The optical access system realizes this function by providing, between each subscriber terminal and an optical switch included in the optical gateway, a shutter unit that performs switching between inputting and blocking an optical signal transmitted from the subscriber terminal to the optical switch. This allows the optical gateway to receive optical signals from subscriber terminals which are authorized for communication and not to receive optical signals from subscriber terminals which are not authorized for communication.

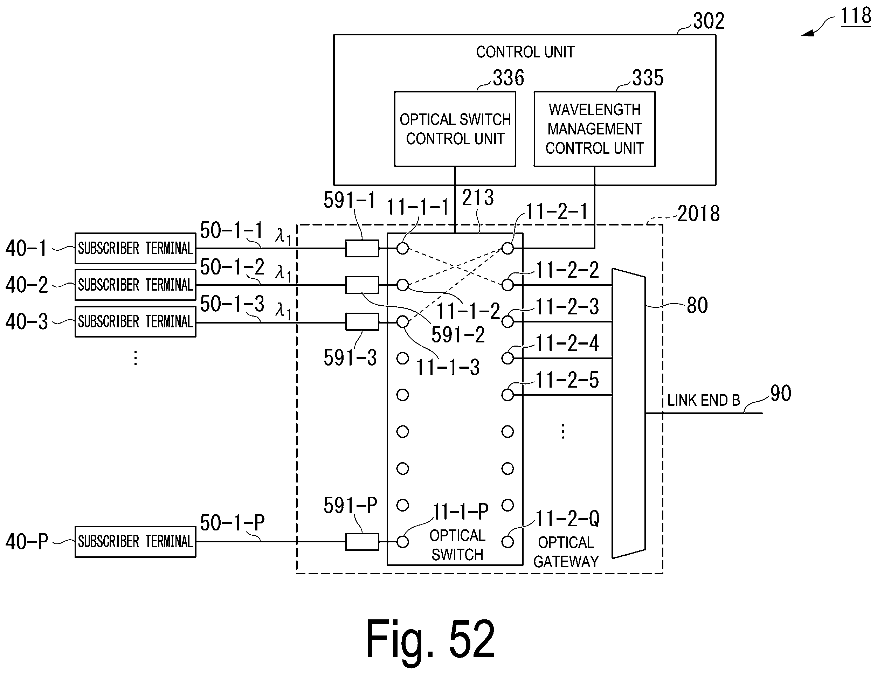

Fig. 52 is a configuration diagram of an optical access system 118. The optical access system 118 illustrated in Fig. 52 includes a control unit 302 and an optical gateway 2018. The optical gateway 2018 includes an optical switch 213, shutters 591, and a WDM device 80.

The control unit 302 is the control unit 20 or the OSP 300 in the above embodiments. The control unit 302 includes a wavelength management control unit 335 and an optical switch control unit 336. When the control unit 302 is the control unit 20 in the above embodiments, the wavelength management control unit 335 is the wavelength management control unit 25 in the above embodiments and the optical switch control unit 336 is the optical switch control unit 26 in the above embodiments. When the control unit 302 is the OSP 300 in the above embodiments, the wavelength management control unit 335 is the wavelength control unit 310 and the control device 230 or the control device 235 in the above embodiments and the optical switch control unit 336 is the optical switch control unit 320 in the above embodiments.

Each optical switch of the above embodiments can be used as the optical switch 213. The optical switch 213 has ports 11-1-1 to 11-1-P (where P is an integer of 2 or more) and ports 11-2-1 to 11-2-Q (where Q is an integer of 2 or more). Each port 11-1-p is connected to a subscriber terminal 40 via a transmission line 50-1-p (where p is an integer of 1 or more and P or less). The subscriber terminal 40 connected to the port 11-1-p will be referred to as a subscriber terminal 40-p. The port 11-2-1 is connected to the wavelength management control unit 335. The ports 11-2-2, 11-2-3, 11-2-4, 11-2-5, ... are connected to the WDM device 80 via transmission lines. The WDM device 80 multiplexes optical signals of different wavelengths, which the optical switch 213 outputs from the ports 11-2-2, 11-2-3, 11-2-4, 11-2-5, ..., and outputs the multiplexed optical signal to a multiplexed communication transmission line 90. The WDM device 80 also wavelength-demultiplexes an optical signal received via the multiplexed communication transmission line 90 and inputs the demultiplexed optical signals into the ports 11-2-2, 11-2-3, 11-2-4, 11-2-5, ... of the optical switch 213. The optical gateway 2018 may not include the WDM device 80 while the ports 11-2-2, 11-2-3, 11-2-4, 11-2-5, ... of the optical switch 213 are connected to subscriber terminals 40 or an upper level network via transmission lines 50-2.

The function of passing and blocking optical signals in the optical gateway 2018 will be described with reference to Fig. 52. Wavelengths corresponding to communication destinations are assigned to a plurality of subscriber terminals 40 connected to the optical gateway 2018. For example, individual wavelengths are assigned to a plurality of subscriber terminals 40 connected to the optical gateway 2018. On the other hand, a subscriber terminal 40 that is not authorized to connect to the optical gateway 2018 may occur, such as when a malicious user connects to a network. In such a case, it is conceivable that an optical signal of a subscriber terminal 40 which is not authorized for connection collides with optical signals of other subscriber terminals 40, thus adversely affecting the communication. Therefore, shutters 591 are installed between the subscriber terminals 40 and the optical switch 213 in the optical gateway 2018. In Fig. 52, a shutter 591 installed on the transmission line 50-1-p between the subscriber terminal 40-p and the port 11-1-p of the optical switch 213 will be referred to as a shutter 591-p.

The shutter 591 is an example of a shutter unit that performs switching between inputting and blocking an optical signal transmitted from the subscriber terminal 40 to the optical switch 213. Any device can be used as the shutter 591 as long as it can physically pass or block light. For example, an optical shutter such as a wavelength-variable filter or a wavelength-variable optical attenuator can be used as the shutter 591. The optical switch 13 can receive only optical signals from authorized subscriber terminals 40 by controlling the state of each shutter 591 such that it is set to a passing or blocking state. This prevents optical signals from malicious users.

A case where a new subscriber terminal 40 is connected to the optical gateway 2018 will be considered here. A new subscriber terminal 40 is first connected to the wavelength management control unit 335 and the wavelength management control unit 335 performs, for example, assignment of a wavelength to be used for communication with a communication destination to the new subscriber terminal 40. Therefore, the port 11-2-1 connected to the wavelength management control unit 335 is set as the connection destination of ports 11-1 to which no subscriber terminals 40 are connected.

When the new subscriber terminal 40 is connected to a port 11-1 of the optical switch 213, the new subscriber terminal 40 outputs a connection request optical signal to request new registration from the optical gateway 2018. Here, if a plurality of subscriber terminals 40 simultaneously output connection request optical signals of the same wavelength, a signal collision occurs in the wavelength management control unit 335.

In Fig. 52, a subscriber terminal 40-1 communicates with a subscriber terminal 40 of a link end B by an optical signal of a wavelength λ₁. The optical signal of the wavelength λ₁ output by the subscriber terminal 40-1 passes through the shutter 591-1 and is input to the port 11-1-1. The optical switch 213 outputs the optical signal input from the port 11-1-1 to the port 11-2-2. The WDM device 80 multiplexes optical signals output from the ports 11-2-2, 11-2-3, ..., and outputs the multiplexed optical signal to the multiplexed communication transmission line 90.

On the other hand, it is assumed that a new subscriber terminal 40-2 is connected to the port 11-1-2 of the optical switch 213 via the transmission line 50-1-2 and a new subscriber terminal 40-3 is connected to the port 11-1-3 of the optical switch 213 via the transmission line 50-1-3. The subscriber terminal 40-2 and the subscriber terminal 40-3 transmit optical signals of the wavelength λ₁ for requesting new registration. The connection destinations of the ports 11-1-2 and 11-1-3 are the port 11-2-1 which is an initial value of the connection destination. If the subscriber terminal 40-2 and the subscriber terminal 40-3 simultaneously output connection request optical signals of the wavelength λ₁, a signal collision occurs in the wavelength management control unit 335. The occurrence of this signal collision leads to failure of the registration of the new subscriber terminals 40-2 and 40-3.

Therefore, the states of the shutters 591 installed between the subscriber terminals 40 and the optical switch in the optical gateway 2018 are controlled such that a signal of only one of the subscriber terminals 40 that is newly registered in the control unit 302 is connected to the wavelength management control unit 335 via the optical switch 213. For example, the shutter 591-2 is set to a state of passing optical signals and the shutter 591-3 is set to a state of blocking optical signals. Then, after the subscriber terminal 40-2 switches to a wavelength assigned by the wavelength management control unit 335, the shutter 591-3 is set to a state of passing optical signals. By doing so, it is possible to avoid collision of optical signals in the wavelength management control unit 335.

The connection destination of each port 11-1 of the optical switch 213 is the wavelength management control unit 335 in an initial state as described above. Therefore, if a malicious user connects to a port 11-1 in an initial state, the wavelength management control unit 335 may be attacked. Thus, the states of the shutters 591 are controlled such that the ports 11-1 in an initial state of the optical switch 213 are prevented from receiving optical signals from unauthorized subscriber terminals 40. For example, shutters 591 corresponding to registered subscriber terminals 40 and a shutter 591 corresponding to a newly registered subscriber terminal 40 are set to a passing state and other shutters 591 are set to a blocking state. Then, the optical switch 213 performs control such that an optical signal of the newly registered subscriber terminal 40 is input from the port 11-1 in an initial state and the input optical signal is output to the wavelength management control unit 335 from the port 11-2-1. By doing so, it is possible to prevent optical signals from malicious users.

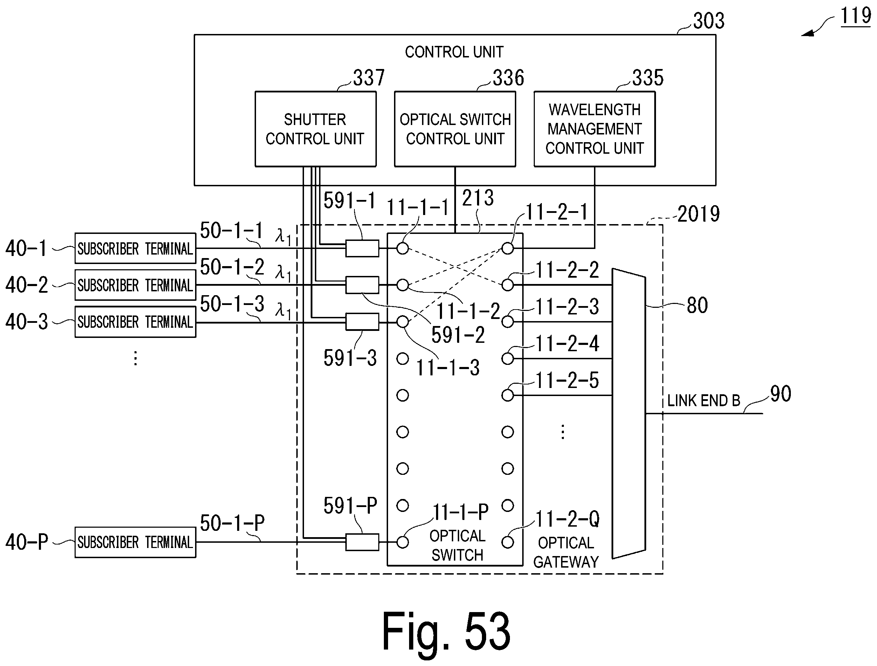

In order to perform the above control, the control unit may be provided with a shutter control unit that controls each shutter as illustrated in Fig. 53. This makes it possible to control each shutter from the outside.

Fig. 53 is a configuration diagram of an optical access system 119. In the optical access system 119 illustrated in Fig. 53, the same parts as those of the optical access system 118 illustrated in Fig. 52 are denoted by the same reference signs and description thereof is omitted. The optical access system 119 differs from the optical access system 118 illustrated in Fig. 52 in that it includes a control unit 303 instead of the control unit 302. The control unit 303 differs from the control unit 302 illustrated in Fig. 52 in that it further includes a shutter control unit 337. Providing the shutter control unit 337 allows the shutter 591 to be controlled from the outside.

The shutter control unit 337 shares various information such as subscriber information with other control functional units in the control unit 303. When a new subscriber terminal 40-p is connected, the shutter control unit 337 performs control such that a shutter 591-p corresponding to the subscriber terminal 40-p is switched from a blocking state to a passing state, based on subscriber information or the like registered in the control unit 303. Thus, when a new subscriber terminal 40 is connected, the shutter control unit 337 performs control such that shutters 591 corresponding to registered subscriber terminals 40 and a shutter 591 corresponding to the new subscriber terminal 40 are set to a passing state and other shutters 591 are set to a blocking state.

When a plurality of subscriber terminals 40 are newly connected to the optical gateway 2019 at the same time, the shutter control unit 337 determines the order of the subscriber terminals 40 according to the priorities of the subscriber terminals 40, the distances from the subscriber terminals 40 to the optical gateway 2019, or the like. For example, if logical conditions such as the priorities are the same, the shutter control unit 337 determines the order based on physical conditions such as the distances. The shutter control unit 337 performs control such that the state of a shutter 591 corresponding to each of the subscriber terminals 40 is switched from a blocking state to a passing state in a certain period of time according to the determined order. A subscriber terminal 40 newly connected to the optical gateway 2019 repeatedly outputs a connection request optical signal at regular intervals. Thus, a connection request optical signal transmitted at the timing while the shutter 591 is switched to a passing state is output to the wavelength management control unit 335.

Even when the wavelength management control unit 335 has a wavelength-variable selective reception function, a signal collision occurs in the wavelength management control unit 335 if the wavelengths of optical signals output from a plurality of subscriber terminals 40 newly connected to the optical switch 213 are the same. Thus, the shutters 591 are required.

A light detection function may also be implemented in each shutter 591. For example, each shutter 591 is provided with a photodetector that detects light. The shutter 591 detects an optical signal from a subscriber terminal 40 newly connected to a transmission line 50-1 by the optical detection function and notifies the control unit 302 of the detected optical signal. The shutter 591 may notify the control unit 302 upon detecting light having a predetermined intensity or higher or may notify the control unit 302 of information on the intensity of received light. The optical switch control unit 336 of the control unit 302 controls the optical switch 213 such that the subscriber terminal 40 corresponding to the shutter 591 and the wavelength management control unit 335 are connected and performs an initial connection operation. Alternatively, upon determining that the photodetector of the shutter 591 has detected signal light that is too strong, the shutter control unit 337 sets the shutter 591 to a blocking state such that the optical signal can be blocked as an abnormal signal. The signal light that is too strong is light of a level that damages components such as the optical switch 213 or causes signal deterioration due to nonlinear optical effects.

In addition, when a connection from a new subscriber terminal 40 has been detected even though its registration information such as subscriber information has not been registered in the control unit 302, that is, even though there is no plan for the connection to the optical gateway, the shutter control unit 337 determines that the connection has been made by a malicious user and can take a measure such as closing the shutter 591. For example, information on a subscriber terminal 40 to be newly connected is registered in the control unit 302 in advance. This information includes information on a port 11-1 corresponding to the subscriber terminal 40 to be newly connected and information on a period during which it is newly connected. Upon detecting an optical signal, the photodetector of the shutter 591-p notifies the control unit 302 of the detection. The shutter control unit 337 identifies a port 11-1-p corresponding to the shutter 591-p which has transmitted the notification. If there is no registration information of the subscriber terminal 40 newly connected to the port 11-1-p at the time when the notification is received, the shutter control unit 337 determines that the connection is made by a malicious user. In this case, the shutter control unit 337 sets the shutter 591-p which has transmitted the notification to a blocking state.

The optical signal can also be blocked when the port 11-1 of the optical switch is in an open state where the port 11-1 is not connected to anything, if possible in principle.

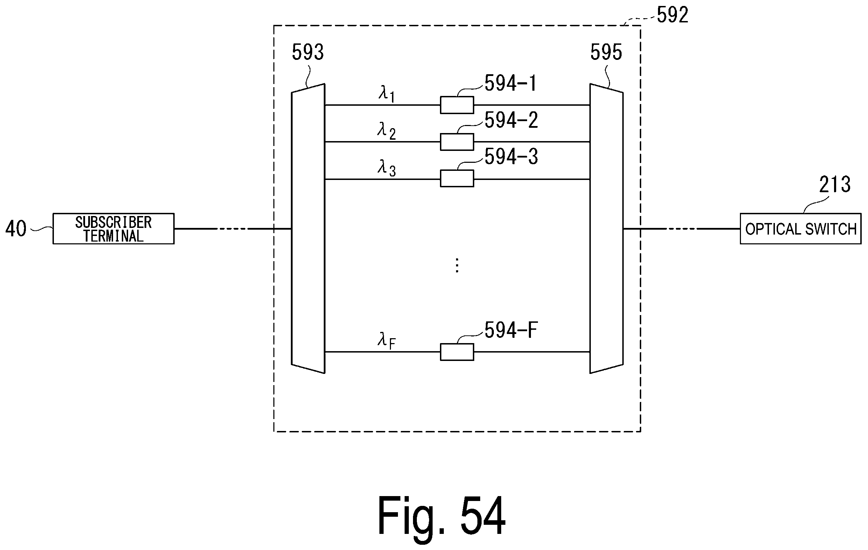

The optical gateways 2018 and 2019 may be provided with a shutter device 592 illustrated in Fig. 54 instead of a shutter 591. Fig. 54 is a diagram illustrating an exemplary configuration of the shutter device 592. The shutter device 592 includes a wavelength multiplexer/demultiplexer 593, F shutters 594 (where F is an integer of 2 or more), and a wavelength multiplexer/demultiplexer 595. The F shutters 594 will be referred to as shutters 594-1 to 594-F. The wavelength multiplexer/demultiplexer 593 demultiplexes an optical signal received from a subscriber terminal 40 into wavelengths λ₁ to λ_{F} and outputs the demultiplexed optical signals. A shutter 594-f (where f is an integer of 1 or more and F or less) transmits or blocks the wavelength of a wavelength λ_{f} demultiplexed by the wavelength multiplexer/demultiplexer 593. The same devices as the shutters 591 can be used as the shutters 594. The wavelength multiplexer/demultiplexer 595 multiplexes optical signals transmitted by the shutters 594-1 to 594-F and outputs the multiplexed optical signal to the optical switch 213.

The shutter device 592 makes it possible to transmit or block optical signals of one or more desired wavelengths. The same number of shutters 594 as the number of wavelengths to be used need to be implemented in the shutter device 592.

A light detection function may be implemented in each shutter 594, similar to the above shutters 591. Upon detecting light, the shutter 594 notifies the control unit 302 or 303 of the light detection. The optical switch control unit 336 identifies a shutter device 592 in which the shutter 594-f which has transmitted the notification is implemented and a wavelength λ_{f} corresponding to the shutter 594-f which has transmitted the communication. The wavelength management control unit 335 determines whether the subscriber terminal 40 connected to the identified shutter device 592 is authorized to transmit an optical signal of the identified wavelength λ_{f}. Thus, if a subscriber terminal 40 outputs an optical signal of a wrong wavelength, the wavelength management control unit 335 can detect the signal. The wavelength management control unit 335 can also transmit a signal for wavelength setting again to the subscriber terminal 40, which has output the optical signal of the wrong wavelength, to allow it to reset the wavelength.

On the other hand, the shutter device 592 is also effective when the subscriber terminal 40 uses a plurality of wavelengths. For example, when the subscriber terminal 40 uses the wavelengths λ₁ and λ₂, the corresponding shutters 594-1 and 594-2 are opened and the other shutters 594-3 to 594-F are closed. This makes it possible to limit wavelengths that can be used by the user while preventing the inflow of signals of the other wavelengths. When the subscriber terminal 40 has started using a new wavelength, for example, the wavelength λ₃, the corresponding shutter 594-3 is opened. This allows the subscriber terminal 40 to start using an optical signal (an optical service) that uses the new wavelength.

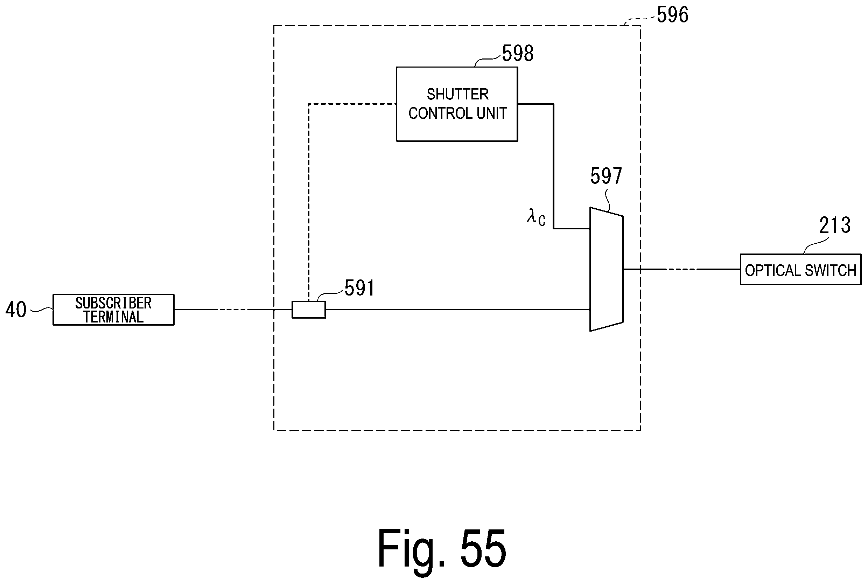

The optical gateways 2018 and 2019 may also be provided with a shutter device 596 illustrated in Fig. 55 instead of each shutter 591. Fig. 55 is a diagram illustrating an exemplary configuration of the shutter device 596. The shutter device 596 includes a shutter 591, a control wavelength demultiplexer 597, and a shutter control unit 598. The control wavelength demultiplexer 597 separates an optical signal of a wavelength λ_{c} used for controlling the shutter control unit 598 from a signal output by the optical switch 213. The optical signal of the wavelength λ_{c} used for controlling the shutter control unit 598 is transmitted from the control unit 302 or 303. The wavelength λ_{c} is a wavelength that is not used for communication of the subscriber terminal 40. The control wavelength demultiplexer 597 outputs the separated optical signal of the wavelength λ_{c} to the shutter control unit 598 and outputs an optical signal remaining after separation of the optical signal of the wavelength λ_{c} to the shutter 591. The shutter control unit 598 controls the shutter 591 such that it is set to a passing state or a blocking state based on the optical signal separated by the control wavelength demultiplexer 597.

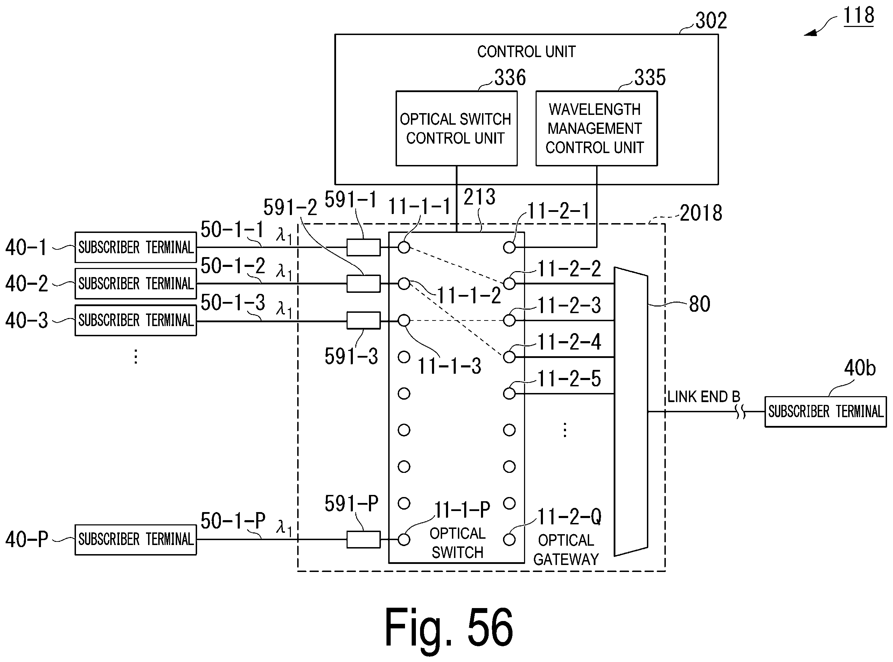

The optical access system 118 illustrated in Fig. 52 or the optical access system 119 illustrated in Fig. 53 enables time division multiplexing (TDM) communication. Fig. 56 is a diagram for explaining the operation of the optical access system 118 when it performs TDM communication. An example in which a plurality of subscriber terminals 40-1 to 40-3 communicate with a subscriber terminal 40b of a link end B will be described with reference to Fig. 56.

In Fig. 56, the subscriber terminals 40-1, 40-2, and 40-3 perform TDM communication with the subscriber terminal 40b connected to an optical gateway of another link end, for example, the link end B, via the optical gateway 2018. That is, the subscriber terminal 40b transmits and receives signals to and from the subscriber terminals 40-1, 40-2, and 40-3 as burst signals. It is necessary to prevent collision between optical signals transmitted from the subscriber terminals 40-1, 40-2, 40-3 to the subscriber terminal 40b. Therefore, during the time when the subscriber terminal 40-1 communicates with the subscriber terminal 40b, the shutter 591-1 is set to a passing state and the shutters 591-2 and 591-3 are set to a blocking state. Thus, the subscriber terminals 40-2 and 40-3 cannot communicate with the subscriber terminal 40b. Next, during the time when the subscriber terminal 40-2 communicates with the subscriber terminal 40b, the shutter 591-2 is set to a passing state and the shutters 591-1 and 591-3 are set to a blocking state. Thus, the subscriber terminals 40-1 and 40-3 cannot communicate with the subscriber terminal 40b. Next, during the time when the subscriber terminal 40-3 communicates with the subscriber terminal 40b, the shutter 591-3 is set to a passing state and the shutters 591-1 and 591-2 are set to a blocking state. Thus, the subscriber terminals 40-1 and 40-2 cannot communicate with the subscriber terminal 40b.

As described above, of shutters 591 corresponding to subscriber terminals 40 communicating with the same communication destination, a shutter 591 corresponding to a subscriber terminal 40 which is at the time of communication is set to a passing state and shutters 591 corresponding to subscriber terminals 40 which are not at the time of communication are set to a blocking state. Thus, subscriber terminals 40 which are not at the time of communication are physically unable to communicate. In the case of the optical access system 119, the shutter control unit 337 switches the blocking and passing states of each shutter 591. When the gateway 2018 includes the shutter device 592 instead of the shutter 591, the subscriber terminal 40 switches the states of blocking and passing an optical signal of a wavelength to be used to communicate with the same communication destination as that of other subscriber terminals 40. In this way, the times at which shutter units corresponding to a plurality of subscriber terminals 40 having the same communication destination transmit and input optical signals transmitted from the subscriber terminals 40 to the optical switch 213 are displaced such that the times do not overlap. This prevents signal collisions between the subscriber terminals 40.

In the present embodiment, it has been described that the shutters are arranged in the optical gateway as an example of the arrangement location of shutters, but the shutters may be installed outside the optical gateway (for example, between the subscriber terminals and the optical gateway). Alternatively, the shutters may be arranged in the subscriber terminals.

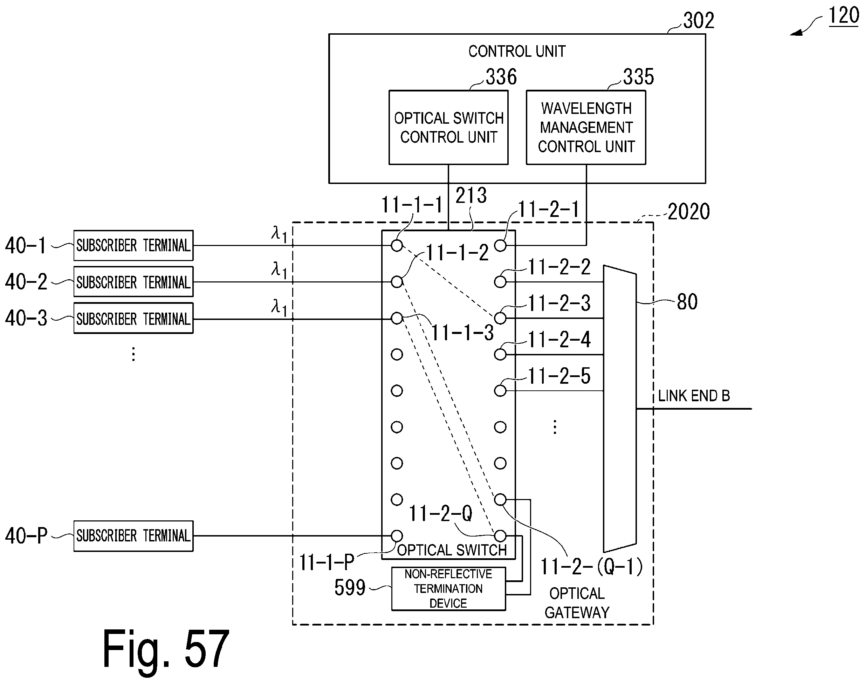

In the present embodiment, the optical access system may be configured to allow the optical switch to be controlled such that optical signals to be blocked are output to a termination device that terminates the optical signals as illustrated in Fig. 57, instead of being provided with shutters.

Fig. 57 is a configuration diagram of an optical access system 120. The optical access system 120 illustrated in Fig. 57 includes a control unit 302 and an optical gateway 2020. The optical gateway 2020 includes an optical switch 213, a WDM device 80, and a non-reflective termination device 599. Instead of the optical gateway 2020 being provided with the WDM device 80, ports 11-2-2, 11-2-3, 11-2-4, 11-2-5, ... of the optical switch 213 may be connected to subscriber terminals 40 or an upper level network via transmission lines 50-2. One or more ports 11-2 of the optical switch 213 are connected to the non-reflective termination device 599. In Fig. 57, ports 11-2-(Q - 1) and 11-2-Q are connected to the non-reflective termination device 599. The non-reflective termination device 599 terminates received optical signals and does not output the optical signals.

When subscriber terminals 40-2 and 40-3 are not authorized to communicate, the optical switch control unit 336 controls the optical switch 2020 such that an optical signal input from the port 11-1-2 is output to the port 11-2-(Q - 1) and an optical signal input from the port 11-1-3 is output to the port 1-2-Q. Thus, the optical gateway 2020 blocks optical signals received from the subscriber terminals 40-2 and 40-3 such that the optical signals do not affect communication of the other subscriber terminals 40.

Photodetectors having an optical detection function may be implemented in the ports 11-1 on the subscriber terminal side of the optical switch 213 or may be implemented between the subscriber terminals 40 and the optical switch 213. Upon detecting light, each photodetector notifies the control unit 302 of the detection. The optical switch control unit 336 identifies a port 11-1 where the photodetector which has transmitted the notification is implemented or connected. Upon determining that the identified port 11-1 is not a port 11-1 connected to a subscriber terminal 40 which is authorized to communicate, the optical switch control unit 336 controls the optical switch 213 such that a signal input from the identified port 11-1 is output to a port 11-2 connected to the non-reflective termination device 599.

Superimposition of an AMCC signal on a main signal will be described. In the optical domain, the same wavelength is used for an AMCC signal and a main signal. A main signal is a signal such as that of a common public radio interface (CPRI) such as an on-off keying (OOK) signal of 10Gb/s (Gigabits per second). An AMCC signal is transmitted, for example, by superimposing a 1 MHz carrier wave on a main signal and conveys information by intensity modulation. Such a low-speed AMCC signal is superimposed on a main signal and the AMCC signal thus superimposed can be separated from the main signal.

In the electrical domain, different frequencies are used for an AMCC signal and a main signal. An AMCC signal has a narrower band than a main signal. For example, a power multiplexer combines a 10GHz electrical main signal and a 1 MHz electrical AMCC signal and a transmitter converts the combined signal into an optical signal to generate a main signal on which the AMCC signal is superimposed. Another frequency such as 500 kHz that does not overlap with the electrical main signal may be used as the carrier frequency and another modulation method such as phase modulation may be used as the modulation method.

The control devices 230 and 235, the monitoring devices 260 and 265, the monitoring control device 267, the wavelength control unit 310, and the optical switch control unit 320 described above may include a central processing unit (CPU), a memory, an auxiliary storage device, and the like that are connected by a bus and realize some or all of the above functions by executing programs. Some or all of the functions of the control devices 230 and 235, the monitoring devices 260 and 265, the monitoring control device 267, the wavelength control unit 310, and the optical switch control unit 320 may also be realized using hardware such as an application specific integrated circuit (ASIC), a programmable logic device (PLD), or a field programmable gate array (FPGA). The programs for the control devices 230 and 235, the monitoring devices 260 and 265, the monitoring control device 267, the wavelength control unit 310, and the optical switch control unit 320 may be recorded on a computer-readable recording medium. The computer-readable recording medium is, for example, a portable medium such as a magneto-optical disc, a ROM, or a CD-ROM or a storage device such as a hard disk built in a computer system. The programs may be transmitted over a telecommunication line.

The wavelength control unit 310 and the optical switch control unit 320 may be implemented using one information processing device or may be implemented using a plurality of information processing devices that are communicatively connected via a network.

According to the above embodiments, an optical communication apparatus includes an optical switch, a wavelength management control unit, and an optical switch control unit. The optical switch is connected to a plurality of transmission lines and outputs an optical signal input from one of the transmission lines to another of the transmission lines. The wavelength management control unit assigns a wavelength to a subscriber terminal according to a communication destination. The optical switch control unit controls the optical switch such that it outputs an optical signal transmitted from the subscriber terminal, to which a wavelength has been assigned, to a transmission line corresponding to its forwarding destination on a path from the subscriber terminal to the communication destination. In this way, the optical switch distributes the output destinations of optical signals according to the paths. The communication destination is, for example, another subscriber terminal that opposes the subscriber terminal to which the wavelength has been assigned. The forwarding destination is each of various devices or various functional units on the path from the subscriber terminal to the opposing subscriber terminal, such as the opposing subscriber terminal, a control unit, an electrical signal processing unit, or a power splitter (for example, a coupler).

The optical switch control unit controls the optical switch such that an optical signal input from a transmission line is output to a transmission line corresponding to a forwarding destination identified by a combination of a subscriber terminal that has transmitted the optical signal and the wavelength of the optical signal. Alternatively, the optical switch control unit controls the optical switch such that the optical signal is output to a port connected to a transmission line corresponding to a forwarding destination identified by a combination of the subscriber terminal that has transmitted the optical signal, the wavelength of the input optical signal, and a port from which the optical signal has been input. Alternatively, the optical switch control unit controls the optical switch such that the optical signal is output to a port connected to a transmission line corresponding to a forwarding destination identified by the input port alone, by the input port and the subscriber terminal, or by a combination of the input port and the wavelength if the wavelength and the subscriber terminal have a unique relationship in the optical switch.

According to the above embodiments, a setting that allows the use of a path corresponding to a destination can be made on a transceiver of a subscriber terminal and a signal transmitted from the subscriber terminal can be relayed according to the destination using the path. Further, after initial setting of the subscriber terminal, it is possible to relay the optical signal according to the destination while reducing delay as compared with the related art.

Although embodiments of the present invention have been described above in detail with reference to the drawings, the specific configurations thereof are not limited to those of the embodiments and also include designs or the like without departing from the spirit of the present invention.

### Reference Signs List

1 Optical communication system,
10, 10a, 10b, 10c, 10d, 10e, 10f, 10g, 34, 95a-1, 95a-2, 95b-1, 95b-2, 96a-1, 96a-2, 96b-1, 96b-2, 210, 211, 212a, 212b, 212c, 213, 1001, 1002, 1003, 1004, 1005, 1006, 1007, 1008, 1009a, 1009b, 1010-1 to 1010-4 Optical switch
11-1, 11-1-1 to 11-1-P, 11-2, 11-2-1 to 11-2-Q Port
20, 302, 303 Control unit
21, 41, 411, 412 Optical transceiver
22, 42, 237 Optical transmitter
23, 43, 232, 236 Optical receiver
25, 335 Wavelength management control unit
26, 320, 336 Optical switch control unit
30 Optical communication network
31 WDM access ring network
32-1 to 32-4 Add/drop node
33 Demultiplexing unit
35 Multiplexing unit
40, 40-1 to 40-M, 40a-1 to 40a-3, 40b-1 to 40b-3, 40c-1 to 40c-3, 40a-1-1, 40a-1-2, 40-p-1 to 40-p-Np, 40-p-N, 40-p to 40-(p+N) Subscriber terminal
46-1, 46-3 User
46-2 Mobile base station
50, 50-1, 50-2, 50-1-p to 50-1-(p+N), 50-1-p1 to 50-1-pN, 50-1-p-1 to 50-p-Np, 50-2-1 to 50-2-q, 50-2-(N-1), 50-2-N, 50-2-q-1 to 50-2-q-N, 50-2-(1+N), 53, 54a, 54b, 54c, 54d, 92, 93-1 to 93-N, 501, 503, 504, 511, 512, 521, 522, 531, 533, 534, 540, 541, 542, 543-1, 543-2, 544, 545, 546, 547, 548, 549, 551, 551a, 552, 552b, 555, 560, 561, 562, 563, 570, 571, 572, 573, 574, 575, 581, 582, 583, 584, 585, 586, 587, 588, 589 Transmission line 51, 73 Return transmission line
55, 55-1, 55-2, 55-p, 55-(p+1), 56, 57a, 57b, 61, 66, 69, 71, 72, 251, 251a, 251b, 252, 252b, 254, 258, 259, 270, 271, 272, 273, 502, 507 Power Splitter
58, 59 Distribution unit
60, 65 Monitoring circuit
67, 68, 80, 80a, 80b, 81, 89, 97 WDM device
82a-1, 82a-2, 82b-1, 82b-2, 241, 247 Multiplexer
83a-1, 83a-2, 83b-1, 83b-2, 242, 248 Demultiplexer
85 O/E conversion unit
86 Processing execution unit
87 E/O conversion unit
88 Storage unit
90, 91 Multiplexed communication transmission line
100, 101, 102, 103, 104, 105, 106, 107, 108, 109, 110, 111, 112, 113, 114, 115, 116, 117, 118, 119, 120 Optical access system
200, 201, 202, 203, 204, 205, 206, 207, 208, 209, 2010, 2011, 2012, 2013, 2014, 2015, 2016, 2018, 2019, 2020 Optical gateway
220, 238, 243, 244, 245, 249, 256, 257, 593, 595 Wavelength multiplexer/demultiplexer 230 Control device
231, 261 Wavelength demultiplexer
233, 269 Wavelength-variable transmitter
235 Control device
250, 250a, 250b, 253, 255 Splitting portion
260, 265 Monitoring device
262 Optical receiver
266 Wavelength-variable optical receiver
267 Monitoring control device
268 Wavelength-variable receiver
300 Operation system
301 Optical gateway control unit
310 Wavelength control unit
337 Shutter control unit
350 Management database
452 Wavelength-variable filter
453 Receiver
454 WDM filter
591-1 to 591, 594-1 to 594-m Shutter
592, 596 Shutter device
597 Control wavelength demultiplexer
598 Shutter control unit
599 Non-reflective termination device
84, 600 Electrical processing unit
861 Processor
862 Accelerator

## Claims

1. An optical communication system that performs optical transmission with subscriber terminal, and relays optical signal according to destination, the optical communication system comprising:
a control unit configured to communicate with the subscriber terminal by using a control signal;
an access control unit configured to permit a main signal communication for the subscriber terminal;
an add/drop unit configured to input optical signal from the subscriber terminal, and output optical signal to the subscriber terminal; and
a multiplexed separation unit configured to perform a line concentration of optical path from the subscriber terminal to another path in an upstream, and perform a distribution of optical path from the another path to the subscriber terminal in a downstream.

2. An optical communication apparatus that performs optical transmission with subscriber terminal, and relays optical signal according to destination, the optical communication apparatus comprising:
a superimpose unit configured to superimpose, on a main signal, a control signal for communicating, by a control apparatus, with the subscriber terminal;
an access control unit configured to permit a main signal communication for the subscriber terminal, or configured to permit the main signal communication based on an instruction from the control apparatus;
an add/drop unit configured to input optical signal from the subscriber terminal, and output optical signal to the subscriber terminal; and
a multiplexed separation unit configured to perform a line concentration of optical path from the subscriber terminal to another path in an upstream, and perform a distribution of optical path from the another path to the subscriber terminal in a downstream.

3. The optical communication apparatus according to claim 2,
wherein the add/drop unit comprises:
an add unit configured to input optical signal from the subscriber terminal; and
a drop unit configured to output optical signal to the subscriber terminal, and
the optical communication apparatus further comprises a return transmission line configured to
be connected to the add unit configured to input optical signal from the subscriber terminal and the drop unit configured to output optical signal to another subscriber terminal, and
perform a return communication.

4. The optical communication apparatus according to claim 2,
wherein the access control unit is configured to
check, based on optical signal transmitted from the subscriber terminal, whether or not a wavelength designated for the subscriber terminal has been correctly set, or an output power is sufficient, and
permit a start of a main signal communication to the subscriber terminal upon checking that there is no problem, or permit the main signal communication based on an instruction from the control apparatus.

5. The optical communication apparatus according to claim 2,
wherein the multiplexed separation unit is configured to
multiplex optical signals having different wavelengths from a plurality of subscriber terminals, and output the multiplexed optical signals to a transmission path of another path of connection destination,
input, from the transmission path, optical signal transmitted from the another path of the connection destination, and demultiplex the input optical signal into signals addressed to subscriber terminals according to wavelength.

6. The optical communication apparatus according to claim 3,
wherein the add/drop unit comprises a plurality of ports on subscriber terminal side and a plurality of ports on network side,
the return transmission line connects between some of the plurality of ports on network side,
the add unit is configured to
input optical signal from the plurality of ports on subscriber terminal side connected to the subscriber terminals, and
output the input optical signal to the plurality of ports on network side connected to the return transmission line, and
the drop unit is configured to
input the optical signal transmitted from the plurality of ports on network side connected to the return transmission line via the return transmission line, and
output the input optical signal to the plurality of ports on subscriber terminal side connected to the another subscriber terminal.

7. The optical communication apparatus according to claim 3,
wherein the add/drop unit comprises a plurality of ports on subscriber terminal side and a plurality of ports on network side,
the return transmission line connects between some of the plurality of ports on network side,
the optical communication apparatus is configured to perform
a process of multiplexing the optical signals input from the plurality of ports on subscriber terminal side to which the add unit is connected to each of the plurality of subscriber terminals, and outputting the multiplexed optical signals to the plurality of ports on network side connected to the return transmission line, and
a process of inputting the optical signals transmitted from another of the plurality of ports on network side connected to the return transmission line via the return transmission line, demultiplexing the input optical signals, and outputting the demultiplexed optical signals from the drop unit to the ports on subscriber terminal side connected to each of other subscriber terminals.

8. The optical communication apparatus according to claim 2,
wherein the add/drop unit is configured to input and output multiplexed optical signals having a plurality of wavelengths.

9. A control apparatus comprising:
a control unit configured to communicate with subscriber terminal by using a control signal to transmit and receive optical signal with communication destination via a transmission line wherein the subscriber terminal is connected to an optical communication apparatus; and
an access control unit configured to permit, to the subscriber terminal, a main signal communication.

10. The control apparatus according to claim 9,
wherein the access control unit is configured to
check, based on optical signal transmitted from the subscriber terminal, whether or not a wavelength designated for the subscriber terminal has been correctly set, or an output power is sufficient, and
permit a start of a main signal communication to the subscriber terminal upon checking that there is no problem.

11. An optical communication method performed in an optical communication system that performs optical transmission with subscriber terminal, and relays optical signal according to destination, the optical communication method comprising:
a control step of communicating with the subscriber terminal by using a control signal;
an access control step of permitting a main signal communication for the subscriber terminal;
an add/drop step of inputting optical signal from the subscriber terminal, and outputting optical signal to the subscriber terminal; and
a multiplexed separation step of performing a line concentration of optical path from the subscriber terminal to another path in an upstream, and performing a distribution of optical path from the another path to the subscriber terminal in a downstream.

12. An optical communication method performed by an optical communication apparatus that performs optical transmission with subscriber terminal, and relays optical signal according to destination, the optical communication method comprising:
a superimpose step of superimposing, on a main signal, a control signal for communicating, by a control apparatus, with the subscriber terminal;
an access control step of permitting a main signal communication for the subscriber terminal, or permitting the main signal communication based on an instruction from the control apparatus;
an add/drop step of inputting optical signal from the subscriber terminal, and outputting optical signal to the subscriber terminal; and
a multiplexed separation step of performing a line concentration of optical path from the subscriber terminal to another path in an upstream, and performing a distribution of optical path from the another path to the subscriber terminal in a downstream.

13. An optical communication control method comprising:
a control step of communicating with subscriber terminal by using a control signal to transmit and receiving optical signal with communication destination via a transmission line wherein the subscriber terminal is connected to an optical communication apparatus; and
an access control step of permitting, to the subscriber terminal, a main signal communication.
